# EUROPÄISCHE PATENTSCHRIFT

(11) **EP 3 161 524 B1**
(45) Veröffentlichungstag und Bekanntmachung des Hinweises auf die Patenterteilung: **19.02.2020**
(21) Anmeldenummer: 15732233.0
(22) Anmeldetag: 25.06.2015
(51) Int. Cl.: G01V 3/15, G01C 15/02

(54) **ORTUNGSSYSTEM MIT HANDGEHALTENER ORTUNGSVORRICHTUNG UND VERFAHREN ZUR ORTUNG**
LOCATING SYSTEM WITH HANDHELD LOCATING DEVICE AND LOCATING METHOD
SYSTÈME DE LOCALISATION AVEC UNITÉ DE LOCALISATION TENUE À MAIN ET PROCÉDÉ DE LOCALISATION

(30) Priorität: 25.06.2014 DE 102014212131
(43) Veröffentlichungstag der Anmeldung: 03.05.2017
(73) Patentinhaber: Robert Bosch GmbH, 70442 Stuttgart (DE)
(72) Erfinder: KRAPF, Reiner, 70794 Filderstadt (DE); SGARZ, Heiko, 71229 Leonberg (DE); SCHMIDT-KNORRECK, Carina, 70372 Stuttgart (DE)
(86) Internationale Anmeldenummer: PCT/EP2015/064451
(87) Internationale Veröffentlichungsnummer: WO 2015/197790

(56) Entgegenhaltungen:
- EP-A2- 2 182 390
- EP-A2- 2 302 417
- EP-A2- 2 680 044
- DE-A1-102006 000 364
- DE-A1-102006 025 861
- DE-A1-102008 054 460
- DE-A1-102011 079 258
- DE-A1-102012 204 580
- DE-U1-202010 016 564
- US-A1- 2005 280 425

## Beschreibung

### Stand der Technik

In DE 10 2006 025 861 A1 ist bereits ein Ortungsgerät zur Ortung von Objekten in einem Untersuchungsgegenstand vorgeschlagen worden, das in Verbindung mit einer Ausgabeeinheit zur Ausgabe einer Information anhand einer Bewegungskenngröße vorgesehen

DE 20 2010 016 564 U1 beschreibt ein Ortungssystem, das in zwei verschiedenen Betriebsmodi betrieben werden kann.

Aus EP 2 182390 A2 ist die manuelle Auswahl eines Betriebsmodus in einer Ortungsvorrichtung bekannt.

### Offenbarung der Erfindung

Die Erfindung geht aus von einem Ortungssystem, insbesondere einem handgehaltenen Ortungsgerät, mit zumindest einer handgehaltenen Ortungsvorrichtung, die dazu vorgesehen ist, Ortungsdaten zu unter einer Untersuchungsoberfläche verborgenen Ortungsobjekten zu erfassen, mit einem Positionssensor zur Erfassung von Positionsdaten der Ortungsvorrichtung bezogen auf die Untersuchungsoberfläche.

Es wird vorgeschlagen, dass das Ortungssystem zumindest eine Auswertevorrichtung aufweist, die dazu vorgesehen ist, zumindest in einem ersten Betriebsmodus des Ortungssystems eine richtungs- und/oder ortsaufgelöste Ortungsinformation aus den Ortungsdaten ohne Umpositionieren der Ortungsvorrichtung bezogen auf die Untersuchungsoberfläche zu bestimmen und/oder bereitzustellen und in einem zweiten Betriebsmodus eine zumindest dreidimensionale Ortungsinformation aus den Ortungsdaten und den Positionsdaten durch Zuordnung von Ortungsdaten zu Positionsdaten zu bestimmen.

Das Ortungssystem, bevorzugt das handgehaltene Ortungsgerät, weist zumindest eine handgehaltene Ortungsvorrichtung auf, die dazu vorgesehen ist, Ortungsdaten zu unter einer Untersuchungsoberfläche verborgenen Ortungsobjekten zu erfassen. Unter einer Ortungsvorrichtung soll insbesondere eine Vorrichtung verstanden werden, die Mittel aufweist, die dazu vorgesehen sind, physikalische und/oder chemische Größen, die auf ein Vorhandensein eines Ortungsobjekts schließen lassen, zu erfassen und in ein elektrisch auswertbares Signal umzuwandeln. Insbesondere schließt die Ortungsvorrichtung zum Betrieb der Mittel notwendige Komponenten, elektrische Schaltungen und dergleichen ein. Die Ortungsvorrichtung dient der Ortung von unter einer Untersuchungsoberfläche verborgenen Ortungsobjekten. Vorzugsweise ist bei der Ortung ein, insbesondere direkter, taktiler Kontakt zwischen der Ortungsvorrichtung und einem zu ortenden Ortungsobjekt nicht nötig. Bevorzugt weist die Ortungsvorrichtung zur Durchführung der Ortung zumindest einen Ortungssensor auf. Ortungssensoren sind prinzipiell geeignet, beispielsweise mittels Auswertung einer elektrischen und/oder magnetischen Feldänderung oder einer Laufzeitänderung einer in ein zu untersuchendes Material ausgestrahlten Strahlung, in einem Untersuchungsgegenstand verborgene Ortungsobjekte zu detektieren. Bevorzugt kann die Ortungsvorrichtung beispielsweise einen Induktivsensor, einen AC-Sensor, einen Kapazitivsensor oder dergleichen aufweisen. Ebenfalls eignen sich auch Sensoren, die für eine Erfassung mittels elektromagnetischer Strahlung vorgesehenen sind, wie insbesondere ein 50-Hertz-Sensor, ein Mikrowellensensor, ein Radarsensor, ein Terahertzsensor, ein Ultrahochfrequenzsensor, ein Röntgensensor, ein Infrarotsensor oder ein NMR-Sensor. Ferner sind auch Schallsensoren, beispielsweise Ultraschall- oder Impact-Echo-Sensoren oder Neutronensonden als Ortungssensor denkbar. Bevorzugt ist auch eine Kombination mehrerer, insbesondere auch verschiedenartiger, Ortungssensoren zur Durchführung der Ortung denkbar.

Unter "vorgesehen" soll insbesondere speziell "programmiert", "ausgelegt" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs-und/oder Betriebszustand erfüllt und/oder ausführt oder dazu ausgelegt ist, die Funktion zu erfüllen.

Unter einer handgehaltenen Ortungsvorrichtung soll insbesondere verstanden werden, dass die Ortungsvorrichtung des Ortungssystems ohne Zuhilfenahme einer Transportmaschine lediglich mit den Händen, insbesondere mit einer Hand, transportiert werden kann. Insbesondere kann die Ortungsvorrichtung auch während eines Messvorgangs in einer von einem Benutzer des Ortungssystems frei ausgeführten Bewegung, insbesondere einer entlang zweier Richtungen freien Bewegung, handgehalten über die Untersuchungsoberfläche geführt werden. Die Masse der handgehaltenen Ortungsvorrichtung beträgt insbesondere weniger als 5 kg, vorteilhaft weniger als 3 kg und besonders vorteilhaft weniger als 1 kg. Vorzugsweise weist die handgehaltene Ortungsvorrichtung ein Gehäuse mit einem Griff oder einem Griffbereich auf, mit dem die Ortungsvorrichtung über die Untersuchungsoberfläche des zu untersuchenden Gegenstands geführt werden kann. Vorzugsweise ist der Ortungssensor als Teil der handgehaltenen Ortungsvorrichtung ausgebildet. Ferner umfasst die Ortungsvorrichtung einen Positionssensor. Bevorzugt sind Ortungssensor und Positionssensor in dem Gehäuse der handgehaltenen Ortungsvorrichtung untergebracht.

Unter einer freien Bewegung ist insbesondere eine Bewegung zu verstehen, die unabhängig ist von einem vorgegebenen Raster oder einer vorgegebenen Spur für die Umpositionierung der Ortungsvorrichtung, insbesondere für eine Bewegung oder einen Verfahrweg.

Besonders bevorzugt lässt sich ein handgehaltenes Ortungsgerät realisieren, das ein Gehäuse besitzt, das zumindest die wesentlichen funktionalen Komponenten des Ortungssystems aufnimmt. Insbesondere nimmt das Gehäuse zumindest eine Steuervorrichtung, eine Ortungsvorrichtung samt Ortungssensor, einen Positionssensor, eine Auswertevorrichtung, eine Eingabe- und/oder eine Ausgabevorrichtung, insbesondere eine Anzeigevorrichtung, sowie eine Energieversorgungsvorrichtung auf. Insbesondere sind die Komponenten in ihrem Gesamtvolumen zu mehr als 50 %, bevorzugt zu mehr als 75 % und besonders bevorzugt zu 100 % in dem Gehäuse des Ortungsgeräts untergebracht. Vorzugsweise kann das handgehaltene Ortungsgerät einen Griff oder einen Griffbereich aufweisen, mit dem das Ortungsgerät über die Untersuchungsoberfläche des zu untersuchenden Gegenstands geführt werden kann. Die Masse des handgehaltenen Ortungsgeräts beträgt insbesondere weniger als 5 kg, vorteilhaft weniger als 3 kg und besonders vorteilhaft weniger als 1 kg. Auf diese Weise kann ein besonders kompaktes Ortungssystem in Form eines leicht einhändig durch einen Benutzer führbaren Ortungsgeräts realisiert werden. Ferner lassen sich die Komponenten des Ortungssystems auf diese Weise vorteilhaft durch ein Gehäuse des Ortungsgeräts vor Beschädigungen und Umwelteinflüssen, beispielsweise vor dem Eindringen von Feuchtigkeit und Staub, schützen.

Ein derartiges handgehaltenes Ortungsgerät stellt eine bevorzugte Ausführungsform des erfindungsgemäßen Ortungssystems dar. Im Folgenden werden daher (handgehaltenes) Ortungsgerät und Ortungssystem weitgehend synonym verwendet. Es sei allerdings angemerkt, dass die erfindungsgemäßen Lehren auch auf nicht handgehaltene Ortungssysteme zu übertragen sind.

Unter Ortungsdaten sollen insbesondere Messwerte und/oder Messsignale der Ortungsvorrichtung, insbesondere Messwerte und/oder Messsignale zumindest eines Ortungssensors, verstanden werden. Derartige Messwerte und/oder Messsignale können beispielsweise gemessene Amplituden, Phasenlagen, Richtungsinformationen, Signalstärken, Relaxationszeiten oder dergleichen betreffen.

Unter einer Untersuchungsoberfläche ist insbesondere eine Oberfläche eines hinsichtlich verborgener Ortungsobjekte zu untersuchenden Gegenstands oder Werkstücks zu verstehen. Beispielsweise und nicht abschließend kann es sich bei dem Werkstück um Baustoffe, eine Wand, einen Boden, eine Decke, Estrich, ein organisches Gebilde (insbesondere auch Teile eines Körpers) und/oder Teile eines Geländes handeln. Bestehen kann der Gegenstand oder das Werkstück beispielsweise insbesondere aus Holz, Glas, Kunststoff, Beton, Stein, Ziegel, Gips, Metall, organischen Materialien oder dergleichen. Des Weiteren lassen sich prinzipiell auch Flüssigkeiten untersuchen. Einschlüsse eines Materials, das sich von dem Material des zu untersuchenden Gegenstands unterscheidet oder dessen physikalischen Eigenschaften sich von denen des Materials des zu untersuchenden Gegenstands unterscheiden, stellen beispielhafte Ortungsobjekte dar. Typische Beispiele für derartige Ortungsobjekte sind Stromleitungen, Rohre, Gasleitungen, Hohlräume, Armierung oder dergleichen, die in einer Gebäudewand verborgen liegen.

Das Ortungssystem, bevorzugt das handgehaltene Ortungsgerät, weist weiter einen Positionssensor zur Erfassung von Positionsdaten der Ortungsvorrichtung bezogen auf die Untersuchungsoberfläche auf. Unter einem Positionssensor ist insbesondere ein Sensor zu verstehen, der dazu vorgesehen ist, eine Feldänderung, eine Laufzeitänderung und/oder eine Phasenlage in ein elektrisch auswertbares Signal umzuwandeln und eine gegenwärtige Position des Positionssensors auf der Untersuchungsoberfläche auszugeben oder zu übermitteln. Die gegenwärtige Position kann dabei relativ zu einer früheren Position oder absolut, insbesondere bezogen auf zumindest einen festen Bezugspunkt, erfasst und als Positionsdaten ausgegeben oder übermittelt werden. Ferner kann der Positionssensor bevorzugt auch eine Ausrichtung des Positionssensors und somit der Ortungsvorrichtung bestimmen. Die Positionsdaten betreffen zumindest Koordinaten in zwei Richtungen, die die Position des Positionssensors auf der Untersuchungsoberfläche bestimmen. Ferner können Positionsdaten auch eine Ausrichtung des Positionssensors bezogen auf die Untersuchungsoberfläche bestimmen.

Unter einem Bezugspunkt soll ein relativ zur Untersuchungsoberfläche fest angeordneter Punkt verstanden werden, beispielsweise ein durch ein Markierungselement des Ortungssystems festgelegter Punkt oder ein markanter Punkt an einem Übergang der Untersuchungsoberfläche zu einer anderen Gebäudeteiloberfläche. Beispielsweise kann ein derartiger Bezugspunkt an einer von einem Boden und einer Wand gebildeten Kante definiert sein. Weiter ist es denkbar, dass der Positionssensor zu einer Positionsbestimmung mittels einer externen Referenz, beispielsweise stationären Sendern und/oder Satelliten, vorgesehen ist. Alternativ ist ferner denkbar, dass der Positionssensor dazu vorgesehen ist, für einen Ortungsvorgang Positionsdaten unabhängig von einem Bezugspunkt auf der Untersuchungsfläche rein relativ zu erfassen.

Der Positionssensor ist beispielsweise als ein optischer oder mechanischer Wegstreckensensor ausgebildet, welcher in einem Betriebszustand eine Bewegung und/oder Drehung der Ortungsvorrichtung auf der Untersuchungsoberfläche erfasst. In einer bevorzugten Ausführungsform ist der Positionssensor bevorzugt als optischer Wegaufnehmer realisiert. Bevorzugt ist der optische Wegaufnehmer in der bei Anwendung der Ortungsvorrichtung der Untersuchungsoberfläche zugewandten Gehäuseseite der Ortungsvorrichtung und/oder des Ortungsgeräts angeordnet. Vorteilhaft kann unter Verwendung eines optischen Wegaufnehmers der Abstand zwischen Ortungsvorrichtung und Untersuchungsoberfläche zur Erhöhung der Ortungstiefe der Ortungsvorrichtung minimiert werden. In einer alternativen oder zusätzlichen Ausführungsform des Positionssensors kann dieser insbesondere auch außerhalb des Gehäuses der Ortungsvorrichtung vorgesehen sein.

Ebenfalls kann der Positionssensor als ein Abstandssensor ausgebildet und zu einer Entfernungsmessung zu zumindest einem Bezugspunkt mittels einer elektromagnetischen Strahlung, beispielsweise Laserlicht, Infrarot- oder Radarwellen, vorgesehen sein. Der Positionssensor kann ferner auch auf anderen, einem Fachmann zweckmäßig erscheinenden Messverfahren beruhen, beispielsweise in Ausgestaltung eines Ultraschallsensors, eines barometrischen Sensors oder eines GPS-Sensors. Insbesondere kann der Positionssensor ferner einen oder mehrere Sensoren aus einer Gruppe von Sensoren aufweisen, die zumindest neigungs-, winkel-, abstands-, translations-, beschleunigungs- sowie drehratensensitive Sensoren umfasst.

Ferner kann bevorzugt ein separater und/oder in dem Positionssensor integrierter Sensor zur Erfassung einer gegenwärtigen Ausrichtung der Ortungsvorrichtung, insbesondere bezogen auf die Untersuchungsoberfläche, vorgesehen sein. Beispielsweise kann eine Inertialsensorik vorgesehen sein, mittels der eine Drehung der Ortungsvorrichtung in beliebige Richtung detektiert und quantitativ ausgewertet werden kann.

Ferner kann der Positionssensor auch zumindest eine Kamera umfassen. Dadurch kann eine leicht einrichtbare, besonders präzise, insbesondere absolute Positionsbestimmung bereitgestellt werden. Unter einer Kamera soll in diesem Zusammenhang eine Vorrichtung verstanden werden, die zu einer kontinuierlichen Erfassung von Bilddaten vorgesehen ist. Die Kamera kann als eine optische Kamera, als eine Infrarotkamera oder als eine Kamera für einen anderen Wellenlängenbereich ausgebildet sein. Bevorzugt ist die Kamera relativ zu der Untersuchungsoberfläche ortsfest angeordnet, beispielsweise auf einem Stativ, und dazu vorgesehen, eine Position des Ortungssensors auf der Untersuchungsoberfläche zu erfassen. Es ist denkbar, dass die Kamera eine einzelne optische Einheit oder eine Mehrzahl von optischen Einheiten aufweist, und beispielsweise als eine Stereokamera ausgebildet ist. Bevorzugt weist die Ortungsvorrichtung in dieser Ausführungsform zumindest eine Markierung auf, die relativ zu dem Ortungssensor räumlich fixiert ist und dazu vorgesehen ist, von dem Positionssensor, insbesondere der Kamera, erfasst zu werden. Unter einer Markierung soll in diesem Zusammenhang insbesondere ein Bereich verstanden werden, der eine von einer Umgebung des Bereichs verschiedene Oberfläche zur Erfassung durch den Positionssensor aufweist. Bevorzugt ist die Markierung zur Erfassung durch die Kamera vorgesehen. Bevorzugt weist die Oberfläche der Markierung hierfür eine von einer Umgebung der Markierung verschiedene Farbe, Struktur und/oder Reflexionseigenschaften entsprechend des Wellenlängenbereichs, in dem die Kamera empfindlich ist, auf. Besonders bevorzugt weist das Ortungssystem eine Mehrzahl von Markierungen auf, die jeweils dazu vorgesehen sind, Positionsdaten zu liefern, wenn einige der Markierungen während des Ortungsvorgangs zumindest zeitweise für den Positionssensor, insbesondere die Kamera, verdeckt sind.

Das Ortungssystem weist ferner eine Steuervorrichtung zur Ansteuerung der funktionalen Komponenten des Ortungssystems auf, insbesondere zur Ansteuerung zumindest der Ortungsvorrichtung, des Positionssensors und einer Auswertevorrichtung, bevorzugt auch einer Eingabe- und/oder einer Ausgabevorrichtung, einer Datenkommunikationsschnittstelle, einer Speichervorrichtung sowie weiteren, dem Fachmann als sinnvoll erscheinenden Komponenten. Unter der Steuervorrichtung soll insbesondere eine Vorrichtung mit zumindest einer Steuerelektronik verstanden werden, die Mittel zur Kommunikation mit den anderen Komponenten des handgehaltenen Ortungssystems, beispielsweise Mittel zur Steuerung und/oder Regelung der Ortungsvorrichtung und/oder Mittel zur Datenverarbeitung und/oder weitere, dem Fachmann als sinnvoll erscheinende Mittel aufweist. Insbesondere ist die Steuervorrichtung dazu vorgesehen, zumindest einen Betriebsfunktionsparameter des Ortungssystems in Abhängigkeit von zumindest einer Benutzereingabe und/oder einem Auswerteergebnis der Auswertevorrichtung einzustellen. Vorteilhaft kann unter der Steuerelektronik der Steuervorrichtung eine Prozessoreinheit in Verbindung mit einer Speichereinheit sowie mit einem in der Speichereinheit gespeicherten Betriebsprogramm verstanden werden, das während des Steuervorgangs ausgeführt wird. Insbesondere können die elektronischen Bauteile der Steuervorrichtung auf einer Platine (Leiterplatte) angeordnet sein, bevorzugt in Form eines Mikrokontrollers. Besonders vorteilhaft kann die Steuervorrichtung darüber hinaus dazu vorgesehen sein, das gesamte Ortungssystem zu steuern und dessen Betrieb zu ermöglichen. Dazu ist die Steuervorrichtung vorgesehen, mit den anderen funktionalen Komponenten des Ortungssystem, insbesondere der Ortungsvorrichtung, der Auswertevorrichtung, dem Positionssensor, einer Eingabe- und/oder einer Ausgabevorrichtung, einer Speichervorrichtung sowie einer Datenkommunikationsschnittstelle und/oder weiteren, dem Fachmann als sinnvoll erscheinenden Komponenten zu kommunizieren.

Eine Energieversorgungsvorrichtung des Ortungssystems ist dazu vorgesehen, das Ortungssystem zur Inbetriebnahme und während des Betriebs mit elektrischer Energie zu versorgen. Bevorzugt handelt es sich bei dieser Vorrichtung um einen stromnetzunabhängigen Energiespeicher, insbesondere einen Akkumulator, eine Batterie, eine Brennstoffzelle, einen Kondensator, einen anderweitigen, dem Fachmann sinnvoll erscheinenden Energiespeicher oder eine Kombination/Mehrung derer. Vorzugsweise eigenen sich zur Energieversorgung des Ortungssystems insbesondere Akkumulatoren mit einer Zellchemie, die eine hohe Leistungs- und/oder Energiedichte bereitstellt. Dazu gehören derzeit beispielsweise Akkumulatoren der Lithium- und Lithium-Ionen-Zellchemie, insbesondere Lithium-Eisenphosphat-, Lithium-Manganoxid-, Lithium-Nickel-Kobalt-Mangan-Oxid-, überlithiierte Lithium-Nickel-Kobalt-Mangan-Oxid-, Lithium-Schwefel-, Lithium-Polymer- und Lithium-Sauerstoff-Akkumulatoren. Vorzugsweise weist die Vorrichtung zur Energieversorgung eine lösbare Formschluss- und/oder Kraftschlussverbindungsschnittstelle auf. Unter lösbar soll in diesem Zusammenhang insbesondere zerstörungsfrei trennbar verstanden werden. Somit ist die Vorrichtung zur Energieversorgung bevorzugt abnehmbar und austauschbar an dem Ortungsgerät anordenbar. Besonders bevorzugt lässt sich die abnehmbare Vorrichtung zur Energieversorgung in und/oder außerhalb des Ortungsgeräts wieder mit Energie aus einem Stromnetz versorgen und laden. In einer alternativen oder zusätzlichen Ausführungsform kann das Ortungssystem zu seiner Energieversorgung auch einen Netzanschluss aufweisen.

Erfindungsgemäß weist das Ortungssystem zumindest eine Auswertevorrichtung auf, die dazu vorgesehen ist, zumindest in einem ersten Betriebsmodus des Ortungssystems eine richtungs- und/oder ortsaufgelöste Ortungsinformation aus den Ortungsdaten ohne Umpositionieren der Ortungsvorrichtung bezogen auf die Untersuchungsoberfläche zu bestimmen und/oder bereitzustellen und in einem zweiten Betriebsmodus eine zumindest dreidimensionale Ortungsinformation aus den Ortungsdaten und den Positionsdaten durch Zuordnung von Ortungsdaten zu Positionsdaten zu bestimmen und/oder bereitzustellen.

Unter einem Betriebsmodus des Ortungssystems soll insbesondere eine Informationsverarbeitung, eine Informationsausgabe und/oder eine Informationseingabe und/oder ein Informationseingang bezeichnet werden, bei der die Steuervorrichtung und/oder die Auswertevorrichtung und/oder die Anzeigevorrichtung ein Betriebsprogramm und/oder eine Regelroutine und/oder eine Steuerroutine und/oder eine Auswerteroutine und/oder eine Berechnungsroutine und/oder eine Anzeigeroutine anwendet. Insbesondere bewirkt die Anwendung eines Betriebsmodus des Ortungssystems eine Auswirkung auf die Funktion und/oder das Zusammenspiel der funktionalen Komponenten des Ortungssystems, beispielsweise auf die Steuervorrichtung, die Auswertevorrichtung, die Ortungsvorrichtung, den Ortungssensor, den Positionssensor, eine Eingabe- und/oder eine Ausgabevorrichtung, insbesondere eine Anzeigevorrichtung, eine Datenkommunikationsschnittstelle und/oder auch auf andere, einem Fachmann als sinnvoll erscheinende Komponenten.

Unter der Auswertevorrichtung soll zumindest eine Vorrichtung verstanden werden, die einen Informationseingang, eine Informationsverarbeitungseinheit sowie eine Informationsausgabe aufweist. Der Informationseingang dient bevorzugt zur Annahme von mittels der Ortungsvorrichtung bestimmten Ortungsdaten und/oder mittels des Positionssensors ermittelten Positionsdaten. Die Informationsverarbeitungseinheit dient der Bearbeitung, insbesondere der Auswertung von angenommenen Daten. Die Informationsausgabe dient der Weitergabe der bearbeiteten und/oder ausgewerteten Daten an die Steuervorrichtung und/oder eine Speichervorrichtung und/oder eine Datenkommunikationsschnittstelle und/oder eine Ausgabevorrichtung und/oder eine Anzeigevorrichtung des Ortungssystems. Vorteilhaft weist die Auswertevorrichtung Komponenten auf, die zumindest einen Prozessor, einen Speicher und ein Betriebsprogramm mit Auswerte- und Berechnungsroutinen umfassen. Insbesondere können die elektronischen Bauteile der Auswertevorrichtung auf einer Platine angeordnet sein, bevorzugt auf einer gemeinsamen Platine mit der Steuervorrichtung, besonders bevorzugt in Form eines Mikrokontrollers. Des Weiteren können die Steuervorrichtung und die Auswertevorrichtung besonders bevorzugt auch als ein einzelnes Bauteil ausgeführt sein. Ferner kann die Auswertevorrichtung auch mit Komponenten der Anzeigevorrichtung als ein einzelnes Bauteil ausgeführt sein.

Die Auswertevorrichtung ist vorgesehen, in zwei Betriebsmodi betrieben zu werden. Bevorzugt ist die Auswertevorrichtung dabei dazu vorgesehen, zumindest in einem ersten Betriebsmodus des Ortungssystems eine richtungs- und/oder ortsaufgelöste Ortungsinformation aus den Ortungsdaten ohne Umpositionieren der Ortungsvorrichtung bezogen auf die Untersuchungsoberfläche zu bestimmen und/oder bereitzustellen.

Unter Bestimmung und/oder Bereitstellung einer Ortungsinformation soll insbesondere verstanden werden, dass zumindest eine Information betreffend eine Existenz, eine Position, eine Tiefe, ein Material und/oder eine Ausrichtung eines unter einer Untersuchungsoberfläche verborgenen Ortungsobjekts aus von der Ortungsvorrichtung erfassten Ortungsdaten von der Auswertevorrichtung bestimmt wird und/oder dem Ortungssystem zur Verfügung gestellt wird. Auf diese Weise erlaubt die Auswertevorrichtung auf konstruktiv besonders einfache Weise, die von der Ortungsvorrichtung bereitgestellten elektrischen Signale, insbesondere Ortungsdaten, auszuwerten und daraus eine Ortungsinformation zu bestimmen und dem Ortungssystem bereitzustellen. Insbesondere werden die Ortungsinformationen dem Ortungssystem, bevorzugt einer Anzeigevorrichtung und/oder einer Datenkommunikationsschnittstelle und/oder einer Speichervorrichtung, zur weiteren Verarbeitung von der Auswertevorrichtung zur Verfügung gestellt.

Unter einer richtungs- und/oder ortsaufgelösten Ortungsinformation soll insbesondere eine Information über zumindest ein Ortungsobjekt zumindest in zwei Richtungen, entlang derer sich die Untersuchungsoberfläche erstreckt, verstanden werden. Eine Richtungs- und/oder Ortsauflösung erfolgt bevorzugt in Bezug auf die Untersuchungsoberfläche, insbesondere anhand von gegebenen und/oder festlegbaren Bezügen hinsichtlich der Ortungsvorrichtung als Referenz. Eine derartige Korrelation der Richtung oder des Orts der Ortung unter Bezug auf die Ortungsvorrichtung kann beispielsweise unter Verwendung von Winkeln und/oder Koordinaten realisiert werden. Auf diese Weise kann beispielsweise eine Ortung eines verborgenen Objekts mit einer Richtungsangabe verknüpft werden, unter der die entsprechenden Ortungsdaten und somit die ausgewerteten Ortungsinformationen von der Ortungsvorrichtung aus gesehen detektiert werden. Ferner kann aus der richtungs- und/oder ortsaufgelösten Ortungsinformation eine Abschätzung der Anordnung des zumindest einen unter der Untersuchungsoberfläche verborgenen Ortungsobjekts abgeleitet werden.

Erfindungsgemäß ist die richtungs- und/oder ortsaufgelöste Ortungsinformation ohne Umpositionieren der Ortungsvorrichtung bezogen auf die Untersuchungsoberfläche bestimmbar. Unter "Umpositionieren" ist insbesondere ein in beliebiger Richtung durchgeführtes Verfahren, Bewegen, Verschieben, Rotieren, Drehen oder ein anderweitiges Ändern der Position und/oder der Ausrichtung der Ortungsvorrichtung in Bezug auf die Untersuchungsoberfläche zu verstehen. Durch die erfindungsgemäße Ausgestaltung sowohl der Ortungsvorrichtung als auch der Auswertevorrichtung kann konstruktiv einfach und platzsparend eine besonders umfassende Ortungsinformation abgeleitet werden. Insbesondere ist eine besonders genaue Ableitung einer lateralen Position eines verborgenen Ortungsobjekts möglich, ohne dass die Ortungsvorrichtung auf der Untersuchungsoberfläche umpositioniert werden muss. Ferner kann erreicht werden, dass ausgewertete Ortungsinformationen mit einer Richtungs- und/oder Ortsinformation, insbesondere einer Position der Ortungsvorrichtung auf der Untersuchungsoberfläche, korreliert werden können.

Besonders bevorzugt lassen sich durch die Bestimmung und Bereitstellung richtungs- und/oder ortsaufgelöster Ortungsinformationen mehrdimensionale Matrizen, Tabellen, Listen und/oder Karteninformationen erstellen und/oder auswerten. In diesen mehrdimensionalen Matrizen, Tabellen, Listen und/oder Karteninformationen können Ortungsdaten mit Richtungs- und/oder Ortsinformationen, insbesondere bezogen auf die Ortungsvorrichtung, bevorzugt bezogen auf die Untersuchungsoberfläche, erfasst sein. Besonders vorteilhaft können diese Matrizen, Tabellen, Listen und/oder Karteninformationen als Grundlage zur Generierung einer Darstellung der ausgewerteten Ortungsdaten in Form einer zumindest zweidimensionalen Karte oder eines zweidimensionalen Abbilds der Untersuchungsoberfläche, genutzt werden.

Auf diese Weise ist es einem Benutzer des Ortungssystems möglich, mit nur lediglich einer Messung ohne aufwändiges Umpositionieren der Ortungsvorrichtung bezogen auf die Untersuchungsoberfläche dennoch eine in einem gewissen Erfassungsbereich der Ortungsvorrichtung richtungs- und/oder ortsaufgelöste Ortungsinformation zu erhalten. Eine Aussage, ob beispielsweise an der gewählten (Mess-)Position auf der Untersuchungsoberfläche eine Bohrung ohne Beschädigung von unter der Untersuchungsoberfläche verborgenen Untersuchungsgegenständen durchgeführt werden kann, ist unmittelbar und mit hoher Zuverlässigkeit aus der richtungs- und/oder ortsaufgelösten Ortungsinformation ableitbar. Ferner können in der Nähe der gewählten Position befindliche Ortungsobjekte bereits erkannt werden, sodass einem Benutzer eine Risiko- oder Gefahrenabschätzung erleichtert wird. Besonders vorteilhaft und intuitiv kann diese Information beispielsweise an einen Benutzer des Geräts durch Ausgabe einer zumindest zweidimensionalen Karteninformation erfolgen. In einer bevorzugten Ausführungsform kann die zumindest zweidimensionale Karteninformation beispielsweise als zweidimensionale Karte oder als ein zweidimensionales Abbild der Ortungsverhältnisse unter der Untersuchungsoberfläche realisiert sein. Der Karte oder dem Abbild ist unmittelbar zu entnehmen, wo, d.h. insbesondere unter welchen Richtungen von der Ortungsvorrichtung aus gesehen, Ortungsobjekte detektiert werden. In einer bevorzugten Ausführungsform kann beispielsweise eine an einen Benutzer ausgegebene Karte ein maßstabgetreues 1:1-Abbild der unter der Ortungsvorrichtung verborgenen Ortungsverhältnisse wiedergeben. Auf diese Weise ist eine besonders einfache Übertragung von Positionen georteter Ortungsobjekte, die der Karte entnommen werden können, auf das Werkstück möglich. Ein in der Karte angezeigtes Ortungsobjekt befindet sich dann vom Benutzer aus gesehen genau an entsprechender Stelle unmittelbar hinter der Ortungsvorrichtung, verborgen unter der Untersuchungsoberfläche. Alternativ oder zusätzlich sind auch andere Darstellungsmaßstäbe denkbar. Insbesondere können sowohl maßstäbliche als auch unmaßstäbliche Darstellungen zur Ausgabe an einen Benutzer des Ortungssystems verwendet werden.

Es sei an dieser Stelle angemerkt, dass der Begriff "Karteninformation" im Rahmen dieser Anmeldung insbesondere Daten bezeichnet, die bevorzugt in Form einer insbesondere mehrdimensionalen Matrix, Tabelle, Array, Liste oder dergleichen verarbeitet und/oder gespeichert und/oder weitergegeben wird. Die Karteninformation umfasst bevorzugt richtungs- und/oder ortsaufgelöste Ortungsinformationen, alternativ oder zusätzlich mehrdimensionale, insbesondere pseudo-mehrdimensionale, zumindest aber zweidimensionale ausgewertete Ortungsinformation, bevorzugt Ortungsinformationen, die mit zweidimensionalen Positionsdaten der Ortungsvorrichtung bezogen auf die Untersuchungsoberfläche zum Ortungszeitpunkt korreliert sind. Die Karteninformation ist dazu vorgesehen, mittels einer Anzeigevorrichtung zumindest teilweise in Form einer Karte an einen Benutzer des Ortungssystems ausgegeben zu werden. Die "Karte" stellt dabei eine grafisch aufbereitete Repräsentation der Karteninformation dar. In diesem Sinne sind die Begriffe "Karteninformation" und "Karte" zwar unterschiedlich, aber eng miteinander verknüpft zu verstehen. Insbesondere sind Ausrücke wie "die Anzeigevorrichtung ist zur Darstellung der zumindest zweidimensionalen Karteninformation vorgesehen" gleichbedeutend mit "die Anzeigevorrichtung ist zur Darstellung der zumindest zweidimensionalen Karteninformation in Form einer Karte vorgesehen".

Die Auswertevorrichtung ist ferner vorgesehen, in einem zweiten Betriebsmodus eine zumindest dreidimensionale Ortungsinformation aus den Ortungsdaten und den Positionsdaten durch Zuordnung von Ortungsdaten zu Positionsdaten zu bestimmen und/oder bereitzustellen.

Vorteilhaft ist die Auswertevorrichtung auf diese Weise vorgesehen, die mittels Ortungsvorrichtung generierten Ortungsdaten, insbesondere beispielsweise mittels Ortungssensor ermittelte Amplitudenwerte, Tiefeninformationen, Signalphasen oder dergleichen, den mittels Positionssensor ermittelten Positionsdaten, insbesondere zweidimensionalen Positionskoordinaten, zuzuordnen. Eine Zuordnung kann prinzipiell auch umgekehrt erfolgen. Auf diese Weise ist die Auswertevorrichtung vorgesehen, eine zumindest dreidimensionale Ortungsinformation aus den Ortungsdaten und den Positionsdaten zu bestimmen und bereitzustellen. Somit kann vorteilhaft erreicht werden, dass ausgewertete Ortungsinformationen mit einer Position der Ortungsvorrichtung bezogen auf die Untersuchungsoberfläche korreliert werden können.

Unter der zumindest dreidimensionalen Ortungsinformation sind somit die korrelierten Ortungsdaten und Positionsdaten in zumindest zwei Richtungen, entlang derer sich die Untersuchungsoberfläche erstreckt, zu verstehen. In einer einfachen Ausführungsform bilden die zumindest dreidimensionalen Ortungsinformationen beispielsweise eine mehrdimensionale Matrix, Tabelle, Array oder dergleichen. In dieser mehrdimensionalen Matrix, Tabelle, Array oder dergleichen können beispielsweise in jeweils einer Spalte Positionsdaten bezüglich jeweils einer von zwei orthogonalen Raumrichtungen zugeordnet werden. Eine dritte Spalte dient der Zuweisung von an entsprechender Position ermittelten Ortungsdaten und/oder bereits ausgewerteten Ortungsinformationen, wie beispielsweise einer Information über das Vorhandensein eines Ortungsobjekts oder eine Information über die Tiefe, in der ein Ortungsobjekt detektiert wird. Somit werden Ortungsdaten bzw. Ortungsinformationen mit Positionsdaten gemeinsam als zumindest dreidimensionale Ortungsinformation erfasst.

Vorteilhaft lässt sich durch sukzessives Umpositionieren, insbesondere Verfahren der Ortungsvorrichtung in Bezug auf die Untersuchungsoberfläche, eine sukzessive Vermessung der Untersuchungsoberfläche durchführen. Dabei werden sukzessiv zumindest dreidimensionale Ortungsinformationen, in denen Ortungsdaten zu Positionsdaten und/oder Ausrichtungen der Ortungsvorrichtung, insbesondere bezogen auf die Untersuchungsoberfläche, erfasst sind, bestimmt und/oder bereitgestellt. Besonders vorteilhaft können diese zur Generierung einer zumindest zweidimensionalen Karteninformation und/oder einer Darstellung der ausgewerteten Ortungsdaten in Form einer zweidimensionalen Karte der Untersuchungsoberfläche genutzt werden.

In einer vorteilhaften Ausführungsform des erfindungsgemäßen Ortungssystems ist eine Eingabevorrichtung zur Eingabe von Arbeitsparametern und/oder eine Ausgabevorrichtung zur Ausgabe von Arbeitsparametern vorhanden. In der bevorzugten Ausführungsform des Ortungsgeräts ist die Eingabevorrichtung und/oder die Ausgabevorrichtung vorteilhaft in einer dem Benutzer des Ortungsgeräts bei dessen Benutzung zugewandten Gehäuseseite angeordnet. Eine Gehäuseseite meint insbesondere eine das Ortungssystem, insbesondere das Ortungsgerät, zu seiner Umgebung hin begrenzende Außenwand des Gehäuses. Unter "in einer Gehäuseseite angeordnet" soll verstanden werden, dass die Eingabevorrichtung und/oder die Ausgabevorrichtung auf der Gehäuseseite in deren Oberfläche eingesetzt, aufgebracht oder anderweitig befestigt sind/ist. Insbesondere kann das Gehäuse auch selbst Bestandteil der Eingabe- bzw. Ausgabevorrichtung sein.

Arbeitsparameter bezeichnen alle notwendigen und/oder sinnvollen Betriebsparameter des Ortungssystems, insbesondere zu dessen Steuerung, sowie Parameter betreffend die Auswertung der Messergebnisse.

Unter einer Eingabevorrichtung soll insbesondere ein Mittel verstanden werden, das dazu vorgesehen ist, zumindest eine Information von einem Benutzer des Ortungssystems anzunehmen und an die Steuervorrichtung und/oder die Auswertevorrichtung weiterzuleiten. Die Eingabevorrichtung kann beispielsweise in Form einer Benutzerschnittstelle und/oder unter Verwendung eines anderen Geräts realisiert sein. Dabei kann eine Benutzereingabe insbesondere über eine akustische, optische, gestengestützte und/oder taktile Eingabe durchgeführt werden. Beispielsweise kann die Eingabevorrichtung aus einem Betätigungselement, einer Tastatur, einem Display, insbesondere einem Touch-Display, einem Spracheingabemodul, einer Gestenerkennungseinheit und/oder einem Zeigegerät (beispielsweise einer Maus) bestehen. Ferner kann die Eingabevorrichtung zusätzlich auch außerhalb des Ortungssystems, insbesondere außerhalb des Ortungsgeräts, vorhanden sein, beispielsweise in Form eines externen Datengeräts wie einem Smartphone, einem Tablet-PC, einem PC, oder in Form eines anderen, einem Fachmann als sinnvoll erscheinenden externen Datengeräts, das über eine Datenkommunikationsschnittstelle mit der Steuervorrichtung und/oder der Auswertevorrichtung des Ortungsgeräts verbunden ist. Letzteres ist besonderes dann vorteilhaft, wenn das externe Datengerät eine erweiterte Funktionalität des Ortungssystems erlaubt und/oder unterstützt, beispielsweise eine speziell aufbereitete Eingabemöglichkeit oder dergleichen.

Unter einer Ausgabevorrichtung soll zumindest ein Mittel verstanden werden, das dazu vorgesehen ist, zumindest eine wechselnde Information akustisch, optisch und/oder taktil an einen Benutzer des Ortungssystems, insbesondere des Ortungsgeräts, auszugeben. Dies kann beispielsweise mittels eines Displays, eines Touch-Displays, eines Tonsignals, einer Veränderung eines Betriebsparameters, eines Vibrationsgebers und/oder einer LED-Anzeige realisiert werden. In einer besonders bevorzugten Ausführungsform kann die Ausgabevorrichtung als eine Anzeigevorrichtung realisiert sein. Ferner können auszugebende Informationen, beispielsweise Auswerteergebnisse und/oder Informationen betreffend einen Betriebszustand des Ortungsgeräts, auch an eine funktionale Komponente des Ortungssystems, insbesondere an die Steuervorrichtung, die Ortungsvorrichtung, den Positionssensor, die Auswertevorrichtung und/oder, insbesondere zur Erhöhung des Benutzerkomforts, an ein Daten verarbeitendes System ausgegeben werden. Letzteres umfasst zumindest auch eine Ausgabe einer Information an ein externes Gerät wie ein Smartphone, ein Tablet-PC, ein PC sowie an ein anderes, einem Fachmann als sinnvoll erscheinendes externes Datengerät, das über eine Datenkommunikationsschnittstelle mit der Auswertevorrichtung und/oder der Steuervorrichtung des Ortungssystems verbunden ist.

Sowohl die Eingabevorrichtung als auch die Ausgabevorrichtung können vorteilhaft direkt im Gehäuse des Ortungssystems, insbesondere im Gehäuse eines mobilen Ortungsgeräts, untergebracht sein. Alternativ oder zusätzlich kann die Eingabe- und/oder Ausgabevorrichtung auch ausgelagert werden und beispielsweise über externe Vorrichtungen realisiert werden. Letztere Realisierungsmöglichkeit umfasst explizit die Steuerung, Auswertung und Ausgabe von Messergebnisse über drahtgebundene und/oder drahtlose externe Systeme wie beispielsweise Fernbedienungen, Computersteuerungen, Tablet-PCs und/oder andere mobile Geräte wie Mobiltelefone, Smartphones etc.

In einer vorteilhaften Ausführungsform des Ortungssystems ist zumindest eine Speichervorrichtung zum Speichern von Messergebnissen und/oder Ortungsinformationen und/oder Arbeitsparametern vorgesehen. Unter einer Speichervorrichtung soll insbesondere ein elektronischer Datenspeicher umfassend die zu dessen Ansteuerung benötigten Mittel verstanden werden. Die Speichervorrichtung ist zur Ablage und zum Abruf von Messergebnissen und/oder Ortungsinformationen und/oder Arbeitsparameter und/oder anderen im Rahmen des Betriebs des Ortungssystems benötigten oder sinnvollen Daten vorgesehen. Insbesondere ist die Speichervorrichtung vorgesehen, Ortungsdaten und/oder ausgewertete Ortungsinformationen, bevorzugt auch zumindest zweidimensionale Karteninformationen, zumindest vorübergehend zu speichern und abzurufen. Grundsätzlich ist auch denkbar, dass die Speichervorrichtung zur Ablage und zum Abruf von Datenkomponenten vorgesehen ist.

Bevorzugt ist die Speichervorrichtung als ein von der Auswertevorrichtung und/oder der Steuervorrichtung beschreibbarer und auslesbarer Speicher ausgebildet. Die Speichervorrichtung kann alle Formen an externen und internen elektronischen, insbesondere digitalen Speichern, umfassen, beispielsweise einen RAM-Baustein oder integrierte Schaltkreise. Alternativ oder zusätzlich kann die Speichervorrichtung insbesondere auch vorgesehen sein, wechselbare Speichermedien wie Speicherchips, USB-Sticks, Memory-Sticks, Speicherkarten, SD-Karten oder dergleichen zu beschreiben und zu lesen. In einer bevorzugten Ausgestaltung kann die Speichervorrichtung in der Auswertevorrichtung und/oder in der Steuervorrichtung und/oder in der Eingabevorrichtung und/oder in der Ausgabevorrichtung integriert sein, d.h. beispielsweise als ein Teil eines Speichers der Auswertevorrichtung ausgebildet sein.

Darüber hinaus wird vorgeschlagen, dass das Ortungssystem eine Datenkommunikationsschnittstelle zur insbesondere drahtlosen Kommunikation aufweist, mittels der das Ortungsgerät Daten austauschen kann, insbesondere Messergebnisse und/oder Ortungsinformationen und/oder Arbeitsparameter senden und/oder empfangen kann. Die Datenkommunikationsschnittstelle ist signaltechnisch zumindest an die Steuervorrichtung und/oder die Auswertevorrichtung des Ortungssystems angebunden. Bevorzugt verwendet die Datenkommunikationsschnittstelle ein standardisiertes Kommunikationsprotokoll zu einer Übertragung von elektronischen, insbesondere digitalen Daten. Vorteilhaft umfasst die Datenkommunikationsschnittstelle eine drahtlose Schnittstelle, insbesondere beispielsweise eine WLAN-, Bluetooth-, Infrarot-, NFC-, RFID-Schnittstelle oder eine andere, einem Fachmann als sinnvoll erscheinende, drahtlose Schnittstelle. Alternativ oder zusätzlich kann die Datenkommunikationsschnittstelle auch einen kabelgebunden Adapter aufweisen, beispielsweise einen USB- oder Mikro-USB-Adapter.

Vorteilhaft können mittels der Datenkommunikationsschnittstelle Messergebnisse und/oder Ortungsinformationen und/oder Arbeitsparameter von dem Ortungssystem an ein externes Datengerät, beispielsweise an ein Smartphone, einen Tablet-PC, einen PC, einen Drucker oder weitere einem Fachmann als sinnvoll erscheinende externe Geräte gesendet werden oder von diesen empfangen werden. Mittels der erfindungsgemäßen Ausgestaltung kann vorteilhaft eine Übertragung von Daten ermöglicht werden, die zu einer weiteren Auswertung von mit dem Ortungssystem erfassten Messsignalen und/oder Ortungsinformationen nutzbar ist. Ferner können vorteilhaft vielfältige Zusatzfunktionen ermöglicht und eingebunden werden, die insbesondere auch eine direkte Kommunikation mit Smartphones (insbesondere über programmierte Apps) oder ähnlichen portablen Datengeräten erfordern. Diese können beispielsweise automatische Kartierungs-Funktionen, Firmware-Updates, Datennachbearbeitung, Datenaufbereitung, Datenabgleich mit anderen Geräten, oder dergleichen umfassen.

In einer vorteilhaften Ausführungsform des erfindungsgemäßen Ortungssystems, insbesondere eines handgehaltenen Ortungsgeräts, ist die Ortungsvorrichtung dazu vorgesehen, Ortungsdaten zu unter einer Untersuchungsoberfläche verborgenen Ortungsobjekten richtungs- und/oder ortsaufgelöst zu erfassen.

Bevorzugt erlaubt die Ortungsvorrichtung, eine Information über ein Ortungsobjekt zumindest teilweise in zwei Dimensionen oder Richtungen, entlang derer sich die Untersuchungsoberfläche erstreckt, richtungs- und/oder ortsaufgelöst zu erfassen. Die Richtungs- und/oder Ortsauflösung erfolgt bevorzugt in Bezug auf die Untersuchungsoberfläche, insbesondere anhand von gegebenen und/oder festlegbaren Bezügen hinsichtlich der Ortungsvorrichtung als Referenz. Eine Korrelation der Richtung oder des Orts der Ortung unter Bezug auf die Ortungsvorrichtung kann beispielsweise unter Verwendung von Winkeln und/oder Koordinaten realisiert werden. Somit kann vorteilhaft erreicht werden, dass ausgewertete Ortungsinformationen mit einer Richtungs- und/oder Ortsinformation, insbesondere hinsichtlich einer Position und/oder Ausrichtung der Ortungsvorrichtung auf der Untersuchungsoberfläche, korreliert werden können. Eine derartige Korrelation kann beispielsweise unter Verwendung von relativen Ortungswinkeln oder relativen Ortungskoordinaten, die jeweils relative Winkel bzw. Koordinaten bezogen auf ein Merkmal der Ortungsvorrichtung, insbesondere beispielsweise deren Mittelpunkt definieren, realisiert werden. Auf diese Weise kann beispielsweise eine Ortung eines verborgenen Objekts mit einer Richtungsangabe verknüpft werden, unter der die entsprechenden Ortungsdaten von der Ortungsvorrichtung aus gesehen detektiert werden. Eine Richtungs- und/oder Ortsauflösung erfolgt somit lediglich unter Verwendung der Ortungsvorrichtung selbst, sodass ein Umpositionieren der Ortungsvorrichtung bezogen auf die Untersuchungsoberfläche zur Erzeugung einer Richtungs- und/oder Ortsauflösung nicht nötig ist.

Ferner kann aus der richtungs- und/oder ortsaufgelösten Ortungsinformation eine Abschätzung der Anordnung eines unter der Untersuchungsoberfläche verborgenen Ortungsobjekts abgeleitet werden. Dazu gibt die Ortungsvorrichtung vorzugsweise Ortungsdaten aus, mit denen eine richtungs- und/oder ortsaufgelöste Anordnung von unter der Untersuchungsoberfläche verborgenen Ortungsobjekten ableitbar ist.

Bevorzugt werden durch die Verwendung einer richtungs- und/oder ortsauflösenden Ortungsvorrichtung richtungs- und/oder ortsaufgelöste Ortungsdaten erfasst und zur weiteren Verarbeitung bereitgestellt. Insbesondere können die Ortungsdaten mittels der Auswertevorrichtung ausgewertet werden, sodass richtungs- und/oder ortsaufgelöste Ortungsinformationen erhalten werden. Diese Ortungsinformationen können dann in Matrizen, Tabellen und/oder als zumindest zweidimensionale Karteninformationen weiterverarbeitet und insbesondere auch dargestellt oder ausgegeben werden. Besonders vorteilhaft können die richtungs- und/oder ortsaufgelösten Ortungsinformationen zur Generierung einer Darstellung der ausgewerteten Ortungsdaten in Form einer zumindest zweidimensionalen Karteninformation oder eines Abbilds der Untersuchungsoberfläche, insbesondere auch mehrdimensionalen Karteninformation, genutzt werden. Vorteilhaft erlaubt die Verwendung einer richtungs- und/oder ortsauflösenden Ortungsvorrichtung die Erstellung einer Karteninformation mit richtungs- und/oder ortsaufgelösten Ortungsinformationen betreffend die Untersuchungsoberfläche um die Ortungsvorrichtung herum. Besonders vorteilhaft wird die Erstellung einer Karteninformation mit richtungs- und/oder ortsaufgelösten Ortungsinformationen betreffend die Untersuchungsoberfläche um die Ortungsvorrichtung herum ohne Umpositionieren der Ortungsvorrichtung in Bezug zur Untersuchungsoberfläche realisiert.

In einer Ausführungsform der Ortungsvorrichtung kann diese beispielsweise vorgesehen sein, in verschiedenen, voneinander unabhängigen Erstreckungsrichtungen, Raumwinkeln oder Raumvolumen Ortungsdaten zu erfassen.

In einer vorteilhaften Ausführungsform des erfindungsgemäßen Ortungssystems, insbesondere eines handgehaltenen Ortungsgeräts, weist die Ortungsvorrichtung zumindest einen in einem Erfassungsbereich richtungs- und/oder ortsauflösenden Ortungssensor auf.

Somit kann konstruktiv besonders einfach eine richtungs- und/oder ortsauflösende Ortungsvorrichtung realisiert werden. Insbesondere kann der richtungs- und/oder ortsauflösende Ortungssensor dazu vorgesehen sein, in verschiedenen, voneinander unabhängigen Erstreckungsrichtungen, Raumwinkeln oder Raumvolumen zu messen und somit Ortungsdaten in einem Erfassungsbereich richtungs- und/oder ortsauflösend zu erfassen. Der Erfassungsbereich setzt sich entsprechend aus den voneinander unabhängig messbaren Erstreckungsrichtungen, Raumwinkeln oder Raumvolumen zusammen. Bevorzugt kann die Ortungsvorrichtung in einer vorteilhaften Ausgestaltung der erfindungsgemäßen Ortungsvorrichtung zumindest einen richtungs- und/oder ortsauflösenden Ortungssensor aus einer Gruppe von Sensoren aufweisen, die zumindest auf dielektrischen und/oder resistiven Verfahren basierende Sensoren, insbesondere Kapazitäts-, Mikrowellen-, Ultraschall-, Widerstands-, Leitfähigkeits- und/oder Radar-Sensoren, insbesondere auch Ultrabreitband-Radar- und/oder Breitband-Impuls-Radar-Sensoren, aber auch induktions-, strahlungs- sowie magnetfeldsensitive Sensoren umfasst. Ferner können auch andere, einem Fachmann als sinnvoll erscheinende Ortungssensoren vorgesehen sein.

Der richtungs- und/oder ortsauflösende Ortungssensor ist vorgesehen, physikalische und/oder chemische Größen, die auf ein Vorhandensein eines Ortungsobjekts schließen lassen, richtungs- und/oder ortsabhängig zu erfassen und in ein elektrisch auswertbares Signal umzuwandeln. Derartige physikalische und/oder chemische Größen stellen beispielsweise eine elektrische und/oder magnetische Feldänderung oder aber auch eine Laufzeitänderung dar. Bevorzugt kann der richtungs- und/oder ortsauflösende Ortungssensor beispielsweise als ein Induktivsensor, ein AC-Sensor oder ein Kapazitivsensor ausgebildet sein. Alternativ kann der richtungs- und/oder ortsauflösende Ortungssensor für eine Ortung mittels elektromagnetischer Strahlung vorgesehen sein, beispielsweise in Form eines 50-Hertz-Sensors, eines Mikrowellensensors, eines Radarsensors, eines Terahertzsensors, eines Ultrahochfrequenzsensors, eines Röntgensensors, eines Infrarotsensors oder eines NMR-Sensors. Ferner ist auch ein richtungs- und/oder ortsauflösender Schallsensor, beispielsweise ein Ultraschall- oder Impact-Echo-Sensor, denkbar.

Bevorzugt weist der richtungs- und/oder ortsauflösende Ortungssensor Mittel auf, die erlauben, den Erfassungsbereich und/oder die voneinander getrennt messbaren Erstreckungsrichtungen, Raumwinkel oder Raumvolumen zu beeinflussen und somit die Richtungs- und/oder Ortsauflösung des Ortungssensors zu beeinflussen.

Besonders bevorzugt kann der richtungs- und/oder ortsauflösende Ortungssensor einen Radar-Sensor darstellen. In diesem Ausführungsbeispiel stellt der Erfassungsbereich einen Raumwinkel oder ein Raumvolumen dar, in dem elektromagnetische Strahlung emittiert und aus dem elektromagnetische gestreute Strahlung empfangen wird.

In einer vorteilhaften Ausführungsform des erfindungsgemäßen Ortungssystems, insbesondere eines handgehaltenen Ortungsgeräts, ist der zumindest eine richtungs- und/oder ortsauflösende Ortungssensor der Ortungsvorrichtung als elektrisch und/oder mechanisch schwenkbarer Ortungssensor und/oder als elektrisch ausrichtbarer Ortungssensor und/oder als ein Array aus Ortungssensoren und/oder als ein bildgebender Ortungssensor ausgebildet.

Ein mechanisch schwenkbarer Ortungssensor stellt eine besonders einfache Realisierung eines richtungs- und/oder ortsauflösenden Ortungssensors dar, bei dem nahezu jeder beliebige Sensor, beispielsweise ein auf dielektrischen und/oder induktiven und/oder resistiven Verfahren basierender Sensor, eingesetzt werden kann. In Folge des mechanischen Schwenkens des Ortungssensors ist es möglich, mit jedem einsetzbaren Ortungssensor eine zumindest teilweise richtungs- und/oder ortsauflösende Ortung durchzuführen. In einer bevorzugten Ausführungsform kann der mechanisch schwenkbare Ortungssensor auch unter Verwendung einer elektrischen Schaltung in Verbindung mit Motoren oder vergleichbaren Aktuatoren vorteilhaft automatisiert geschwenkt werden. Somit kann eine Geschwindigkeit und Präzision der Schwenkbewegung erhöht werden.

In einer alternativen oder zusätzlichen Ausführungsform kann bei geeigneter Wahl des Ortungssensors auch ein Ausrichten (Richten) des Ortungssensors, insbesondere eines von dem Ortungssensor ausgesendeten und/oder detektierten Signals, durch eine elektrische Ansteuerung erfolgen. Dies kann beispielsweise vorteilhaft unter Verwendung von elektromagnetische Strahlung emittierenden und/oder detektierenden Ortungssensoren realisiert werden. Bei diesen kann durch geeignete Ausgestaltung des Ortungssensors in Verbindung mit einer geeigneten Ausgestaltung einer Ansteuerung des Ortungssensors bevorzugt eine auf unterschiedliche Weise elektrisch ansteuerbare und somit elektrisch ausrichtbare Antenne, insbesondere Richtantenne, realisiert werden. Es sei darauf hingewiesen, dass die elektrische Ausrichtung durch elektrische Ansteuerung sich von einem elektrischen, insbesondere motorisierten, Schwenken des Ortungssensors unterscheidet.

In den genannten Realisierungsformen werden bevorzugt richtungs- und/oder ortsaufgelöste Ortungsdaten in Abhängigkeit eines Schwenkwinkels und/oder einer Schwenkposition und/oder eines Ausrichtwinkels und/oder einer Ausrichtposition mit dem Ortungssensor ermittelt und an die Auswertevorrichtung ausgegeben.

Alternativ oder zusätzlich kann eine richtungs- und/oder ortsauflösende Funktionalität auch vorteilhaft durch Verwendung einer Mehrzahl von Ortungssensoren, insbesondere Arrays von Ortungssensoren, realisiert werden. Dabei können die Sensoren beispielsweise in regelmäßiger, insbesondere periodischer, bevorzugt zwei-dimensionaler Anordnung verwendet werden. Dabei erfasst jeder Einzelsensor der Anordnung, insbesondere des Arrays, zumindest einen Raumwinkel und/oder ein Raumvolumen. Auf diese Weise kann eine zuverlässige, ortsauflösende Ortung innerhalb eines durch die Summe der Erfassungsbereiche jedes einzelnen Sensors definierten Erfassungsbereich des Ortungssensors realisiert werden. Insbesondere kann besonders bevorzugt auch ein bildgebender Ortungssensor, beispielsweise ein aus einer Vielzahl an Pixeln bestehender Ortungssensor, verwendet werden, um richtungs- und/oder ortsauflösende Ortung zu realisieren. Die Mehrzahl oder das Array von Ortungssensoren oder der bildgebende Ortungssensor erfassen jeweils richtungs- und/oder ortsaufgelöste Ortungsdaten, die im Folgenden der Auswertevorrichtung zur weiteren Verarbeitung ausgegeben werden.

In einer bevorzugten Ausführungsform ist der richtungs- und/oder ortsauflösende Ortungssensor als eine richtungs- und/oder ortsauflösende Ortungsantenne, insbesondere als eine Radarantenne oder eine LCR-Antenne, ausgebildet. Unter einer Ortungsantenne soll insbesondere ein Mittel verstanden werden, das dazu vorgesehen ist, eine Leistung in Form einer insbesondere elektromagnetischen Welle, insbesondere im Mikrowellenbereich, drahtlos auszusenden und/oder zu empfangen. Die Ortungsantenne weist dazu bevorzugt eine Sende- und/oder eine Empfangseinheit auf, wobei die Sende- und/oder die Empfangseinheit dazu vorgesehen sind/ist, elektromagnetische Signale richtungs- und/oder ortsaufgelöst in definierte Erstreckungsrichtungen zu senden bzw. eine Reflexion des ausgesendeten Signals richtungs- und/oder ortsaufgelöst aus definierten Erstreckungsrichtungen zu empfangen. Insbesondere werden derart Sende- und/oder Empfangscharakteristiken der Ortungsantenne definiert, unter denen elektromagnetische Strahlung im Wesentlichen in der die Sende- und/oder Empfangscharakteristik bestimmenden Erstreckungsrichtung gesendet und/oder empfangen wird. Bevorzugt ist die Ortungsantenne zur Einstellung der Sende- und/oder Empfangscharakteristik der Ortungsantenne und somit der Erstreckungsrichtung mittels einer Schalteinheit ansteuerbar. Unter einer Schalteinheit ist insbesondere eine Einheit zu verstehen, die dazu vorgesehen ist, zumindest eine Schnittstelle, vorteilhaft zumindest zwei Schnittstellen, der Ortungsantenne in verschiedenen Betriebszuständen der Ortungsantenne unterschiedlich zu verschalten. Vorzugsweise verbindet die Schalteinheit die Ortungsantenne insbesondere wahlweise mit einem Signalgenerator, einem Demodulator und/oder einem an die Ortungsantenne angepassten Abschlusswiderstand. Durch gezielte Ansteuerung mittels der Schalteinheit können auf einfache Weise variierende Sende- und/oder Empfangscharakteristiken der mittels der Ortungsantenne ausgesendeten und/oder empfangenen elektromagnetischen Strahlung, einhergehend mit variierenden Erstreckungsrichtungen, realisiert werden.

Vorzugsweise demoduliert die Sende- und/oder Empfangseinheit eine dem Fachmann als sinnvoll erscheinende Kenngröße, vorteilhaft jedoch eine Laufzeit, eine Frequenz, eine Amplitude und/oder besonders vorteilhaft eine Phasenlage des reflektierten Signals.

Bevorzugt lässt sich auf diese Weise eine in einem Erfassungsbereich richtungs- und/oder ortsaufgelöste Ortung durch Aussenden bzw. Empfangen von Strahlung in bzw. aus unterschiedlichen Erstreckungsrichtungen realisieren. Dabei kann vorteilhaft auf bewegliche Bauteile, beispielsweise eine Schwenkeinrichtung oder dergleichen, verzichtet werden. Die Summe der Erstreckungsrichtungen, insbesondere die Summe der durch die unterschiedlichen Erstreckungsrichtungen bestimmten Raumvolumen, definiert den Erfassungsbereich dieser elektrisch ausrichtbaren Ortungsantenne.

In einer vorteilhaften Ausführungsform des erfindungsgemäßen Ortungssystems, insbesondere eines handgehaltenen Ortungsgeräts, weist der richtungs- und/oder ortsauflösende Ortungssensor der Ortungsvorrichtung einen vorgebbaren, insbesondere wählbaren und/oder einstellbaren Erfassungsbereich auf.

Der Erfassungsbereich des Ortungssensors kann entweder in seiner räumlichen Ausrichtung bezogen auf den Ortungssensor - und damit auch auf die Ortungsvorrichtung - oder in seiner Größe vorgebbar, insbesondere wählbar oder einstellbar, sein. Eine Größe des Erfassungsbereichs charakterisiert insbesondere das durch den Erfassungsbereich definierte Volumen und/oder einen Durchmesser des durch den Erfassungsbereich definierten Volumens und/oder einen Aufspannwinkel α des in einem Raumwinkel richtungsauflösenden Ortungssensors. Vorteilhaft kann auf diese Weise ein Erfassungsbereich realisiert werden, dessen Größe und/oder dessen Ausrichtung vorgebbar, insbesondere wählbar oder einstellbar ist. Insbesondere dient der vorgebbare Erfassungsbereich einer variablen, insbesondere wählbaren und/oder einstellbaren Anpassung einer Auflösung des Ortungssensors hinsichtlich Ausrichtung und/oder Größe des durch den Ortungssensor messtechnisch abgedeckten Ortungsbereichs.

Hinsichtlich des Ausführungsbeispiels der Ortungsantenne kann beispielsweise vorgesehen sein, dass der durch die Summe der Sende- und/oder Empfangscharakteristiken mit ihren jeweiligen Erstreckungsrichtungen als Erfassungsbereich der Ortungsantenne definierte Raumwinkel vorgebbar und insbesondere wählbar und/oder einstellbar ist. Beispielsweise weist die Ortungsantenne einen Erfassungsbereich auf, dessen Raumwinkel (α) größer ist als 5 Grad, vorteilhaft größer ist als 10 Grad, besonders vorteilhaft größer ist als 15 Grad.

Durch die erfindungsgemäße Ausgestaltung der Ortungsvorrichtung kann konstruktiv einfach eine Ortung in einem Erfassungsbereich des Ortungssensors realisiert werden, der vorgebbar, insbesondere wählbar und/oder einstellbar ist. Somit kann eine Fokussierung der Ortungsvorrichtung auf einen frei vorgebbaren, insbesondere einstellbaren und/oder wählbaren Erfassungsbereich erfolgen. Vorteilhaft werden derart ebenfalls die mittels der Ortungsvorrichtung ermittelten Ortungsdaten auf den frei vorgebbaren, insbesondere einstellbaren und/oder wählbaren, Erfassungsbereich bezogen bzw. begrenzt. Eine besonders genaue, d.h. insbesondere eine besonders richtungs- und/oder ortsaufgelöste, Ortung kann somit erreicht werden. Vorteilhaft ist folglich eine besonders genaue Bestimmung einer winkelbezogenen und/oder lateralen Position unter Verwendung des erfindungsgemäßen Ortungssensors möglich.

In einer vorteilhaften Ausführungsform des erfindungsgemäßen Ortungssystems, insbesondere eines handgehaltenen Ortungsgeräts, ist die Auswertevorrichtung dazu vorgesehen, in dem ersten Betriebsmodus des Ortungssystems eine richtungs- und/oder ortsaufgelöste Ortungsinformation basierend auf von dem richtungs- und/oder ortsauflösenden Ortungssensor erfassten Ortungsdaten zu bestimmen und/oder bereitzustellen.

Vorteilhaft ist die Auswertevorrichtung des Ortungssystems dazu vorgesehen, aus den von dem Ortungssensor bereitgestellten Ortungsdaten zumindest eine richtungs- und/oder ortsaufgelöste Ortungsinformation, insbesondere auch eine Positions- und/oder Ausrichtungsinformation über das Ortungsobjekt, zu ermitteln. Somit ist auf konstruktiv einfache Weise eine genaue Ortung mit einem hohen Informationsgehalt möglich. Vorzugsweise erlaubt die Auswertevorrichtung in dem ersten Betriebsmodus des Ortungssystems eine richtungs- und/oder ortsaufgelöste Ortungsinformation basierend auf von dem richtungs- und/oder ortsauflösenden Ortungssensor erfassten Ortungsdaten zu bestimmen und/oder bereitzustellen. Insbesondere verfügt die Auswertevorrichtung über zur entsprechenden Auswertung benötigte Mittel, beispielsweise insbesondere Regelroutinen, Steuerroutinen und/oder Berechnungsroutinen. Beispielsweise sind Berechnungs- und/oder Zuordenroutinen vorgesehen, die der Auswertevorrichtung ermöglichen, die richtungs- und/oder ortsaufgelösten Ortungsdaten den verschiedenen Richtungen und/oder Orten der durchgeführten Ortung zuzuordnen. Auf diese Weise kann beispielsweise eine richtungs- und/oder ortsaufgelöste Ortungsinformation aus den richtungs- und/oder ortsaufgelösten Ortungsdaten durch Zuordnung der Ortungsdaten zu Raumwinkeln oder Ortungskoordinaten ermittelt werden.

In einer vorteilhaften Ausführungsform des erfindungsgemäßen Ortungssystems, insbesondere eines handgehaltenen Ortungsgeräts, ist die Auswertevorrichtung dazu vorgesehen, in dem zweiten Betriebsmodus des Ortungssystems aus den zumindest dreidimensionalen Ortungsinformationen eine zumindest zweidimensionale Karteninformation zu bestimmen und/oder bereitzustellen, insbesondere in Echtzeit zu bestimmen und/oder bereitzustellen.

Vorteilhaft kann auf diese Weise eine zumindest zweidimensionale Karteninformation von der Auswertevorrichtung bestimmt und bereitgestellt werden, in der sowohl Positionsdaten als auch mittels der Ortungsvorrichtung ermittelte Ortungsdaten und/oder bereits ausgewertete Ortungsinformationen korreliert sind. Insbesondere lässt sich eine besonders umfassende, richtungs- und/oder ortsaufgelöste, zumindest zweidimensionale Karteninformation auf einfache Weise generieren.

Unter einer zumindest zweidimensionalen Karteninformation sollen im Rahmen dieser Anmeldung insbesondere Daten verstanden werden, die vorgesehen sind, mittels einer Anzeigevorrichtung zumindest teilweise in Form einer Karte an einen Benutzer des Ortungssystems ausgegeben zu werden. In einer bevorzugten Ausführungsform kann die Ausgabe beispielsweise über ein flächiges, zweidimensionales Ausgabe-Display der Anzeigevorrichtung in Form einer zweidimensionalen Karte erfolgen. Bevorzugt stellt die Karteninformation eine mehrdimensionale, insbesondere pseudo-mehrdimensionale, zumindest aber zweidimensionale ausgewertete Ortungsinformation dar. Dabei kennzeichnet die Bezeichnung "zweidimensional", dass die Karteninformation eine Information über unter einer Untersuchungsoberfläche verborgene Ortungsobjekte zumindest in zwei Richtungen, vorzugsweise in zwei orthogonalen Richtungen, enthält. Dabei sind die zwei Richtungen der Untersuchungsoberfläche, beispielsweise anhand von gegebenen und/oder festlegbaren Bezugspunkten, zuordenbar. Bevorzugt erstecken sich die zwei Richtungen in einer Ebene der Untersuchungsoberfläche, insbesondere entlang der Untersuchungsoberfläche und/oder in einer zur Untersuchungsoberfläche parallel angeordneten Ebene, die den Ortungssensor schneidet. Bevorzugt umfasst die zumindest zweidimensionale Karteninformation zumindest Ortungsinformationen, die mit zweidimensionalen Positionsdaten der Ortungsvorrichtung bezogen auf die Untersuchungsoberfläche zum Ortungszeitpunkt korreliert sind. Die Ortungsinformation kann insbesondere auf eine Messung unmittelbar bezogene Informationen oder Messwerte zumindest eines Ortungssensors betreffen, beispielsweise Amplituden, Phasenlagen, Relaxationszeiten oder dergleichen. Alternativ kann die Ortungsinformation der zumindest zweidimensionalen Karteninformation auch interpretierte und/oder aufbereitete Informationen wie Richtungsinformationen, qualitative Signalstärken eines Ortungssignals, Tiefeninformationen oder dergleichen betreffen. Besonders bevorzugt weist die zumindest zweidimensionale Karteninformation unter Verwendung einer Farb- oder Graustufencodierung an einen Benutzer des Ortungssystems auszugebende Ortungsinformationen, beispielsweise eine Tiefeninformation oder eine Information über das Vorhandensein eines Ortungsobjekts, auf.

Unter einer Tiefeninformation soll in diesem Zusammenhang insbesondere eine Information verstanden werden, die einen Abstand der Ortungsobjekte von der Untersuchungsoberfläche und/oder eine Erstreckung der Ortungsobjekte senkrecht zur Untersuchungsoberfläche wiedergibt.

In einer bevorzugten Ausführungsform kann die zumindest zweidimensionale Karteninformation in Form einer insbesondere mehrdimensionalen Matrix, Tabelle, Array, Liste oder dergleichen verarbeitet und/oder gespeichert und/oder ausgegeben werden. Eine Ausgabe kann dabei zur weiteren Verwendung bevorzugt an die Steuervorrichtung und/oder die Anzeigevorrichtung und/oder die Datenkommunikationsschnittstelle erfolgen. Insbesondere die Anzeigevorrichtung ist vorgesehen, die in Form einer insbesondere mehrdimensionalen Matrix, Tabelle, Array, Liste oder dergleichen bereitgestellte zumindest zweidimensionale Karteninformation zu verarbeiten und insbesondere als Karteninformation, bevorzugt als Karte, mittels eines Anzeigeelements, beispielsweise einem Display, darzustellen. Insbesondere sei angemerkt, dass die Anzeigevorrichtung dann zur Darstellung der zumindest zweidimensionalen Karteninformation in Form einer farb- oder graustufencodierten Karte vorgesehen ist.

Für einen Benutzer des Ortungssystems kann auf besonders einfache, übersichtliche und intuitiv erfassbare Weise eine Ortungsinformation durch Anzeige einer zumindest zweidimensionalen Karteninformation ausgegeben werden. In einer bevorzugten Ausführungsform stellt die zumindest zweidimensionale Karteninformation beispielsweise eine zweidimensionale Karte oder ein zweidimensionales Abbild, die bzw. das die Ortungsverhältnisse unter der Untersuchungsoberfläche wiedergibt, dar. Der Karte oder dem Abbild ist auf intuitive und einfache Weise unmittelbar zu entnehmen, an welchen Stellen der bereits untersuchten Untersuchungsoberfläche Ortungsobjekte detektiert werden.

Die zumindest zweidimensionale Karteninformation weist bevorzugt eine hohe Informationsdichte auf, mittels der ein Benutzer besonders gut bei der Interpretation der Karteninformation unterstützt werden kann. Vorteilhaft kann somit ein Ortungssystem mit einem hohen Bedienkomfort bereitgestellt werden, das einen geringen Schulungs- oder Einlernaufwand erfordert.

In einer vorteilhaften Ausgestaltung ist die Auswertevorrichtung dazu vorgesehen, die zumindest zweidimensionale Karteninformation in Echtzeit zu bestimmen und/oder bereitzustellen. Unter Echtzeit soll in diesem Zusammenhang insbesondere verstanden werden, dass eine Verarbeitungsgeschwindigkeit der Auswertevorrichtung einer Umpositionierungsgeschwindigkeit, insbesondere einer Verfahrgeschwindigkeit, der Ortungsvorrichtung durch den Benutzer entspricht, d.h. der Benutzer kann die von ihm mit der Ortungsvorrichtung ausgeführte Bewegung direkt einer Änderung der Karteninformation zuordnen. Die Auswertevorrichtung ist dazu vorgesehen, jeweils aktuell übermittelte Ortungsdaten und Positionsdaten zu anzunehmen und zwischen zwei Verarbeitungszyklen empfangene Daten von der Verarbeitung auszuschließen. Vorzugsweise vermittelt das Ordnungssystem dem Benutzer den Eindruck, dass die Anzeige des Ortungssystems die Ortungsdaten zumindest im Wesentlichen verzögerungsfrei wiedergibt. Dadurch kann der Benutzer Ortungsobjekte besonders schnell und sicher erkennen und es kann ein besonders effizientes Ortungssystem bereitgestellt werden.

In einer vorteilhaften Ausführungsform ist eine Bestimmung und Bereitstellung der zumindest zweidimensionalen Karteninformation lediglich durch eine geräteinterne Verarbeitungsrate, d.h. insbesondere durch Signalübertragungsgeschwindigkeiten sowie eine Auswertegeschwindigkeit, begrenzt. Insbesondere ist eine Verarbeitungsrate von Ortungsdaten und Positionsdaten, die von der Auswertevorrichtung angenommen wird, an eine Verarbeitungsgeschwindigkeit der Auswertevorrichtung angepasst. Somit bleiben Daten, die von der Auswertevorrichtung nicht unmittelbar verarbeitet werden können, unberücksichtigt.

Durch eine derart hohe Verarbeitungsrate kann bei dem Benutzer des Ortungssystems der Eindruck entstehen, dass Ortungsdaten für einen mit dem Ortungssensor überfahrenen Bereich unmittelbar ausgewertet und als Karteninformation bereitgestellt werden. Unter einer Bestimmung und Bereitstellung der zumindest zweidimensionalen Karteninformation in Echtzeit ist insbesondere dann auszugehen, wenn die geräteinterne Verarbeitungsdauer bis zur Darstellung der zumindest zweidimensionalen Karteninformation auf einem Anzeigeelement, insbesondere einem Display, der Anzeigevorrichtung weniger als 2 Sekunden, bevorzugt weniger als 1 Sekunde, besonders bevorzugt weniger als 0.1 Sekunde beträgt.

In einer vorteilhaften Ausführungsform des Ortungssystems können die von der Auswertevorrichtung bestimmten und/oder bereitgestellten zumindest zweidimensionalen Karteninformationen auf der Speichervorrichtung zumindest vorübergehend gespeichert werden.

In einer vorteilhaften Ausführungsform des erfindungsgemäßen Ortungssystems, insbesondere eines handgehaltenen Ortungsgeräts, ist die Auswertevorrichtung dazu vorgesehen, in dem ersten und in dem zweiten Betriebsmodus bestimmte/ermittelte Ortungsinformationen zu kombinieren.

Ein Kombinieren von in dem ersten und in dem zweiten Betriebsmodus bestimmten, insbesondere bereitgestellten oder ermittelten, Ortungsinformationen kann bevorzugt in Form von einer Vorverarbeitung, Vorkonditionierung, Kombination, Ergänzung, Erweiterung, Präzisierung, Verfeinerung, Anreicherung, Überlagerung, Gewichtung, Nachbereitung, Fusion oder dergleichen erfolgen. Dabei können vorteilhaft in dem ersten und/oder in dem zweiten Betriebsmodus bestimmte oder ermittelte Ortungsinformationen mit/durch in dem zweiten bzw. in dem ersten Betriebsmodus bestimmten oder ermittelten Ortungsinformationen kombiniert werden. Vorteilhaft können somit Ortungsinformationen, die in einem der beiden Betriebsmodi bestimmt werden, mit Ortungsinformationen, die in dem entsprechend anderen Betriebsmodus bestimmt werden, kombiniert werden und somit eine vorteilhaft hohe Informationsdichte erhalten werden. Erfindungsgemäß werden die Ortungsinformationen, die in den beiden Betriebsmodi bestimmt werden, durch die Auswertevorrichtung kombiniert.

Derart können in dem ersten Betriebsmodus des Ortungssystems ermittelte richtungs- und/oder ortsaufgelöste Ortungsinformation, die aus richtungs- und/oder ortsaufgelösten Ortungsdaten ohne Umpositionieren der Ortungsvorrichtung ermittelt werden, mit in dem zweiten Betriebsmodus ermittelten, zumindest dreidimensionalen Ortungsinformationen, in denen Positionsdaten der Ortungsvorrichtung bezogen auf die Untersuchungsoberfläche mit zu den entsprechenden Positionen zugehörigen Ortungsdaten korreliert sind, kombiniert werden. Mit anderen Worten wird somit ermöglicht, Ortungsinformationen, die ohne Umpositionieren der Ortungsvorrichtung ermittelt werden, mit Ortungsinformationen zu kombinieren, die in Folge eines Umpositionierens der Ortungsvorrichtung erhalten werden. Auf diese Weise kann besonders vorteilhaft ein Ortungssystem realisiert werden, das in zwei Betriebsmodi ermittelte Ortungsinformationen zu einer Gesamtortungsinformation kombiniert. Ferner wird eine intuitive Anwendung des Ortungssystems derart ermöglicht.

In einem Anwendungsfall steht dem Benutzer des Ortungssystems somit ein Ortungssystem zur Verfügung, das ermöglicht, zunächst mit lediglich einer Messung ohne Umpositionieren der Ortungsvorrichtung bezogen auf die Untersuchungsoberfläche eine in einem gewissen Erfassungsbereich der Ortungsvorrichtung richtungs- und/oder ortsaufgelöste Ortungsinformation zu erhalten. Eine Aussage, ob beispielsweise an einer gewählten Position auf der Untersuchungsoberfläche eine Bohrung ohne Beschädigung von unter der Untersuchungsoberfläche verborgenen Untersuchungsgegenständen durchgeführt werden kann, ist unmittelbar und mit hoher Zuverlässigkeit aus der richtungs- und/oder ortsaufgelösten Ortungsinformation ableitbar. Ferner können in der Nähe der gewählten Position befindliche Ortungsobjekte bereits erkannt werden. Bevorzugt werden diese im Wesentlichen lokalen Ortungsinformationen, die ohne Umpositionieren der Ortungsvorrichtung erhalten werden, in einer Karte dargestellt. Insbesondere können in der Nähe der gewählten Position befindliche Ortungsobjekte am Rande der Karte, entsprechend dem Rand des Erfassungsbereichs des Ortungssensors, angedeutet werden. Dadurch wird dem Benutzer eine Risiko- oder Gefahrenabschätzung erleichtert.

Interessiert sich der Benutzer daneben für einen zumindest teilweise großflächigen Überblick über die unter der Untersuchungsoberfläche verborgenen Ortungsobjekte, so führt er die Ortungsvorrichtung in einer freien Bewegung, beispielsweise in einer freien Wischbewegung, über die zu untersuchenden interessierenden Bereiche der Untersuchungsoberfläche. Die dabei im zweiten Betriebsmodus des Ortungssystems ermittelten Ortungsdaten können vorteilhaft ebenfalls in Form einer zumindest zweidimensionalen Karteninformation an den Benutzer des Ortungssystems ausgegeben werden.

Erfindungsgemäß lassen sich nun die in den beiden Betriebsmodi ermittelten Ortungsinformationen von der Auswertevorrichtung kombinieren. In einer bevorzugten Ausführungsform kann somit eine kombinierte Ortungsinformation (Gesamtortungsinformation), die die in beiden Betriebsmodi ermittelten Ortungsinformationen berücksichtigt realisiert und beispielsweise als zweidimensionale Karteninformation, insbesondere als Karte oder als zweidimensionales Abbild der Ortungsverhältnisse unter der Untersuchungsoberfläche, ausgegeben werden. Die kombinierte zumindest zweidimensionale Karteninformation oder das Abbild weist bevorzugt eine hohe Informationsdichte auf, mittels der ein Benutzer besonders gut bei der Interpretation der zumindest zweidimensionalen Karteninformation unterstützt werden kann. Ferner ist eine Bedienung des Ortungssystems intuitiv und mit hohem Bedienkomfort möglich, sodass ein geringer Schulungs- oder Einlernaufwand zur Benutzung des Ortungssystems erforderlich ist.

In einer vorteilhaften Ausführungsform des erfindungsgemäßen Ortungssystems, insbesondere eines handgehaltenen Ortungsgeräts, ist die Auswertevorrichtung dazu vorgesehen, bereits bestimmte Ortungsinformationen bei einem Umpositionieren der Ortungsvorrichtung, insbesondere bei einem erneuten Überfahren eines Bereichs der Untersuchungsoberfläche, zu ergänzen und/oder zu aktualisieren und/oder zu verfeinern und/oder zu überschreiben.

Vorteilhaft kann somit eine Ortungsinformation, insbesondere eine zumindest zweidimensionale Karteninformation, bevorzugt Bereiche einer zumindest zweidimensionalen Karteninformation, bei einer Ortung von Ortungsobjekten, die dem Bereich der Karteninformation zuzuordnen sind, ergänzt und/oder verfeinert und/oder aktualisiert und/oder überschrieben werden. Dadurch kann eine hohe Informationsdichte und/oder Qualität und/oder Aktualität der Ortungsinformation, insbesondere der zumindest zweidimensionalen Karteninformation, erreicht werden. Ferner kann ein besonders intuitiv interpretierbares Ortungssystem bereitgestellt werden. Bevorzugt wird die ergänzte und/oder verfeinerte und/oder aktualisierte und/oder überschriebene Ortungsinformation unmittelbar, d.h. in Echtzeit, an den Benutzer ausgegeben.

Unter "ergänzen" und "verfeinern" soll in diesem Zusammenhang insbesondere verstanden werden, dass die Auswertevorrichtung bereits ermittelte Ortungsinformationen, beispielsweise aus der Speichervorrichtung ausgelesene Ortungsinformationen, unter Verwendung aktueller Ortungsinformationen fortschreibt und/oder ergänzt. Insbesondere neue Ortungsinformationen für noch nicht zugeordnete Positionen der Ortungsvorrichtung werden zu den bestehenden Ortungsinformationen hinzufügt. Insbesondere kann die Ergänzung zu einer Verfeinerung, d.h. in einer Verbesserung der Auflösung der Ortungs- und/oder Positionsdaten und somit der Ortungsinformation führen oder dazu genutzt werden. Unter "verfeinern" soll in diesem Zusammenhang insbesondere verstanden werden, weitere Ortungsinformationen bereitzustellen und/oder weitere Ortungsinformationen mit bereits vorhandenen Ortungsinformationen zu fusionieren und/oder synthetische Daten und/oder halbsynthetische Daten für die Ortungsinformation bereitzustellen. Vorzugsweise erhöht die Auswertevorrichtung bei einer erneuten oder weiteren Ortung eine Informationsdichte und/oder eine Richtungs- und/oder Ortsauflösung und löst feinere Details auf. Vorzugsweise ergänzt oder verfeinert die Auswertevorrichtung die Ortungsinformationen, insbesondere Karteninformationen, in Echtzeit im Sinne dieser Anmeldung.

Unter "aktualisieren" soll in diesem Zusammenhang insbesondere verstanden werden, dass die Auswertevorrichtung bereits ermittelte Ortungsinformationen, beispielsweise aus der Speichervorrichtung ausgelesene Ortungsinformationen, unter Verwendung aktueller, insbesondere zeitlich aktuellerer Ortungsinformationen überschreibt. Somit legt die Auswertevorrichtung einen neuen, veränderten, insbesondere aktuelleren Wert für eine Position der Ortungsvorrichtung fest, sofern sich die Ortungsinformationen im Vergleich zu den aus der Speichervorrichtung ausgelesenen Ortungsinformationen geändert haben. Insbesondere kann die Aktualisierung zu einer Anpassung der Ortungs- und/oder Positionsdaten und somit der Ortungsinformation, die vorteilhaft zeitliche Veränderungen berücksichtigt, führen oder dazu genutzt werden. Vorzugsweise aktualisiert die Auswertevorrichtung die Ortungsinformationen, insbesondere Karteninformationen, in Echtzeit.

Unter "überschreiben" soll in diesem Zusammenhang insbesondere verstanden werden, dass die Auswertevorrichtung bereits ermittelte Ortungsinformationen, beispielsweise aus der Speichervorrichtung ausgelesene Ortungsinformationen, mittels neu ermittelter Ortungsinformationen überschreibt, d.h. ersetzt. Ein neuer Wert für eine Position der Ortungsvorrichtung wird festgelegt, unabhängig davon, ob sich die Ortungsinformationen im Vergleich zu bereits ermittelten Ortungsinformationen geändert haben. Insbesondere kann die Überschreibung zu einer Veränderung oder Anpassung der Ortungs- und/oder Positionsdaten und somit der Ortungsinformation führen oder dazu genutzt werden. Vorzugsweise überschreibt die Auswertevorrichtung die Ortungsinformationen, insbesondere Karteninformationen, in Echtzeit.

Ein Benutzer kann somit auf besonders einfache Weise ein Ortungsergebnis, d.h. eine Ortungsinformation, in einem für ihn besonders relevanten Bereich verbessern, verfeinern und/oder aktualisieren. Es kann ein besonders effizienter Ortungsvorgang erreicht werden, indem ein Benutzer des Ortungssystems gezielt relevante Bereiche auf Ortungsobjekte hin untersuchen kann. Insbesondere ist es somit auch vorteilhaft möglich, Ortungsinformationen, insbesondere eine zumindest zweidimensionale Karteninformation, genauer, d.h. detaillierter und feiner aufgelöst, und/oder aktualisiert dazustellen, indem man wiederholt oder erneut mit der Ortungsvorrichtung über einen zu untersuchenden Bereich auf der Untersuchungsoberfläche fährt. Ferner ist es auf diese Weise auch möglich, redundante Ortungsdaten zu erfassen.

Es kann ein besonders effizient und intuitiv nutzbares Ortungssystem, insbesondere Ortungsgerät, bereitgestellt werden, da das Ortungssystem in kurzer Zeit umfassende, bevorzugt hochaufgelöste Ortungsinformationen erfassen kann. Dadurch ist ein besonders effizienter Ortungsprozess realisierbar. Ferner können unterschiedliche Merkmale der Ortungsobjekte erfasst und zu einer Klassifizierung der Ortungsobjekte verwendet werden. Es kann ein besonders vielseitiges Ortungssystem, insbesondere Ortungsgerät, mit einem hohen Bedienkomfort bereitgestellt werden.

In einer vorteilhaften Ausführungsform des erfindungsgemäßen Ortungssystems, insbesondere eines handgehaltenen Ortungsgeräts, weist die Auswertevorrichtung ferner ein Datenverbesserungsmodul auf. Das Datenverbesserungsmodul kann zu einem Ausgleich von Werteschwankungen mittels statistischer Methoden und/oder zu einer Verbesserung eines Kontrasts vorgesehen sein. Dieses Datenverbesserungsmodul kann zu diesem Zweck eine Vielzahl von Berechnungsroutinen aufweisen, die insbesondere statistische Funktionen, beispielsweise zur Berechnung statistischer Momente, umfassen. Bevorzugt kann das Datenverbesserungsmodul eingesetzt werden, beim Ergänzen und/oder Verfeinern und/oder Aktualisieren von Ortungsinformationen statistische Auswertungen wie beispielsweise Gewichtungen, Mittelwertberechnungen von Daten oder dergleichen durchzuführen und somit eine verbesserte Auswertung von Ortungsdaten zu gewährleisten.

In einer vorteilhaften Ausführungsform des erfindungsgemäßen Ortungssystems, insbesondere eines handgehaltenen Ortungsgeräts, ist die Auswertevorrichtung dazu vorgesehen, bereits im ersten Betriebsmodus bestimmte oder ermittelte Ortungsinformationen bei einem Umpositionieren der Ortungsvorrichtung, insbesondere bei einem erneuten Überfahren eines Bereichs der Untersuchungsoberfläche, zu ergänzen und/oder zu aktualisieren und/oder zu verfeinern und/oder zu überschreiben.

Auf diese Weise kann vorteilhaft ein Ortungssystem, insbesondere Ortungsgerät, realisiert werden, bei dem in zwei Betriebsmodi ermittelte Ortungsinformationen zu einer Gesamtortungsinformation kombiniert werden. Bereits im ersten Betriebsmodus an einer Ausgangsposition bestimmte, d.h. ermittelte, Ortungsinformationen werden bei einem erneuten Überfahren dieser Ausgangsposition mittels der Ortungsvorrichtung vorteilhaft ergänzt und/oder aktualisiert und/oder verfeinert und/oder überschrieben. Insbesondere können derart Ortungsinformationen, die richtungs- und/oder ortsaufgelöst im Wesentlichen lokal ohne Umpositionieren der Ortungsvorrichtung des Ortungssystems ermittelt werden, in Folge eines Umpositionierens der Ortungsvorrichtung durch weitere Ortungsinformationen ergänzt und/oder aktualisiert und/oder verfeinert und/oder überschrieben werden.

Dem Benutzer des Ortungssystems steht somit vorteilhaft ein Ortungssystem, insbesondere Ortungsgerät, zur Verfügung, das auf eine besonders einfache, übersichtliche und intuitiv erfassbare Weise Ortungsinformationen ermittelt und ausgibt. Insbesondere in Verbindung mit einer Ausgabe der Ortungsinformation in Form einer zumindest zweidimensionalen Karteninformation, bevorzugt einer Karte, lassen sich die im Wesentlichen lokal, d.h. ohne Umpositionieren der Ortungsvorrichtung, ermittelten Ortungsinformationen, vorteilhaft mit im Rahmen eines großflächigeren Ortens in Folge des Umpositionierens der Ortungsvorrichtung ermittelten Ortungsinformationen erweitern, verfeinern und/oder aktualisieren. Der stets aktuellen, hochauflösenden Karteninformation, insbesondere Karte, ist somit auf intuitive und einfache Weise unmittelbar zu entnehmen, an welchen Stellen der bereits untersuchten Untersuchungsoberfläche Ortungsobjekte detektiert werden.

Insbesondere können auf diese Weise ferner ergänzende oder redundante Ortungsinformationen erfasst und mit im ersten und/oder zweiten Betriebsmodus ermittelten Ortungsinformationen kombiniert werden. Folglich kann eine hohe Ortungsqualität und Informationsdichte erreicht werden. Das Ortungssystem kann in kurzer Zeit eine große Zahl von Ortungsinformationen erfassen, wodurch ein besonders effizienter Ortungsprozess erreicht werden kann. Ferner können unterschiedliche Merkmale der Ortungsobjekte erfasst und zu einer Klassifizierung der Ortungsobjekte verwendet werden. Es kann ein besonders vielseitiges Ortungssystem, insbesondere Ortungsgerät, mit einem hohen Bedienkomfort bereitgestellt werden.

In einer vorteilhaften Ausführungsform des erfindungsgemäßen Ortungssystems, insbesondere eines handgehaltenen Ortungsgeräts, ist die Auswertevorrichtung dazu vorgesehen, in dem ersten und/oder zweiten Betriebsmodus des Ortungssystems die Ortungsdaten und/oder die Ortungsinformationen zu interpolieren und/oder zu extrapolieren.

Auf diese Weise kann besonders schnell eine insbesondere umfangreiche Ortungsinformation, insbesondere eine zweidimensionale Karteninformation, bereitgestellt werden. Fehlmessungen können ausgeglichen werden und es kann eine hohe Qualität der Ortungsinformation erreicht werden.

Unter "interpolieren" soll insbesondere verstanden werden, dass die Auswertevorrichtung ausgehend von vorliegenden, insbesondere in der Speichervorrichtung abgelegten, Ortungsdaten und/oder Ortungsinformationen mittels einer zweckmäßigen Berechnungs- und/oder Gewichtungsvorschrift Zwischenwerte berechnet. Diese Zwischenwerte sind räumlich zwischen den vorliegenden Ortungsdaten bzw. Ortungsinformationen liegenden Punkten (oder auch Feldern einer in Komponenten oder Pixel zergliederten Karteninformation) zuordenbar. Unter "extrapolieren" soll in diesem Zusammenhang insbesondere verstanden werden, dass die Auswertevorrichtung ausgehend von vorliegenden, insbesondere in der Speichervorrichtung abgelegten, Ortungsdaten und/oder Ortungsinformationen innerhalb eines räumlichen Bereichs mittels einer zweckmäßigen Berechnungs- und/oder Gewichtungsvorschrift Werte berechnet, die Punkten räumlich außerhalb dieses Bereichs zuordenbar sind.

Ferner kann die Auswertevorrichtung in einer vorteilhaften Ausführungsform des Ortungssystems dazu vorgesehen sein, in dem ersten und/oder zweiten Betriebsmodus des Ortungssystems zumindest einen Teil der Ortungsdaten und/oder der Ortungsinformationen bei einer Erzeugung und/oder bei einer Ergänzung, Verfeinerung, Aktualisierung oder Überschreibung der vorhandenen Ortungsinformationen zu gewichten. Dadurch kann eine Redundanz von Ortungsdaten und/oder Ortungsinformationen, insbesondere von bereits ermittelten und neuen Ortungsdaten und/oder Ortungsinformationen, in vorteilhafter Weise genutzt werden, um eine hohe Qualität der Ortungsinformationen, insbesondere einer zumindest zweidimensionalen Karteninformation, zu erreichen. Unter gewichten soll in diesem Zusammenhang insbesondere verstanden werden, dass Daten bei der Erzeugung und/oder bei einer Ergänzung, Verfeinerung, Aktualisierung oder Überschreibung mit einem Gewichtungsfaktor multipliziert werden. Vorzugsweise bestimmt die Auswertevorrichtung die Gewichtung abhängig von einer Datenqualität, die bevorzugt durch die Auswertung redundanter Daten ermittelt wird. Der Gewichtungsfaktor kann insbesondere auch null sein. In diesem Fall bleiben Daten im Rahmen der Ergänzung, Verfeinerung, Aktualisierung oder Überschreibung unberücksichtigt, beispielsweise Daten, die als ein Messfehler eingestuft werden. Somit kann die Auswertevorrichtung Ortungsdaten und/oder Ortungsinformationen bei einer Erzeugung, bei einer Ergänzung, bei einer Verfeinerung, bei einer Aktualisierung oder bei einer Überschreibung auch ausschließen. Bevorzugt kann somit eine Ortungsinformation auch von einer Ausgabe an einen Benutzer des Ortungssystems, insbesondere beispielsweise einer Darstellung mittels der Anzeigevorrichtung, ausgeschlossen werden.

In einer vorteilhaften Ausführungsform des erfindungsgemäßen Ortungssystems, insbesondere eines handgehaltenen Ortungsgeräts, sind die Betriebsmodi des Ortungssystems manuell wählbar.

Auf diese Weise kann ein Benutzer des Ortungssystems einen zu verwendenden Betriebsmodus des Ortungssystems selbst wählen und somit vorteilhaft einer Anwendung und/oder einer Messaufgabe und/oder einer Messsituation anpassen. Vorteilhaft kann ein besonders flexibel einsetzbares und zielgerichtet betreibbares Ortungssystem realisiert werden.

Möchte ein Benutzer beispielsweise eine richtungs- und/oder ortsauflösende, aber dennoch im Wesentlichen lokale Ortungsinformation um einen definierten Ausgangspunkt herum, beispielsweise zur Prüfung, ob an diesem Ausgangspunkt eine Bohrung durchgeführt werden kann, so kann er selbst den ersten Betriebsmodus des Ortungssystems einstellen. Dazu wählt der Benutzer beispielsweise in einem Menü oder mittels eines Bedienelementes einer Eingabevorrichtung des Ortungssystems, insbesondere des Ortungsgeräts, den ersten Betriebsmodus aus. Möchte der Benutzer allerdings eine sich auf eine großflächigere Untersuchungsoberfläche beziehende Ortungsinformation, so wählt er manuell, beispielsweise ebenfalls in einem Menü oder mittels eines Bedienelements einer Eingabevorrichtung des Ortungssystems, insbesondere des Ortungsgeräts, den zweiten Betriebsmodus. Anschließend kann der Benutzer mittels Umpositionieren der Ortungsvorrichtung bezogen auf die Untersuchungsoberfläche die insbesondere großflächige Untersuchung durchführen.

Erfindungsgemäß ist eine Steuervorrichtung dazu vorgesehen ist, einen Betriebsmodus automatisch zu wählen und/oder automatisch zwischen Betriebsmodi des Ortungssystems zu wechseln.

Auf diese Weise kann vorteilhaft eine Auswahl eines zu benutzenden Betriebsmodus des Ortungssystems automatisch durch das Ortungssystems, insbesondere durch die Steuervorrichtung des Ortungssystems, durchgeführt werden. Somit kann bevorzugt eine optimale Anpassung des Betriebsmodus an eine Anwendung und/oder eine Messaufgabe und/oder eine Messsituation durchgeführt werden. Besonders bevorzugt kann somit eine Fehlbedienung durch einen unerfahrenen Benutzer ausgeschlossen werden. Ferner wird ein Betrieb des Ortungssystems beschleunigt und eine intuitive Bedienung des Ortungssystems gefördert.

Bevorzugt kann dem Ortungssystem durch einen Benutzer des Ortungssystems vorgegeben werden, ob eine automatische oder manuelle Auswahl bzw. ein automatischer oder manueller Wechsel zwischen Betriebsmodi zu erfolgen hat. Diese Vorgabe erfolgt beispielsweise unter Verwendung der Eingabevorrichtung.

Erfindungsgemäß ist die Steuervorrichtung dazu vorgesehen, bei Erkennen einer Positionsänderung und/oder einer Ausrichtungsänderung der Ortungsvorrichtung bezogen auf die Untersuchungsoberfläche in den zweiten Betriebsmodus zu wechseln.

Bevorzugt wird eine Positionsänderung und/oder eine Ausrichtungsänderung der Ortungsvorrichtung mittels des Positionssensors erkannt oder detektiert. Auf diese Weise kann vorteilhaft realisiert werden, dass ein Wechsel von dem ersten Betriebsmodus auf den zweiten Betriebsmodus ohne Eingabe eines Benutzers lediglich in Folge des Umpositionierens der Ortungsvorrichtung erfolgt. Alternativ oder zusätzlich kann eine Positionsänderung und/oder eine Ausrichtungsänderung der Ortungsvorrichtung auch mittels eines Beschleunigungssensors erkannt oder detektiert werden, der beispielsweise auf eine Umpositionierungsbeschleunigung und/oder eine Rotationsbeschleunigung der Ortungsvorrichtung sensitiv ist. Ferner ist denkbar, eine Positionsänderung und/oder eine Ausrichtungsänderung der Ortungsvorrichtung auch unter Verwendung der Ortungsvorrichtung zu erkennen oder zu detektieren, beispielsweise in Folge einer Analyse, insbesondere eines Vergleichs, von hintereinander detektierten Ortungsdaten.

Vorteilhaft wird einem Benutzer des Ortungssystems somit eine besonders benutzerfreundliche und intuitive Bedienung des Ortungssystems ermöglicht. Insbesondere kann ein Benutzer zunächst um einen gewählten Ausgangspunkt herum eine richtungs- und/oder ortsaufgelöste Ortung unter Verwendung des ersten Betriebsmodus durchführen. Diese Ortung findet im Wesentlichen lokal statt, d.h. ohne Umpositionieren der Ortungsvorrichtung. Anschließend wird durch Verfahren oder Bewegen der Ortungsvorrichtung in eine beliebige Richtung, insbesondere ein Umpositionieren der Ortungsvorrichtung, ein Wechsel des Ortungssystems in den zweiten Betriebsmodus initiiert. Unter Verwendung des zweiten Betriebsmodus ist es dem Benutzer anschließend möglich, eine zumindest zweidimensionale Karteninformation durch sukzessives Überstreichen der Untersuchungsoberfläche mit der Ortungsvorrichtung zu generieren. Dabei wird die bereits im ersten Betriebsmodus ermittelte, richtungs- und/oder ortsaufgelöste Ortungsinformation vorteilhaft erweitert, verfeinert, aktualisiert oder überschrieben.

In einer bevorzugten Ausführungsform des Ortungssystems, insbesondere des Ortungsgeräts, ist die Steuervorrichtung vorgesehen, bei Erkennen einer Positionsänderung und/oder einer Ausrichtungsänderung der Ortungsvorrichtung bezogen auf die Untersuchungsoberfläche fließend von dem ersten Betriebsmodus in den zweiten Betriebsmodus zu wechseln. Unter "fließend von dem ersten Betriebsmodus in den zweiten Betriebsmodus zu wechseln" ist insbesondere zu verstehen, dass ein Wechsel der Betriebsmodi des Ortungssystem durch einen Benutzer des Ortungssystems vorteilhaft nicht bemerkt wird. In einer beispielhaften Ausführungsform ortet das Ortungssystem zunächst im ersten Betriebsmodus richtungs- und/oder ortsaufgelöst und gibt die Ortungsinformationen als eine zweidimensionale Karteninformation, insbesondere eine Karte, an einen Benutzer des Ortungssystems aus. In Folge eines Erkennens einer Positionsänderung der Ortungsvorrichtung initiiert die Steuervorrichtung einen Wechsel des Ortungssystems in den zweiten Betriebsmodus. Obgleich die Auswertevorrichtung anschließend im zweiten Betriebsmodus betrieben wird, ist dem Benutzer des Ortungssystems dieser Wechsel nicht erkenntlich. Die Ortungsinformationen, insbesondere die zweidimensionale Karteninformation, wird unverändert angezeigt, wobei lediglich nun im Rahmen des Umpositionierens der Ortungsvorrichtung untersuchte Bereiche der Untersuchungsoberfläche auf der Karteninformation ergänzt und/oder verfeinert und/oder aktualisiert und/oder überschrieben werden.

In einer vorteilhaften Ausführungsform des erfindungsgemäßen Ortungssystems, insbesondere eines handgehaltenen Ortungsgeräts, ist eine Empfindlichkeit des Erkennens einer Positionsänderung vorgebbar, insbesondere wählbar und/oder einstellbar.

Insbesondere kann die Empfindlichkeit des Erkennens einer Positionsänderung in Form einer Empfindlichkeitsschwelle des die Positionsänderung detektierenden Mittels vorgebbar, insbesondere wählbar und/oder einstellbar sein. Beispielsweise kann in einer Ausführungsform eine Empfindlichkeitsschwelle des Positionssensors und/oder des Beschleunigungssensors und somit die Empfindlichkeit des Erkennens einer Positionsänderung vorgebbar, insbesondere wählbar und/oder einstellbar sein.

Unter Verwendung einer vorgebbaren, insbesondere wählbaren und/oder einstellbaren Empfindlichkeit des Erkennens einer Positionsänderung kann realisiert werden, dass das Ortungssystem ein Umpositionieren der Ortungsvorrichtung bezogen auf die Untersuchungsoberfläche nur dann erkennt oder detektiert, wenn das Ausmaß der Positionsänderung mindestens der Empfindlichkeit des Erkennens einer Positionsänderung entspricht. Bevorzugt kann die Empfindlichkeit durch den Benutzer des Ortungssystems gewählt und/oder eingestellt werden, beispielsweise durch Wahl, Vorgabe oder Einstellung einer Empfindlichkeitsschwelle des die Positionsänderung detektierenden Mittels. Somit ist vorgebbar, ab welcher Empfindlichkeit eine Positionsänderung als ein Umpositionieren der Ortungsvorrichtung, insbesondere als ein Verfahren, Bewegen oder Scannen der Ortungsvorrichtung, erkannt oder detektiert wird. Positionsänderungen, deren Ausmaß die Empfindlichkeitsschwelle nicht übersteigen, werden folglich nicht erkannt. Die maximale Empfindlichkeit des Erkennens einer Positionsänderung, insbesondere eine minimale Empfindlichkeitsschwelle, ist technisch durch die kleinste, durch das die Positionsänderung detektierende Mittel, beispielsweise den Positionssensor, gerade noch auflösbare Positionsänderung der Ortungsvorrichtung limitiert. Vorteilhaft kann somit ausgeschlossen werden, dass die Steuervorrichtung des Ortungssystems einen Wechsel von dem ersten Betriebsmodus in den zweiten Betriebsmodus auf Grund geringfügiger, insbesondere unbeabsichtigter Positionsänderungen durchführt. Solche unbeabsichtigten Positionsänderungen der Ortungsvorrichtung können beispielsweise in Folge eines Handzitterns oder Verwackelns durch den Benutzer unvermeidlich auftreten.

Insbesondere kann die Empfindlichkeit auch durch bestimmte Parameter vorgegeben sein. In einer bevorzugten Ausführungsform ist beispielsweise eine Empfindlichkeit des Erkennens einer Positionsänderung der Ortungsvorrichtung durch die Größe oder den Durchmesser des Erfassungsbereichs des Ortungssensors gegeben. Somit kann vorteilhaft ein Wechsel von dem ersten in den zweiten Betriebsmodus dann erfolgen, wenn die erfolgte Umpositionierung der Ortungsvorrichtung einer Distanz auf der Untersuchungsoberfläche entspricht, die zumindest größer ist als die Größe oder der Durchmesser des Erfassungsbereichs der im ersten Betriebsmodus richtungs- und/oder ortsaufgelöst ortenden Ortungsvorrichtung.

Alternativ kann eine Empfindlichkeit auch dynamisch vorgebbar sein, beispielsweise in Abhängigkeit einer Umpositionierungsgeschwindigkeit oder einer Umpositionierungsbeschleunigung der Ortungsvorrichtung. Dazu können insbesondere Funktionen, insbesondere Auswertefunktionen, und/oder Tabellen vorgesehen sein, die einer dynamischen Größe eine entsprechende, zugehörige Empfindlichkeit zuordnen.

In einer vorteilhaften Ausführungsform des erfindungsgemäßen Ortungssystems, insbesondere eines handgehaltenen Ortungsgeräts, weist die Ortungsvorrichtung eine Aufsatzerkennungsvorrichtung auf, die dazu vorgesehen ist, ein Aufsetzen und/oder Abnehmen der Ortungsvorrichtung auf bzw. von einer Untersuchungsoberfläche zu detektieren.

Die Aufsatzerkennungsvorrichtung kann auf unterschiedlichste Weise realisiert sein, bevorzugt als optischer, mechanischer und/oder elektrischer Sensor, insbesondere beispielsweise als Taster oder Schalter, der in Folge eines Aufsetzens und/oder eines Abnehmens der Ortungsvorrichtung auf bzw. von der Untersuchungsoberfläche ein Ausgangssignal generiert. Ferner kann die Aufsatzerkennungsvorrichtung auch als Abstandssensor ausgebildet sein und einen Abstand zwischen Untersuchungsoberfläche und Ortungsvorrichtung detektieren und auswerten. In einer bevorzugten Ausführungsform des Ortungssystems kann die Aufsatzerkennungsvorrichtung auch mit dem Positionssensor als ein Bauteil oder besonders bevorzugt mit dem Positionssensor identisch ausgeführt sein. Alternativen oder zusätzlich kann die Aufsatzerkennungsvorrichtung auch unter Verwendung der Ortungsvorrichtung realisiert sein.

Vorteilhaft kann in Folge des Erkennens eines Aufsetzens und/oder eines Abnehmens der Ortungsvorrichtung auf bzw. von der Untersuchungsoberfläche eine Funktion des Ortungssystems gesteuert, insbesondere gestartet und/oder beendet werden. Derartige Funktionen können beispielsweise eine Wahl eines Betriebsmodus, das Ein- und/oder Ausschalten des Ortungssystems oder einer Beleuchtung der Ausgabevorrichtung, den Beginn oder das Ende einer Ortung, einer Messung, einer Aufzeichnung einer Messung oder dergleichen betreffen. Bevorzugt können insbesondere in Folge des Erkennens des Aufsetzen der Ortungsvorrichtung zuvor ermittelte Ortungsinformationen gelöscht werden und/oder ein neuer Datensatz in der Speichervorrichtung angelegt werden, in den zu ermittelnde Ortungsinformationen, insbesondere eine zumindest zweidimensionale Karteninformation, gespeichert werden können. Derart kann auf einfache Weise eine Reset- oder Neustart-Funktion für eine Messung des Ortungssystems realisiert werden.

Alternativ oder zusätzlich kann in Folge des Erkennens eines Abnehmens der Ortungsvorrichtung von der Untersuchungsoberfläche eine Speicherung und/oder Datenübertragung der ermittelten Ortungsinformationen, insbesondere einer zumindest zweidimensionalen Karteninformation, durchgeführt werden. Darüber hinaus ist auch eine "Hold"- oder "Freeze"-Funktion zum Unterbrechen eines Ortungsvorgangs und/oder zum Einfrieren einer an einen Benutzer des Ortungssystems ausgegebenen Karteninformation denkbar. Die "Hold"- oder "Freeze"-Funktion kann beispielsweise bei einem längeren Verweilen an derselben Position auf der Untersuchungsoberfläche oder beim Abnehmen der Ortungsvorrichtung von der Untersuchungsoberfläche aktiviert werden. Dies ist insbesondere dann vorteilhaft, wenn die Ortungsvorrichtung an schlecht einsehbaren Untersuchungsoberflächen verwendet wird.

Das Ortungssystem ist somit vorteilhaft vorgesehen, den Benutzer in der Anwendung des Ortungssystems durch Automatisierung von Funktionen des Ortungssystems zu unterstützten. Vorteilhaft wird auf diese Weise ein Bedienkomfort und somit eine Nutzerfreundlichkeit des Ortungssystems deutlich gesteigert. Zusätzlich kann eine fehlerhafte Anwendung des Ortungssystems durch einen Benutzer, insbesondere beispielsweise Datenverlust oder dergleichen, vorteilhaft vermieden werden.

Es sei angemerkt, dass vorgesehen sein kann, derartige Funktionen alternativ oder zusätzlich manuell durch den Benutzer aktivierbar oder deaktivierbar zu gestalten, sodass sie beispielsweise in Folge einer Eingabe oder Auswahl des Benutzers unter Verwendung der Eingabevorrichtung, insbesondere von Bedienelementen, des Ortungssystems aktiviert oder deaktiviert werden können.

In einer vorteilhaften Ausführungsform des erfindungsgemäßen Ortungssystems, insbesondere eines handgehaltenen Ortungsgeräts, ist die Steuervorrichtung dazu vorgesehen, bei Erkennen eines Aufsetzens der Ortungsvorrichtung auf eine Untersuchungsoberfläche mittels der Aufsatzerkennungsvorrichtung den ersten Betriebsmodus zu wählen und/oder zu aktivieren.

Unter Verwendung der Aufsatzerkennungsvorrichtung kann ein Bedienkomfort bei der Benutzung des Ortungssystems deutlich verbessert werden. Bevorzugt wird das Aufsetzen der Ortungsvorrichtung auf eine Untersuchungsoberfläche mittels der Aufsatzerkennungsvorrichtung detektiert und in Folge dessen der erste Betriebsmodus des Ortungssystems von der Steuervorrichtung gewählt. Auf diese Weise kann vorteilhaft realisiert werden, dass die Wahl des ersten Betriebsmodus ohne weiteres Zutun eines Benutzers lediglich in Folge eines Aufsetzens der Ortungsvorrichtung auf eine Untersuchungsoberfläche erfolgt.

Vorteilhaft wird einem Benutzer des Ortungssystems somit eine besonders benutzerfreundliche und intuitive Bedienung des Ortungssystems ermöglicht. Insbesondere kann ein Benutzer nach Aufsetzen der Ortungsvorrichtung unmittelbar mit der Ortung um einen gewählten Ausgangspunkt herum beginnen. Dabei wird unter Anwendung des ersten Betriebsmodus eine richtungs- und/oder ortsaufgelöste Ortung durchgeführt. Bevorzugt entspricht dabei der Ausgangspunkt genau der Stelle der Untersuchungsoberfläche, an der der Benutzer die Ortungsvorrichtung aufgesetzt hat.

Hat sich der Benutzer sodann einen Überblick über die an dieser Stelle detektierbaren Ortungsobjekte verschafft, kann er anschließend durch einfaches Bewegen der Ortungsvorrichtung in eine beliebige Richtung, insbesondere ein Umpositionieren oder Verfahren der Ortungsvorrichtung, einen Wechsel des Ortungssystems in den zweiten Betriebsmodus initiieren. Unter Verwendung des zweiten Betriebsmodus ist es dem Benutzer nun möglich, eine zumindest zweidimensionale Karteninformation durch sukzessives Überstreichen der Untersuchungsoberfläche mit der Ortungsvorrichtung zu generieren. Dabei wird die bereits im ersten Betriebsmodus ermittelte, richtungs- und/oder ortsaufgelöste Ortungsinformation bevorzugt erweitert, verfeinert, aktualisiert oder überschrieben.

In einer Ausführungsform des erfindungsgemäßen Ortungssystems, insbesondere eines handgehaltenen Ortungsgeräts, ist die Steuervorrichtung dazu vorgesehen, bei Erkennen eines Aufsetzens der Ortungsvorrichtung auf eine Untersuchungsoberfläche mittels der Aufsatzerkennungsvorrichtung einen Ortungsvorgang, insbesondere eine Messung, zu beginnen, insbesondere neu zu beginnen.

Auf diese Weise kann eine intuitiv nutzbare Reset- oder Neustart-Funktion zum erneuten Beginnen eines Ortungsvorgangs des Ortungssystems realisiert werden. Bevorzugt ist an den Beginn eines Ortungsvorgangs ein Abspeichern bereits ermittelter Ortungsdaten, Ortungsinformationen und/oder Karteninformationen gekoppelt. Ferner kann auch ein Löschen einer mittels einer Ausgabevorrichtung an einen Benutzer ausgegebenen Karteninformation an den Beginn eines Ortungsvorgangs gekoppelt sein.

In einer alternativen oder zusätzlichen Ausführungsform kann ein neuer Ortungsvorgang auch vom Ortungssystem unabhängig von einem Erkennen des Aufsetzens der Ortungsvorrichtung initiiert werden. Dies kann beispielsweise zur Vermeidung von die Integrität der Ortungsdaten, Ortungsinformationen und/oder der Karteninformationen beeinträchtigen Störeffekten durchgeführt werden. Insbesondere kann beispielsweise in Anwesenheit von die Ortung beeinflussenden Störsignalen oder in Folge einer detektierten zeitlichen Verschiebung der Positionsdaten, und damit einhergehend einer unzureichenden Genauigkeit der Positionsdaten, ein neur Ortungsvorgang initiiert werden.

In einer vorteilhaften Ausführungsform des erfindungsgemäßen Ortungssystems, insbesondere eines handgehaltenen Ortungsgeräts, ist zumindest eine Anzeigevorrichtung vorhanden, die dazu vorgesehen ist, eine Ortungsinformation darzustellen, insbesondere eine zumindest zweidimensionale Karteninformation, darzustellen.

Die Anzeigevorrichtung ist dazu vorgesehen, eine Ortungsinformation darzustellen. Bevorzugt ist die Anzeigevorrichtung dazu vorgesehen, zumindest einen Ausschnitt einer zweidimensionalen Karteninformation anzuzeigen, bevorzugt zumindest eine zweidimensionale Karteninformation oder Karte, darzustellen. Unter der Anzeigevorrichtung soll in diesem Zusammenhang also insbesondere eine Vorrichtung verstanden werden, die zu einer Übertragung und/oder Ausgabe von Anzeigedaten mit der Auswertevorrichtung verbunden ist. Bevorzugt weist die Anzeigevorrichtung ein flächiges, zweidimensionales Anzeigeelement auf, das zu einer bildhaften Anzeige bzw. Ausgabe von Informationen vorgesehen ist. Insbesondere ist die Anzeigevorrichtung auch ausgelegt, eine zumindest zweidimensionale Karteninformation unter Verwendung des flächigen Anzeigeelements darzustellen und somit auszugeben. Vorzugsweise ist die Anzeigevorrichtung zur Darstellung von Graustufen, besonders bevorzugt zur Darstellung von Farben vorgesehen. Es ist auch denkbar, dass die Anzeige 3D-fähig ausgebildet ist und Mittel umfasst, die dazu vorgesehen sind, bei einem Benutzer einen dreidimensionalen Bildeindruck zu vermitteln. Bevorzugt kann somit eine Karteninformation unter Verwendung einer Farb- oder Graustufencodierung an einen Benutzer des Ortungssystems ausgegeben werden. Durch Darstellung und Ausgabe der Ortungsinformation an einen Benutzer des Ortungssystems mittels der Anzeigevorrichtung kann ein besonders kompaktes, flexibles und unmittelbar einsetzbares Ortungssystem bereitgestellt werden.

Die Anzeigevorrichtung ist bevorzugt mit der Auswertevorrichtung zur Übermittlung von Ortungsinformationen, insbesondere Karteninformationen, verbunden. Die Anzeigevorrichtung kann dabei mittels Datenkabeln oder drahtlos mit der Auswertevorrichtung verbunden sein. Es ist denkbar, dass die Auswertevorrichtung in der Anzeigevorrichtung integriert ist oder dass die Anzeigevorrichtung auch mit Komponenten der Auswertevorrichtung als ein einzelnes Bauteil ausgeführt ist. Das flächige Anzeigeelement der Anzeigevorrichtung kann vorteilhaft beispielsweise als eine Flüssigkristallanzeige, eine OLED-Anzeige, eine LED-Anzeige, ein Bildschirm, der für eine andere geeignete Anzeigetechnik vorgesehen ist, oder als ein Projektor realisiert sein. Alternativ oder zusätzlich kann die Anzeigevorrichtung vorgesehen sein, eine Ortungsinformation mittels eines 3D-fähigen Anzeigeelements darzustellen.

In einer bevorzugten Ausführungsform ist die Anzeigevorrichtung dazu vorgesehen, zumindest zweidimensionale Karteninformationen in Form von insbesondere mehrdimensionalen Matrizen, Tabellen, Arrays, Listen oder dergleichen zu verarbeiten und zur Darstellung in Form einer Karte oder zumindest eines Ausschnitts einer Karte anzupassen. Die Anzeigevorrichtung ist insbesondere dazu vorgesehen ist, Ortungsinformationen in ein Darstellungsattribut zur bildhalten Wiedergabe umzusetzen, wie beispielsweise in eine Grauwertstufe, einen Grauwert eines Grauwerteverlaufs, eine Farbwertstufe, einen Farbwert eines Farbverlaufs, eine Helligkeitsstufe, einen Helligkeitswert eines Helligkeitsverlaufs, eine Sättigungsstufe oder einen Sättigungswert eines Sättigungsverlaufs und/oder ein Muster und/oder ein Symbol.

In einer Ausgestaltung kann eine Speichervorrichtung in der Anzeigevorrichtung integriert sein. Es ist ferner denkbar, dass die Anzeigevorrichtung als Teil der Ortungsvorrichtung ausgebildet ist. Es ist ebenso denkbar, dass die Anzeigevorrichtung getrennt von der Ortungsvorrichtung ausgebildet ist, und/oder dass das Ortungssystem eine weitere Anzeigevorrichtung umfasst, die getrennt von der Ortungsvorrichtung ausgebildet ist. Die Anzeigevorrichtungen können unterschiedlichen Ortungssensoren und/oder unterschiedlichen Betriebsmodi des Ortungssystems zugeordnet sein. Es ist weiterhin denkbar, dass das Ortungssystem zumindest eine Schnittstelle zu einer Anzeigevorrichtung aufweist, die als Teil einer externen Recheneinheit ausgebildet ist. Hier sind insbesondere elektronische Datenverarbeitungsgeräte denkbar, beispielsweise Computer, Mobiltelefone, Smartphones, Organizer, PDAs, Tablets, Laptops oder dergleichen.

Grundsätzlich ist auch denkbar, dass die Anzeigevorrichtung nur getrennt von dem Ortungsgerät ausgebildet ist und über eine drahtlose Verbindung zu einer Übermittlung von Ausgabewerten verbunden ist, beispielsweise über eine Punktzu-Punkt Verbindung, ad-hoc Verbindung, eine WLAN-Verbindung, eine Bluetooth-Verbindung oder dergleichen.

Ferner ist die Anzeigevorrichtung dazu vorgesehen, durch eine hohe Verarbeitungsrate und Darstellungsrate bei einem Benutzer des Ortungssystems den Eindruck zu erwecken, dass Ortungsdaten für einen mit dem Ortungssensor überfahrenen Bereich unmittelbar, bevorzugt in Echtzeit, ausgewertet und als Ortungs- und/oder Karteninformation dargestellt werden. Mit einer Darstellung in Echtzeit ist insbesondere gemeint, dass die geräteinterne Verarbeitungsdauer durch die Anzeigevorrichtung bis zur fertigen Darstellung der Ortungsinformation auf dem Anzeigeelement weniger als 2 Sekunden, bevorzugt weniger als 1 Sekunde, besonders bevorzugt weniger als 0.1 Sekunde beträgt.

Vorzugsweise ist die Anzeigevorrichtung vorgesehen, eine Ortungsinformation, insbesondere eine zumindest zweidimensionale Karteninformation, mittels des Anzeigeelements in einer zumindest im Wesentlichen maßstäblichen bildhaften Darstellung auszugeben. Unter einer bildhaften Anzeige soll in diesem Zusammenhang insbesondere eine optische, vorzugsweise maßstäbliche und positionsaufgelöste Wiedergabe der Ortungsdaten verstanden werden, die dazu vorgesehen ist, zumindest Umrisse der Ortungsobjekte für den Benutzer erkennbar zu machen. Bevorzugt ist die bildhafte Anzeige zu einer Interpretation durch einen menschlichen Betrachter vorgesehen und unabhängig von einem schwellenwert-basierten Detektionsvorgang. Vorzugsweise umfasst die Karteninformation aktuelle und gespeicherte Ortungsdaten, die für die bildhafte Anzeige aufbereitet worden sind. Grundsätzlich ist es denkbar, dass die Karteninformation synthetische Daten, wie beispielsweise ein Gitternetz, Symbole, Linien, Farbverfremdungen und/oder Schattierungen enthält. Die Anzeigevorrichtung ist ferner dazu vorgesehen, in einem Betriebszustand eine gesamte zweidimensionale Karteninformation, insbesondere in Form einer Karte, anzuzeigen.

In einer beispielhaften Ausführungsform kann ein angezeigter Ausschnitt einer Ortungsinformation, insbesondere einer zumindest zweidimensionalen Karteninformation, einen Abbildungsmaßstab aufweisen, der einem Verhältnis von Erstreckungen der Karteninformation im Anzeigeelement zu Erstreckungen eines zugeordneten Bereichs der Untersuchungsoberfläche entspricht. Der Abbildungsmaßstab weist vorteilhafterweise einen gleichen Abbildungsmaßstab für eine erste Dimension und für eine zweite Dimension auf. Besonders bevorzugt ist der Abbildungsmaßstab durch einen Benutzer des Ortungssystems veränderbar, sodass eine im Anzeigeelement dargestellte Karteninformation vergrößert oder verkleinert und somit gezoomt werden kann.

Alternativ oder zusätzlich sind auch andere Darstellungsmaßstäbe denkbar. Insbesondere können sowohl maßstäbliche als auch unmaßstäbliche Darstellungen zur Ausgabe an einen Benutzer des Ortungssystems verwendet werden.

Grundsätzlich ist es denkbar, dass die Anzeigevorrichtung zur Anzeige einer Ortungsrichtung, einer Ortungsgenauigkeit, einer eine Interpretation der Ortungsinformation vereinfachenden Symbolik, zur Anzeige von Bedienhinweisen oder dergleichen vorgesehen ist. Insbesondere kann zur Anzeige dieser Informationen zumindest ein getrennt von dem Anzeigeelement für die Ortungsinformation ausgebildetes weiteres Anzeigeelemente vorgesehen sein.

Insbesondere kann in einer bevorzugten Ausführungsform des Ortungssystems die Anzeigevorrichtung dazu vorgesehen sein, eine Ortungsrichtung eines Ortungsobjekts relativ zu dem Ortungssensor darzustellen. Diese Ortungsrichtung kann bevorzugt in Form eines Pfeiles oder unter Angabe eines Winkels und einer Distanz oder dergleichen dargestellt werden. Dadurch kann dem Benutzer ein Richtungshinweis, insbesondere die Ortungsrichtung, angezeigt und ausgegeben werden, in der sich zumindest ein Ortungsobjekt bezogen auf den Ortungssensor befindet. Somit kann ein Bereich der Untersuchungsoberfläche, in dem das Ortungsobjekt angeordnet ist, gezielt weiter untersucht werden. Die gesonderte Ausgabe einer Ortungsrichtung ermöglicht einen besonders effizienten Ortungsvorgang.

Es sei angemerkt, dass die Anzeigevorrichtung, insbesondere das Anzeigeelement, neben der Ausgabe von Ortungsinformationen ebenfalls vorgesehen ist, alle zur Bedienung und Steuerung des Ortungssystems relevanten, notwendigen und/oder sinnvollen Arbeitsparameter anzuzeigen.

In einer vorteilhaften Ausführungsform des erfindungsgemäßen Ortungssystems, insbesondere eines handgehaltenen Ortungsgeräts, ist die Anzeigevorrichtung dazu vorgesehen ist, mittels oder unter Verwendung des ersten Betriebsmodus bestimmte/ermittelte richtungs- und/oder ortsaufgelöste Ortungsinformationen als zumindest zweidimensionale Karteninformation darzustellen.

Erfindungsgemäß können die unter Verwendung der richtungs- und/oder ortsauflösenden Ortungsvorrichtung im ersten Betriebsmodus ermittelten richtungs- und/oder ortsaufgelösten Ortungsinformationen in Form einer zumindest zweidimensionalen Karteninformation, insbesondere als Karte, dargestellt werden. Vorteilhaft gibt die dargestellte zumindest zweidimensionale Karteninformation die Untersuchungsoberfläche im Erfassungsbereich der richtungs- und/oder ortsauflösenden Ortungsvorrichtung wieder. Bevorzugt handelt es sich bei der Darstellung um eine zumindest im Wesentlichen maßstäbliche bildhafte Darstellung der richtungs- und/oder ortsaufgelösten Ortungsinformation im Erfassungsbereich der richtungs- und/oder ortsauflösenden Ortungsvorrichtung. Vorzugsweise werden Ortungsinformationen somit optisch, vorzugsweise maßstäblich und richtungs- und/oder positionsaufgelöst wiedergegeben.

In einer bevorzugten Ausführungsform wird die zumindest zweidimensionale Karteninformation beispielsweise als zweidimensionale Karte oder als ein zweidimensionales Abbild der Ortungsverhältnisse unter der Untersuchungsoberfläche realisiert. Der Karte oder dem Abbild ist unmittelbar zu entnehmen, wo, d.h. insbesondere unter welchen Richtungen von der Ortungsvorrichtung aus gesehen, Ortungsobjekte detektiert werden. In einer bevorzugten Ausführungsform kann beispielsweise eine an einen Benutzer ausgegebene Karte ein maßstabgetreues 1:1-Abbild der unter der Ortungsvorrichtung verborgenen Ortungsverhältnisse wiedergeben. Auf diese Weise ist eine besonders einfache Übertragung von Positionen georteter Ortungsobjekte, die der Karte entnommen werden können, auf das Werkstück möglich. Ein in der Karte angezeigtes Ortungsobjekt befindet sich dann vom Benutzer aus gesehen genau an entsprechender Stelle unmittelbar hinter der Ortungsvorrichtung, verborgen unter der Untersuchungsoberfläche. Alternativ oder zusätzlich sind auch andere Darstellungsmaßstäbe denkbar. Insbesondere können sowohl maßstäbliche als auch unmaßstäbliche Darstellungen zur Ausgabe an einen Benutzer des Ortungssystems verwendet werden.

In einer beispielhaften Ausführungsform erfolgt die Darstellung der richtungs- und/oder ortsaufgelösten Ortungsinformation als zumindest zweidimensionale Karteninformation bevorzugt unter Verwendung von Grauwert- oder Farbverläufen.

Vorzugsweise kann die dargestellte zumindest zweidimensionale Karteninformation sowohl aktuell gemessene als auch gespeicherte Ortungsdaten umfassen, die für die bildhafte Anzeige aufbereitet worden sind. Grundsätzlich ist es denkbar, dass die Karteninformation synthetische Daten, wie beispielsweise ein Gitternetz, Symbole, Linien, Farbverfremdungen und/oder Schattierungen enthält.

Vorteilhaft ist es einem Benutzer des Ortungssystems somit möglich, eine auf intuitive Weise interpretierbare, zumindest zweidimensionale Karteninformation, insbesondere in Form einer Karte, mit richtungs- und/oder ortsaufgelösten Ortungsinformationen betreffend die Untersuchungsoberfläche um die Ortungsvorrichtung herum zu erhalten. Besonders vorteilhaft wird die Erstellung der zumindest zweidimensionalen Karteninformation mit richtungs- und/oder ortsaufgelösten Ortungsinformationen betreffend die Untersuchungsoberfläche um die Ortungsvorrichtung herum ohne Umpositionieren der Ortungsvorrichtung in Bezug zur Untersuchungsoberfläche realisiert. Mit nur lediglich einer Messung ohne Umpositionieren der Ortungsvorrichtung bezogen auf die Untersuchungsoberfläche erhält der Benutzer des Ortungssystems daher eine übersichtliche, intuitiv und einfach interpretierbare, zumindest zweidimensionale Karteninformation. Eine Aussage, ob beispielsweise an der gewählten Position auf der Untersuchungsoberfläche eine Bohrung ohne Beschädigung von unter der Untersuchungsoberfläche verborgenen Untersuchungsgegenständen durchgeführt werden kann, ist unmittelbar und mit hoher Zuverlässigkeit aus Darstellung der zumindest zweidimensionalen Karteninformation ableitbar. Ferner können aus der Darstellung der zumindest zweidimensionalen Karteninformation auf einfache Weise in der Nähe der gewählten Position befindliche Ortungsobjekte bereits entnommen werden, sodass einem Benutzer eine Risiko- oder Gefahrenabschätzung erleichtert wird.

In einer vorteilhaften Ausführungsform des erfindungsgemäßen Ortungssystems, insbesondere eines handgehaltenen Ortungsgeräts, ist die Anzeigevorrichtung dazu vorgesehen, mittels oder unter Verwendung des zweiten Betriebsmodus bestimmte Ortungsinformationen, insbesondere dreidimensionale Ortungsinformationen, als zumindest zweidimensionale Karteninformation darzustellen.

Erfindungsgemäß können die im zweiten Betriebsmodus ermittelten Ortungsinformationen, insbesondere zumindest dreidimensionale Ortungsinformationen, in Form einer zumindest zweidimensionalen Karteninformation, insbesondere als zumindest zweidimensionale Karte, dargestellt werden. Vorteilhaft gibt die dargestellte zumindest zweidimensionale Karteninformation die Untersuchungsoberfläche hinsichtlich des durch Umpositionieren der Ortungsvorrichtung untersuchten Bereichs der Untersuchungsoberfläche wieder. Bevorzugt umfasst die dargestellte zumindest zweidimensionale Karteninformation zumindest dreidimensionale Ortungsinformationen, in denen Ortungsdaten mit zweidimensionalen Positionsdaten der Ortungsvorrichtung bezogen auf die Untersuchungsoberfläche zum Ortungszeitpunkt korreliert sind. Die zumindest dreidimensionale Ortungsinformation kann insbesondere auf eine Messung unmittelbar bezogene Informationen oder Messwerte zumindest eines Ortungssensors betreffen, beispielsweise Amplituden, Phasenlagen, Relaxationszeiten oder dergleichen. Alternativ kann die Ortungsinformation der Karteninformation auch interpretierte und/oder aufbereitete Informationen wie Richtungsinformationen, qualitative Signalstärken eines Ortungssignals, Tiefeninformationen oder dergleichen betreffen. Bevorzugt handelt es sich bei der Darstellung um eine zumindest im Wesentlichen maßstäbliche bildhafte Darstellung der Ortungsinformationen. Vorzugsweise werden Ortungsinformationen somit optisch, vorzugsweise maßstäblich und richtungs- und/oder positionsaufgelöst wiedergegeben. In einer beispielhaften Ausführungsform kann ein angezeigter Ausschnitt der Ortungsinformation, insbesondere der zumindest zweidimensionalen Karteninformation, einen Abbildungsmaßstab aufweisen, der einem Verhältnis von Erstreckungen der Karteninformation im Anzeigeelement zu Erstreckungen eines zugeordneten Bereichs der Untersuchungsoberfläche entspricht. Der Abbildungsmaßstab kann einen gleichen Abbildungsmaßstab für eine erste Richtung und für eine zweite Richtung aufweisen. In einer beispielhaften Ausführungsform erfolgt die Darstellung der zumindest dreidimensionalen Ortungsinformation in Form der zumindest zweidimensionalen Karteninformation bevorzugt unter Verwendung von Grauwert- oder Farbverläufen. Bevorzugt ist der zumindest zweidimensionalen Karteninformation oder des zweidimensionalen Abbilds der Ortungsverhältnisse unter der Untersuchungsoberfläche unmittelbar zu entnehmen, wo, d.h. insbesondere unter welchen Richtungen, insbesondere von der Ortungsvorrichtung aus gesehen, und/oder an welchen Positionen auf der Untersuchungsoberfläche Ortungsobjekte detektiert werden. Vorzugsweise kann die zumindest zweidimensionale Karteninformation dazu sowohl aktuelle als auch gespeicherte Ortungsdaten umfassen, die für die bildhafte Anzeige aufbereitet worden sind. Grundsätzlich ist es denkbar, dass die Karteninformation synthetische Daten, wie beispielsweise ein Gitternetz, Symbole, Linien, Farbverfremdungen und/oder Schattierungen enthält.

Unter Verwendung des zweiten Betriebsmodus ist es dem Benutzer möglich, eine zumindest zweidimensionale Karteninformation durch sukzessives Überstreichen der Untersuchungsoberfläche mit der Ortungsvorrichtung zu generieren. Vorteilhaft ist es einem Benutzer des Ortungssystems möglich, eine auf intuitive Weise interpretierbare, zweidimensionale Karte mit Ortungsinformationen betreffend die Untersuchungsoberfläche zu erhalten. Mit einer sukzessiven Vermessung einer Untersuchungsoberfläche in Folge eines Umpositionierens der Ortungsvorrichtung bezogen auf die Untersuchungsoberfläche erhält der Benutzer des Ortungssystems eine übersichtliche, intuitiv und einfach interpretierbare, zumindest zweidimensionale Karteninformation.

In einer vorteilhaften Ausführungsform des erfindungsgemäßen Ortungssystems, insbesondere eines handgehaltenen Ortungsgeräts, ist die Anzeigevorrichtung dazu vorgesehen, den angezeigten Ausschnitt der Karteninformation in Abhängigkeit von Positionsdaten und/oder in Abhängigkeit vom Betriebsmodus zu variieren.

Bevorzugt ist die Anzeigevorrichtung und/oder die Auswertevorrichtung dazu vorgesehen, einen anzuzeigenden Ausschnitt der Karteninformation in Abhängigkeit von den Positionsdaten und/oder in Abhängigkeit vom Betriebsmodus zu bestimmen. Dadurch kann ein besonders flexibel einsetzbares Ortungssystem bereitgestellt werden und Ortungsobjekte können besonders schnell geortet werden. Bevorzugt verschiebt oder vergrößert die Anzeigevorrichtung den angezeigten Ausschnitt, wenn die aktuell dem Ortungssensor zugeordneten Positionsdaten einen Randbereich des angezeigten Ausschnitts erreichen. Vorzugsweise weist der Randbereich eine Breite von 5 Prozent, bevorzugt 10 Prozent und besonders bevorzugt 15 Prozent einer Gesamterstreckung des angezeigten Ausschnitts auf.

In einer bevorzugten Ausführungsform des Ortungssystems ist die Anzeigevorrichtung dazu vorgesehen, den angezeigten Ausschnitt der Karteninformation in Bezug auf eine Position des Ortungssensors zu fixieren, insbesondere zu zentrieren. Somit wird die Karteninformation bei einer Umpositionierung der Ortungsvorrichtung auf der Untersuchungsoberfläche derart verschoben und/oder rotiert, dass die aktuelle Position des Ortungssensors und damit der Ortungsvorrichtung stets - bezogen auf den angezeigten Ausschnitt der Karteninformation - fixiert, insbesondere zentriert, ist. Unter "fixieren" oder "zentrieren" soll in diesem Zusammenhang insbesondere dynamisch fixieren bzw. zentrieren verstanden werden, d.h. während eines Ortungsvorgangs den angezeigten Ausschnitt der Karteninformation der Position des Ortungssensors nachführend. Mit anderen Worten ist die Position der Ortungsvorrichtung in der dem Benutzer dargestellten Karteninformation, insbesondere Karte, stets an einem vordefinierten Punkt fixiert, insbesondere mittig zentriert. Bei einer Umpositionierung der Ortungsvorrichtung auf der Untersuchungsoberfläche wird die dargestellte Karteninformation, insbesondere die Karte, zur Aufrechterhaltung dieser Fixierung, insbesondere Zentrierung, verschoben.

Auf diese Weise kann ein besonders intuitiv benutzbares Ortungssystem bereitgestellt werden, das eine intuitive und fehlerunanfällige Orientierung des Benutzers in vorteilhafter Weise unterstützt. Vorteilhaft wird dem Benutzer des Ortungssystems somit stets ein der tatsächlichen Position der Ortungsvorrichtung bezogen auf die Untersuchungsoberfläche intuitiv zuordenbarer Ausschnitt der Karteninformation ausgegeben.

Bevorzugt ist die fixierte, insbesondere zentrierte Position der Ortungsvorrichtung in der dem Benutzer dargestellten Karteninformation, insbesondere Karte, markiert. Eine derartige Markierung kann beispielsweise durch ein Symbol in Form eines Fadenkreuzes, eines Rechtecks, eines Quadrats oder dergleichen realisiert sein. Besonders bevorzugt wird die entsprechende Position durch eine maßstabsgetreue Repräsentation und/oder Silhouette des Ortungsgeräts und/oder der Ortungsvorrichtung und/oder des Ortungssensors und/oder des aktiven Sensorbereiches des Ortungssensors wiedergegeben. Ferner ist denkbar, die fixierte und/oder zentrierte Darstellung betreffende Parameter der Anzeige durch einen Benutzer einstellbar und/oder wählbar zu gestalten. Insbesondere kann derart beispielsweise ein Koordinatenpaar frei eingestellt werden, das definiert, an welcher Stelle des Anzeigeelements die Position des Ortungssensors und damit der Ortungsvorrichtung bezogen auf den angezeigten Ausschnitt der Karteninformation fixiert und dargestellt wird.

In einer bevorzugten Ausführungsform des Ortungssystems ist die Anzeigevorrichtung dazu vorgesehen, eine aktuelle Position des Ortungssensors entsprechend einer Umpositionierung der Ortungsvorrichtung bezogen auf die Untersuchungsoberfläche in dem angezeigten Ausschnitt der Karteninformation nachzuführen. Somit kann ein Benutzer des Ortungssystems die aktuelle Position der Ortungsvorrichtung unmittelbar mit dem angezeigten Ausschnitt der Karteninformation korrelieren, da eine markierte Position des Ortungssensors auf der angezeigten Karteninformation in Abhängigkeit der Umpositionierung der Ortungsvorrichtung bezogen auf die Untersuchungsoberfläche verändert wird. Bevorzugt bleibt dabei der angezeigte Ausschnitt der Karteninformation im Wesentlichen erhalten, es sei denn, der Benutzer verlässt mit der Ortungsvorrichtung den Bereich der in dem angezeigten Ausschnitt der Karteninformation wiedergegebenen Untersuchungsoberfläche.

Bevorzugt ist es dem Benutzer des Ortungssystems möglich, zwischen den beiden Darstellungsmöglichkeiten zu wechseln, beispielsweise durch eine Veränderung der Systemeinstellungen des Ortungssystems.

In einer alternativen oder zusätzlichen Ausführungsform des Ortungssystems ist die Anzeigevorrichtung dazu vorgesehen ist, die angezeigte Karteninformation in Abhängigkeit von den Positionsdaten zu skalieren. Dadurch kann ein besonders flexibel einsetzbares Ortungssystem bereitgestellt werden, da Ortungsobjekte besonders schnell geortet werden können und eine Ortung auf einen besonders relevanten Bereich begrenzt werden kann. Unter skalieren soll in diesem Zusammenhang insbesondere verstanden werden, dass die Anzeigevorrichtung einen Abbildungsmaßstab anpasst und insbesondere eine Auflösung vergrößert und/oder verfeinert und kleinere Details sichtbar macht. Alternativ oder zusätzlich kann die Anzeigevorrichtung einen Abbildungsmaßstab auch derart anpassen, dass eine Auflösung verkleinert wird und weniger kleine Details sichtbar sind. Unter einem Abbildungsmaßstab ist ein Verhältnis von Erstreckungen der Karteninformation im Anzeigeelement zu Erstreckungen eines zugeordneten Bereichs der Untersuchungsoberfläche zu verstehen. Es ist denkbar, dass die Anzeigevorrichtung den Abbildungsmaßstab in Abhängigkeit aller erfassten Positionsdaten bestimmt, oder dass die Anzeigevorrichtung den Abbildungsmaßstab in Abhängigkeit von zuletzt erfassten Positionsdaten bestimmt und den Abbildungsmaßstab vergrößert, wenn der Benutzer die Ortungsvorrichtung in einem beschränken Bereich der Untersuchungsoberfläche bewegt. Unter "zuletzt" soll innerhalb eines festlegbaren, zurückliegenden Zeitintervalls verstanden werden, beispielsweise innerhalb der jeweils letzten 30 Sekunden oder dergleichen.

In einer alternativen oder zusätzlichen Ausführungsform des Ortungssystems ist die Anzeigevorrichtung dazu vorgesehen, den dargestellten Ausschnitt der Karteninformation in Abhängigkeit von einer Verfahrgeschwindigkeit zu skalieren und/oder eine Auflösung zu verändern. Dadurch kann ein besonders flexibel einsetzbares Ortungssystem bereitgestellt werden, da Ortungsobjekte besonders schnell geortet werden können und eine Ortung auf einen besonders relevanten Bereich begrenzt werden kann. Bevorzugt entspricht einer hohen Verfahrgeschwindigkeit ein kleiner Abbildungsmaßstab und die Anzeigevorrichtung zeigt einen großen Bereich der Untersuchungsoberfläche in dem Anzeigeelement an, während einer geringen Verfahrgeschwindigkeit ein großer Abbildungsmaßstab entspricht und die Anzeigevorrichtung einen kleinen Bereich der Untersuchungseinheit mit einer entsprechend höheren und/oder verfeinerten Auflösung anzeigt.

In einer bevorzugten Ausführungsform des Ortungssystems ist die Anzeigevorrichtung dazu vorgesehen, den angezeigten Ausschnitt der Karteninformation manuell, d.h. in Abhängigkeit einer Benutzereingabe, zu verändern, insbesondere zu verschieben, zu vergrößern, zu verkleinern, zu drehen oder dergleichen. Auf diese Weise erhält der Benutzer des Ortungssystems die Möglichkeit, insbesondere nach Durchführung der Ortung, sich einen detaillierten Überblick über die georteten Ortungsobjekte zu verschaffen. Beispielsweise kann sich der Benutzer ihn interessierende Bereiche der Karteninformation, insbesondere der Karte, im Detail, d.h. vergrößert, anschauen. Die Veränderung des angezeigten Ausschnitts der Karteninformation, insbesondere ein Verschieben, Vergrößern, Verkleinern, Drehen oder dergleichen, des angezeigten Ausschnitts der Karteninformation kann beispielsweise unter Verwendung der Eingabevorrichtung, der Ausgabevorrichtung oder aber auch unter Verwendung des Positionssensors als Eingabehilfe realisiert sein. Derart kann der Benutzer des Ortungssystems beispielsweise durch Verfahren der Ortungsvorrichtung auf der Untersuchungsoberfläche eine Veränderung des angezeigten Ausschnitts der Karteninformation bewirken, die ihm, analog zur Durchführung der tatsächlichen Ortung, eine offline-Begutachtung bereits ermittelter Karteninformationen und somit der unter der Untersuchungsoberfläche verborgenen Ortungsobjekte ermöglicht.

In einer alternativen oder zusätzlichen Ausführungsform des Ortungssystems kann die Anzeigevorrichtung dazu vorgesehen sein, die Karteninformation auf die Untersuchungsoberfläche zu projizieren, sodass dadurch eine Anordnung des Ortungsobjekts direkt auf der Untersuchungsoberfläche angezeigt werden kann. Potentielle Fehler bei der räumlichen Zuordnung der Ortungsdaten durch den Benutzer können auf diese Weise vorteilhaft vermieden werden. Ferner wird ein besonders hoher Bedienkomfort erreicht, da ein Benutzer des Ortungssystems bei der Ortung sich lediglich auf die Untersuchungsoberfläche konzentrieren muss und kein Blickwechseln zwischen Untersuchungsoberfläche und Anzeigevorrichtung nötig ist.

In einer bevorzugten Ausführungsform des Ortungssystems ist die Anzeigevorrichtung dazu vorgesehen, eine Markierung in dem angezeigten Ausschnitt der Karteninformation darzustellen, die einem Merkmal der Ortungsvorrichtung, insbesondere des Ortungsgeräts, zugeordnet ist und somit die Position dieses Merkmals in der dargestellten Karteninformation repräsentiert. Insbesondere kann es sich bei dem Merkmal um das Zentrum des Ortungssensors, die Umrisse der Ortungsvorrichtung, insbesondere des Ortungsgeräts, eine definierte Markierungsvorrichtung, insbesondere eine Anzeichenstelle, der Ortungsvorrichtung, insbesondere des Ortungsgeräts, oder dergleichen handeln. Auf diese Weise kann die Position des Merkmals der Ortungsvorrichtung, insbesondere des Ortungsgeräts, auf leichte und eindeutige Weise direkt in Bezug zu dem dargestellten Ausschnitt der Karteninformation gesetzt werden. Beispielsweise kann somit eine zur Kennzeichnung oder Markierung einer interessierenden Position auf der Untersuchungsoberfläche vorgesehene Markierungsvorrichtung, insbesondere eine Anzeichenstelle, der Ortungsvorrichtung, insbesondere des Ortungsgeräts, mit dem von der Anzeigevorrichtung dargestellten Ausschnitt der Karteninformation in Bezug gesetzt werden. Befindet sich beispielsweise die die Markierungsvorrichtung, insbesondere die Anzeichenstelle, repräsentierende Markierung in der dargestellten Karteninformation über einem Ortungsobjekt, so befindet sich die Markierungsvorrichtung, insbesondere die Anzeichenstelle, der Ortungsvorrichtung, insbesondere des Ortungsgeräts, bezogen auf die Untersuchungsoberfläche ebenfalls über dem Ortungsobjekt.

Unter einer "Anzeichenstelle" ist insbesondere eine in der Ortungsvorrichtung, insbesondere dem Ortungsgerät, vorgesehene Aussparung zu verstehen, die einer beispielsweise mit einem Stift durchzuführenden, definierten Anzeichnung einer Kennzeichnung oder Positionsmarkierung auf der Untersuchungsoberfläche dient.

Ferner ist denkbar, dass ein Benutzer des Ortungssystems zwischen verschiedenen Markierungen, die verschiedenen Merkmalen der Ortungsvorrichtung, insbesondere des Ortungsgeräts, zugeordnet sind, wählen und/oder umschalten kann. In einer Ausführungsform des Ortungssystems kann somit insbesondere vorgesehen sein, zwischen verschiedenen Markierungsvorrichtungen, insbesondere Anzeichenstellen, die beispielsweise an unterschiedlichen Positionen der Ortungsvorrichtung, insbesondere des Ortungsgeräts vorgesehen sind, zu wählen und/oder umzuschalten.

In einer Ausführungsform des Ortungssystems kann auch vorgesehen sein, dass eine Wahl oder Umschaltung zwischen verschiedenen Markierungen durch das Ortungssystem initiiert wird, beispielsweise in Abhängigkeit einer Richtung der Umpositionierung der Ortungsvorrichtung, insbesondere des Ortungsgeräts.

In einer alternativen oder zusätzlichen Ausführungsform des Ortungssystems kann die Anzeigevorrichtung dazu vorgesehen sein, in Abhängigkeit von den Positionsdaten ein Warnsignal auszugeben, um einen Ortungsvorgang besonders einfach, intuitiv und fehlerunanfällig auf einen festgelegten Untersuchungsbereich zu begrenzen. Dazu weist die Auswertevorrichtung bevorzugt einen von dem Benutzer festlegbaren Untersuchungsbereich auf und ist dazu vorgesehen, ein Warnsignal auszugeben, wenn die aktuell erfassten Positionsdaten in einem Randbereich des Untersuchungsbereichs angeordnet sind oder außerhalb des Untersuchungsbereichs angeordnet sind.

In einer weiteren alternativen oder zusätzlichen, bevorzugten Ausführungsform des Ortungssystems kann die Anzeigevorrichtung dazu vorgesehen sein, in Abhängigkeit von einer Verfahrgeschwindigkeit des Ortungssensors ein Warnsignal auszugeben. Dies kann vorteilhaft genutzt werden, eine hohe Datenqualität der Karteninformation sicherzustellen. Bevorzugt ist die Auswertevorrichtung dazu vorgesehen, ein Warnsignal auszugeben, wenn die Verfahrgeschwindigkeit einen oberen Schwellenwert überschreitet. Grundsätzlich ist es auch denkbar, dass die Auswertevorrichtung dazu vorgesehen ist, den Ortungsvorgang abzubrechen und dies dem Benutzer anzuzeigen. Unter einem oberen "Schwellenwert" soll in diesem Zusammenhang insbesondere ein Wert verstanden werden, der von dem Benutzer festlegbar oder systembedingt ist und/oder während des Messvorgangs von der Auswertevorrichtung anhand der Qualität der Ortungsdaten ermittelt wird und unterhalb dessen eine Qualität der Ortungsdaten zumindest zufriedenstellend ist.

In einer vorteilhaften Ausführungsform des erfindungsgemäßen Ortungssystems, insbesondere eines handgehaltenen Ortungsgeräts, ist die Anzeigevorrichtung und/oder die Auswertevorrichtung dazu vorgesehen, zumindest einen Teil der Ortungsinformation bei einer Erzeugung und/oder bei einer Modifizierung der Karteninformation nicht anzuzeigen bzw. auszuschließen.

Die Auswertevorrichtung ist dazu vorgesehen, zumindest einen Teil der Ortungsdaten und/oder der Ortungsinformation bei einer Erzeugung und/oder bei der Modifizierung der Karteninformation auszuschließen und insbesondere nicht anzuzeigen. Eine Vielzahl an Ausführungsformen ist denkbar, bei denen jeweils ein Teil der Ortungsdaten und/oder der Ortungsinformation bei der Erzeugung und/oder bei der Modifizierung der Karteninformation ausgeschlossen und insbesondere nicht angezeigt wird. Insbesondere sind eine Vielzahl an Kriterien und/oder Routinen denkbar, die zu einem Ausschluss eines Teils der Ortungsdaten und/oder der Ortungsinformation von der Anzeige oder Darstellung führen können. Beispielsweise kann die Auswertevorrichtung in einer Ausführungsform dazu vorgesehen sein, von dem Ortungssensor übermittelte Ortungsdaten mit einem zu erwartenden Wertebereich zu vergleichen, insbesondere beispielsweise mit gespeicherten Ortungsdaten und/oder mit Ortungsdaten, die für benachbarte Bereiche bezogen auf die Untersuchungsoberfläche bereits ermittelt wurden. Unter Verwendung einer Bewertungsvorschrift kann dann, bevorzugt in Abhängigkeit von einer Abweichung der Ortungsdaten untereinander oder in Abhängigkeit eines Vergleichs der Ortungsdaten mit dem zu erwartenden Wertebereich, ein Wert für eine Datenqualität bereitgestellt werden. Die Bewertungsvorschrift berücksichtigt ferner Daten des Positionssensors und prüft, ob die Ortungsdaten zuverlässig Positionsdaten zugeordnet werden können. Die Auswertevorrichtung schließt Ortungsdaten folglich in Abhängigkeit von der ermittelten Datenqualität und Ortungsdaten, die nicht zuverlässig Positionsdaten zuordenbar sind, bei der Erzeugung und/oder bei der Modifizierung der Karteninformation aus.

In einer vorteilhaften Ausführungsform des erfindungsgemäßen Ortungssystems ist das Ortungssystem als ein handgehaltenes Ortungsgerät mit einem zumindest eine Ortungsvorrichtung, eine Auswertevorrichtung, eine Steuervorrichtung, einen Positionssensor und eine Anzeigevorrichtung beherbergenden Gehäuse ausgeführt.

Bevorzugt besitzt das Ortungsgerät ein Gehäuse, das zumindest die wesentlichen funktionalen Komponenten des Ortungssystems aufnimmt. Bevorzugt nimmt das Gehäuse zumindest eine Steuervorrichtung, eine Ortungsvorrichtung, einen Positionssensor, eine Auswertevorrichtung, eine Eingabe- und/oder eine Ausgabevorrichtung, eine Speichervorrichtung sowie eine Energieversorgungsvorrichtung auf. Insbesondere sind die Komponenten in ihrem Gesamtvolumen zu mehr als 50 %, bevorzugt zu mehr als 75 % und besonders bevorzugt zu 100 % in dem Gehäuse des Ortungsgeräts untergebracht. Vorzugsweise kann das handgehaltene Ortungsgerät einen Griff oder einen Griffbereich aufweisen, mit dem das Ortungsgerät über die Untersuchungsoberfläche des zu untersuchenden Gegenstands geführt werden kann. Die Masse des handgehaltenen Ortungsgeräts beträgt insbesondere weniger als 5 kg, vorteilhaft weniger als 3 kg und besonders vorteilhaft weniger als 1 kg. Auf diese Weise kann ein kompaktes, leicht einhändig führbares Ortungsgerät realisiert werden. Ferner lassen sich die Komponenten auf diese Weise vorteilhaft vor Beschädigungen und Umwelteinflüssen, beispielsweise vor Feuchtigkeit und Staub, schützen.

Alternativ wird ein Ortungssystem mit einer handgeführten Ortungsvorrichtung mit einem Ortungssensor und einem Positionssensor vorgeschlagen.

Darüber hinaus wird eine handgeführte Ortungsvorrichtung vorgeschlagen mit einem Ortungssensor, einem Positionssensor und mit einer Anzeigevorrichtung eines erfindungsgemäßen Ortungssystems. Dadurch kann eine besonders kompakte und flexibel einsetzbare Ortungsvorrichtung bereitgestellt werden. Unter einer Ortungsvorrichtung soll in diesem Zusammenhang insbesondere eine Einheit mit einem Gehäuse, das zumindest den Ortungssensor, den Positionssensor, die Auswertevorrichtung und die Anzeigevorrichtung aufnimmt, verstanden werden.

Ferner wird ein erfindungsgemäßes Verfahren zur Ortung von unter einer Untersuchungsoberfläche verborgenen Ortungsobjekten vorgeschlagen, bei dem zumindest zwei Betriebsmodi eines Ortungssystems wählbar sind, wobei eine Auswertevorrichtung dazu vorgesehen ist, in dem ersten Betriebsmodus richtungs- und/oder ortsaufgelöste Ortungsinformationen ohne Umpositionieren der Ortungsvorrichtung zu bestimmen und/oder bereitzustellen und in dem zweiten Betriebsmodus eine zumindest dreidimensionale Ortungsinformation durch eine Zuordnung von Ortungsdaten zu Positionsdaten eines Positionssensors zu bestimmen und/oder bereitzustellen. Insbesondere erlaubt das Verfahren die Untersuchung einer Untersuchungsoberfläche hinsichtlich unter der Untersuchungsoberfläche verborgener Ortungsobjekte unter Verwendung der zwei erfindungsgemäßen Betriebsmodi.

In einer bevorzugten Ausführungsform des Verfahrens kann das Verfahren insbesondere durch zumindest einen der folgenden Schritte gekennzeichnet sein:
- Erkennen bzw. Detektion eines Aufsetzens der handgehaltenen Ortungsvorrichtung auf einer Untersuchungsoberfläche mittels der Aufsatzerkennungsvorrichtung;
- Wählen des ersten Betriebsmodus durch die Steuervorrichtung bei bzw. in Folge des Erkennens eines Aufsetzens der Ortungsvorrichtung auf die Untersuchungsoberfläche;
- Richtungs- und/oder ortsaufgelöste Erfassung von Ortungsdaten zu unter einer Untersuchungsoberfläche verborgenen Ortungsobjekten unter Verwendung eines in einem vorgebbaren Erfassungsbereich richtungs- und/oder ortsauflösenden Ortungssensors der handgehaltenen Ortungsvorrichtung, insbesondere richtungs- und/oder ortsauflösende Ortung an der Stelle des Aufsatzes der Ortungsvorrichtung auf die Untersuchungsoberfläche ohne Umpositionieren der Ortungsvorrichtung bezogen auf die Untersuchungsoberfläche;
- Bestimmung und Bereitstellung von einer richtungs- und/oder ortsaufgelösten Ortungsinformation basierend auf von dem richtungs- und/oder ortsauflösenden Ortungssensor erfassten Ortungsdaten unter Verwendung der Auswertevorrichtung;
- Darstellung einer Ortungsinformation, insbesondere einer zumindest zweidimensionalen Karteninformation, unter Verwendung einer Anzeigevorrichtung; bevorzugt Darstellung einer zumindest zweidimensionalen Karte;
- Erkennen einer Positionsänderung der Ortungsvorrichtung bezogen auf die Untersuchungsoberfläche unter Verwendung eines Positionssensors;
- Wechsel des Ortungssystems in den zweiten Betriebsmodus bei bzw. in Folge eines Erkennens einer Positionsänderung der Ortungsvorrichtung initiiert durch die Steuervorrichtung;
- Bestimmung und Bereitstellung einer zumindest dreidimensionalen Ortungsinformation aus den Ortungsdaten und den Positionsdaten des Positionssensors durch Zuordnung von Ortungsdaten zu Positionsdaten;
- Bestimmung und Bereitstellung, bevorzugt in Echtzeit, einer zumindest zweidimensionalen Karteninformation, insbesondere Karte, aus der zumindest dreidimensionalen Ortungsinformationen unter Verwendung der Auswertevorrichtung;
- Darstellung einer Ortungsinformation, insbesondere einer zumindest zweidimensionalen Karteninformation, unter Verwendung der Anzeigevorrichtung; bevorzugt Darstellung einer zumindest zweidimensionalen Karte;
wobei
- Ortungsdaten und/oder Ortungsinformationen durch die Auswertevorrichtung inter- und/oder extrapoliert werden;
- in dem ersten und in dem zweiten Betriebsmodus bestimmte Ortungsinformationen durch die Auswertevorrichtung kombiniert werden;
- bereits bestimmte Ortungsinformationen, insbesondere bereits im ersten Betriebsmodus bestimmte Ortungsinformationen, bei einem Umpositionieren der Ortungsvorrichtung, insbesondere bei einem erneuten Überfahren eines Bereichs der Untersuchungsoberfläche, unter Verwendung der Auswertevorrichtung ergänzt und/oder aktualisiert und/oder verfeinert und/oder überschrieben werden;
- der angezeigte Ausschnitt einer Karteninformation in Abhängigkeit von Positionsdaten und/oder in Abhängigkeit vom Betriebsmodus durch die Anzeigevorrichtung variiert wird;
- zumindest ein Teil der Ortungsinformation bei einer Erzeugung und/oder bei der Modifizierung der Karteninformation durch die Auswertevorrichtung und/oder die Anzeigevorrichtung nicht angezeigt wird.

### Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1: eine perspektivische Seitenansicht einer Ausgestaltung eines erfindungsgemäßen Ortungssystems,
- Figur 2: eine Aufsicht auf dieselbe Ausgestaltung des erfindungsgemäßen Ortungssystems,
- Figur 3: eine schematische Seitenansicht einer Ausgestaltung eines erfindungsgemäßen Ortungssystems,
- Figur 4: eine schematische Darstellung einer Ausführungsform des unter Anwendung der zwei Betriebsmodi an einer Untersuchungsoberfläche verwendeten Ortungssystems,
- Figur 5a: eine perspektivische Ansicht einer Ausführungsform eines richtungs- und/oder ortsauflösenden Ortungssensors,
- Figur 5b: eine schematische und vereinfachte Seitenansicht derselben Ausführungsform des Ortungssensors mit schematischer Darstellung eines richtungs- und/oder ortsaufgelösten Erfassungsbereichs,
- Figur 6: eine schematische Darstellung einer exemplarischen, unter Verwendung einer Anzeigevorrichtung angezeigten Ortungsinformation, insbesondere einer zumindest zweidimensionalen Karteninformation
- Figur 7: eine schematische Darstellung einer Ausführungsform des unter Anwendung des ersten Betriebsmodus an einer Untersuchungsoberfläche verwendeten Ortungssystems,
- Figur 8a,c,e,g: eine schematische Darstellung einer Ausführungsform des unter Anwendung des ersten und zweiten Betriebsmodus an einer Untersuchungsoberfläche verwendeten Ortungssystems,
- Figur 8b,d,f,h: eine schematische Darstellung einer Ausführungsform der unter Verwendung einer Anzeigevorrichtung angezeigten zumindest zweidimensionalen Karteninformation,
- Figur 9: eine Ausführungsform eines erfindungsgemäßen Verfahrens in einem Verfahrensdiagramm

### Beschreibung der Ausführungsbeispiele

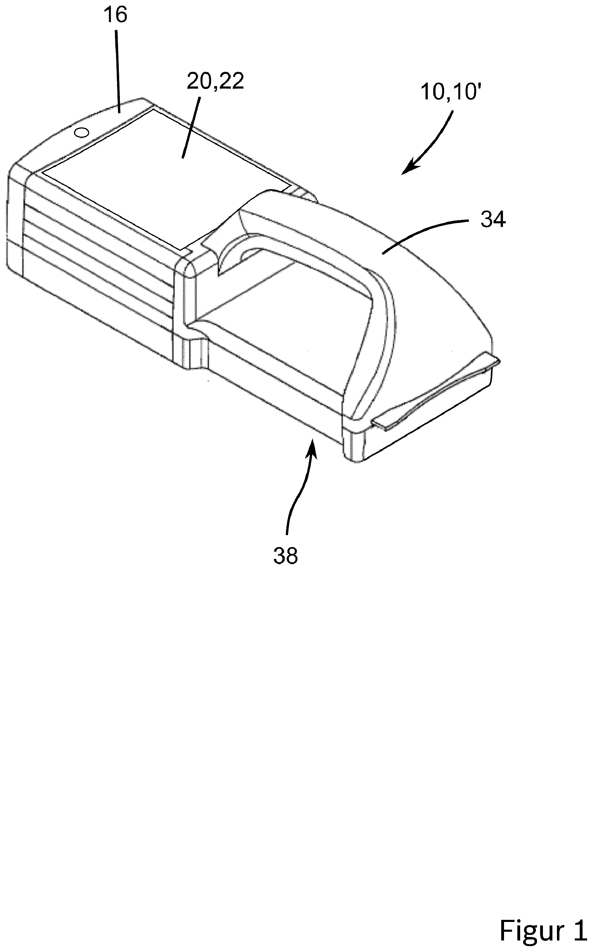

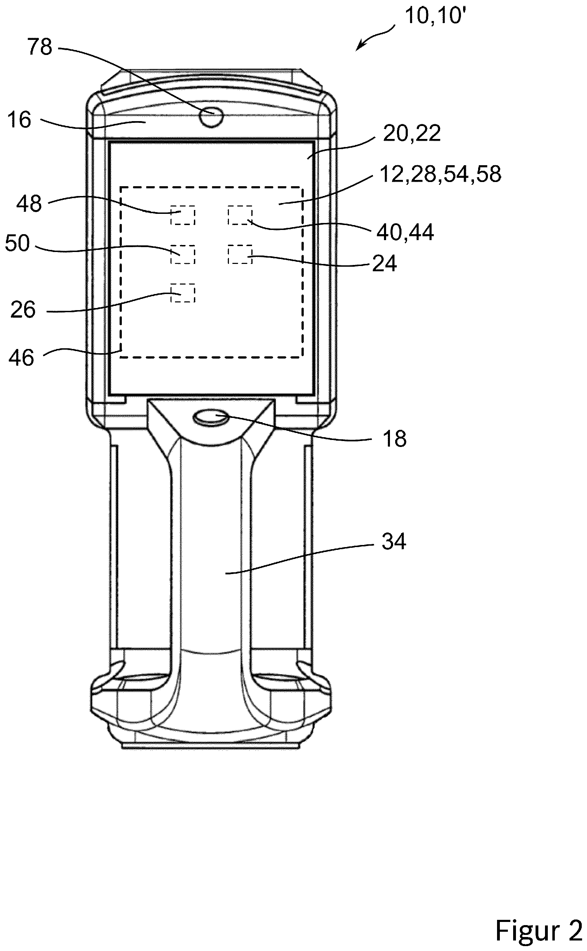

Figur 1 und Figur 2 zeigen zwei Ansichten einer beispielhaften Ausführungsform eines erfindungsgemäßen Ortungssystems 10 in perspektivischer Seitendarstellung bzw. in vereinfachter, schematischer Aufsicht. Das dargestellte Ortungssystem 10 ist als ein handgehaltenes Ortungsgerät 10' realisiert. Die folgenden Ausführungsbeispiele des Ortungssystems 10 beziehen sich alle auf eine Ausführungsform des Ortungssystems 10 als handgehaltenes Ortungsgerät 10', sodass die beiden Begriffe Ortungssystem 10 und Ortungsgerät 10' im Folgenden synonym verwendet werden. Alle beschriebenen Merkmale eines Ortungsgeräts 10' sind ebenfalls auf alternative Ausführungsformen des erfindungsgemäßen Ortungssystems 10 übertragbar.

In dem im Folgenden dargestellten Ausführungsbeispiel ist die Ortungsvorrichtung 12 als Bestandteil eines vorteilhaft alle Komponenten des Ortungssystems 10 umfassenden Ortungsgeräts 10' realisiert. Somit weist das Ortungsgerät 10' eine erfindungsgemäße Ortungsvorrichtung 12 auf. Wird im Folgenden beispielsweise von "Erkennen einer Positionsänderung des Ortungsgeräts 10' bezogen auf die Untersuchungsoberfläche 14" gesprochen, so ist dies insbesondere auch auf die Ortungsvorrichtung 12 übertragbar im Sinne von "Erkennen einer Positionsänderung der Ortungsvorrichtung 12 bezogen auf die Untersuchungsoberfläche 14".

Das beispielhaft ausgeführte Ortungsgerät 10' weist ein Gehäuse 16, eine Eingabevorrichtung in Form von Betätigungselementen 18, geeignet zum Ein- und Ausschalten des Ortungsgeräts 10', sowie eines berührungssensitiven Anzeigeelements 20 zum Starten und Konfigurieren eines Messvorgangs und zum Eingeben von Arbeitsparametern auf. Das berührungssensitive Anzeigeelement 20 ist Teil einer Anzeigevorrichtung 22, die der Darstellung und Ausgabe von Arbeitsparametern und/oder Auswerteergebnissen, insbesondere von Ortungsinformationen, dient.

Die Eingabevorrichtung, bestehend aus Betätigungselementen 18 sowie dem berührungssensitiven Anzeigeelement 20, dient der Eingabe von Arbeitsparametern durch einen Benutzer des Ortungsgeräts 10'. Die Komponenten der Eingabevorrichtung sind zur Übermittlung von Benutzereingaben mit einer Auswertevorrichtung 24 und/oder einer Steuervorrichtung 26 verbunden. Die Auswertevorrichtung 24 und/oder die Steuervorrichtung 26 ist dazu vorgesehen, die Benutzereingaben auszuwerten und Parameter zur Erzeugung und Modifikation einer Ortungsinformation anzupassen. Beispielsweise können über eine Benutzereingabe Farbskalen, eine Zuordnung einer Farbskala, ein Abbildungsmaßstab, eine Empfindlichkeit des Ortungssensors 28 oder dergleichen definiert oder angepasst werden.

Die Anzeigevorrichtung 22 ist dazu vorgesehen, eine Ortungsinformation darzustellen, insbesondere zumindest einen Ausschnitt einer zweidimensionalen Karteninformation anzuzeigen, bevorzugt zumindest eine zweidimensionale Karteninformation 32 oder Karte darzustellen. Die Anzeigevorrichtung 22 ist mit der Auswertevorrichtung 24 zur Übermittlung von Ortungsinformationen verbunden. Die Anzeigevorrichtung 22 ist dazu vorgesehen, zumindest eine zweidimensionale Karteninformation 32 anzuzeigen, vorzugsweise maßstäblich anzuzeigen. Die Anzeigevorrichtung 22 ist ferner dazu vorgesehen, in einem Betriebszustand eine gesamte zweidimensionale Karteninformation 32 anzuzeigen. Die Anzeigevorrichtung 22 weist ein Anzeigeelement 20 zur Anzeige einer zumindest zweidimensionalen Karteninformation auf. In dem vorliegenden Ausführungsbeispiel ist das Anzeigeelement 20 als ein farbfähiges OLED-Display ausgebildet. Die Anzeigevorrichtung 22 ist als ein Teil des Ortungsgeräts 10' ausgebildet und in das Gehäuse 16 des Ortungsgeräts 10' integriert. Die Auswertevorrichtung 24 ist mit der Anzeigevorrichtung 22 zu einer Übermittlung von Ausgabewerten verbunden. Grundsätzlich ist es auch denkbar, dass die Anzeigevorrichtung 22 getrennt von dem Ortungsgerät 10' ausgebildet ist und über eine drahtlose Verbindung zu einer Übermittlung von Ausgabewerten verbunden ist, beispielsweise über eine Punkt-zu-Punkt ad-hoc Verbindung, eine WLAN-Verbindung, eine Bluetooth-Verbindung oder dergleichen. Der von der Anzeigevorrichtung 22, insbesondere dem Anzeigeelement 20, angezeigte Ausschnitt einer zumindest zweidimensionalen Karteninformation weist einen Abbildungsmaßstab auf, der einem Verhältnis von Erstreckungen der Karteninformation im Anzeigeelement 20 zu Erstreckungen eines zugeordneten Bereichs der Untersuchungsoberfläche 14 entspricht. Der Abbildungsmaßstab weist einen gleichen Abbildungsmaßstab für eine erste Richtung und für eine zweite, insbesondere zur ersten Richtung orthogonale Richtung auf. Die Anzeige einer zumindest zweidimensionalen Karteninformation ist insbesondere unabhängig von der Orientierung des Ortungsgeräts 10' auf der Untersuchungsoberfläche. Somit stellt die dargestellte zumindest zweidimensionalen Karteninformation unabhängig von der Orientierung des Ortungsgeräts 10' die unter der Untersuchungsoberfläche 14 georteten Ortungsobjekte 30 lagegetreu dar. Bevorzugt wird die dargestellte zumindest zweidimensionale Karteninformation bei einer Drehung des Ortungsgeräts 10' entgegen der Richtung der Drehbewegung rotiert, sodass die dargestellte zumindest zweidimensionalen Karteninformation auch unter Drehung des Ortungsgeräts 10' die unter der Untersuchungsoberfläche 14 georteten Ortungsobjekte 30 lagegetreu wiedergibt.

Die Anzeigevorrichtung 22 ist dazu vorgesehen, eine ermittelte Ortungsrichtung eines Ortungsobjekts 30 relativ zu dem Ortungssensor 28 anzuzeigen. Grundsätzlich ist es denkbar, dass die Anzeigevorrichtung 22 zur Ausgabe oder Darstellung weiterer notwendiger, nützlicher und/oder sinnvoller Informationen vorgesehen ist, beispielsweise zur Ausgabe einer Ortungsrichtung, einer Ortungsgenauigkeit, einer eine Interpretation der Ortungsinformation vereinfachenden Symbolik, einer Bedienungsanleitung oder dergleichen. Bevorzugt kann die Anzeigevorrichtung 22 dazu in einer weiteren Ausführungsform auch weitere Anzeigeelemente 20' aufweisen, die getrennt von dem Anzeigeelement 20 für die Ortungs- und/oder Karteninformation ausgebildet sind.

Vorteilhaft lassen sich mittels der Anzeigevorrichtung 22 des Ortungssystems 10 unter Verwendung des ersten Betriebsmodus und/oder des zweiten Betriebsmodus ermittelte richtungs- und/oder ortsaufgelöste Ortungsinformationen als zumindest zweidimensionale Karteninformation 32, insbesondere als eine zweidimensionale Karte, darstellen. Das Ortungsgerät 10' verfügt ferner zum Transport und zu dessen Führung über einen Handgriff 34. Der Handgriff 34, die Betätigungselemente 18 sowie das Anzeigeelement 20 befinden sich auf einer Gehäuseseite des Ortungsgeräts 10', die bei einer Bedienung des Ortungsgeräts 10' typischerweise dem Benutzer zugewandt ist.

Zur Energieversorgung des Ortungsgeräts 10' weist das Ortungsgerät 10' auf der Geräterückseite 36, d.h. der das Anzeigeelement 20 aufnehmenden Geräteseite geräterückseitig gegenüberliegenden Geräteseite, eine Aussparung auf, die zur Aufnahme zumindest eines stromnetzunabhängigen Energiespeichers 38, insbesondere Batterien oder wiederaufladbaren Akkus, vorgesehen ist. Das beispielhaft vorgestellte Ortungsgerät 10' besitzt Lithium-Ionen-Akkus, deren hohe Energie- und Leistungsdichte vorteilhaft zur Energieversorgung des Ortungsgeräts 10' geeignet ist. In einer alternativen Ausführungsform kann der Energiespeicher 38 auch im Handgriff 34 des Ortungsgeräts 10' untergebracht sein. Vorzugsweise weist der Energiespeicher 38 eine lösbare Formschluss- und/oder Kraftschlussverbindungsschnittstelle auf, sodass der zumindest eine Energiespeicher 38 abnehmbar und austauschbar an oder in dem Ortungsgerät 10' anordenbar ist. Darüber hinaus lässt sich der Energiespeicher 38 in und/oder außerhalb des Ortungsgeräts 10' mit Energie aus einem Stromnetz versorgen und laden.

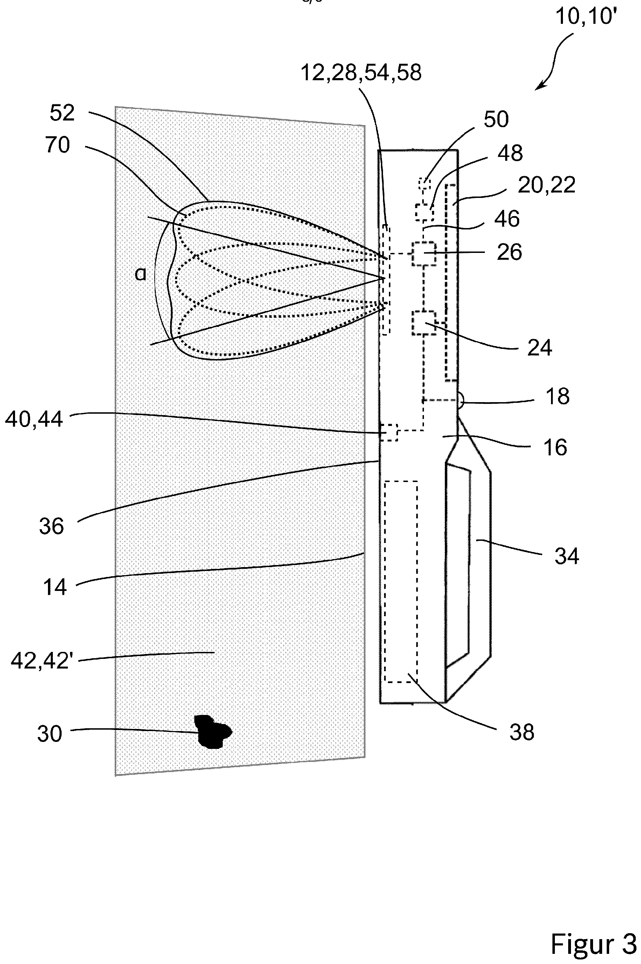

Das Ortungssystem 10' umfasst einen Positionssensor 40, der dazu vorgesehen ist, zu Ortungsdaten zuordenbare Positionsdaten der Ortungsvorrichtung 12 bezogen auf die Untersuchungsoberfläche 14 zu erfassen. Der Positionssensor 40 ist in einem montierten Zustand des Ortungsgeräts 10' in der Gehäusewand auf der Geräterückseite 36 aufgenommen. Bevorzugt ist der Positionssensor 40 derart mit dem Gehäuse 16 des Ortungsgeräts 10' verbunden, dass der Ortungssensor 28 und der Positionssensor 40 in einer zumindest im Wesentlichen festen Relativposition zueinander angeordnet sind. Mittels des Positionssensors 40 kann das Ortungsgerät 10' eine Ausrichtungsänderung und/oder eine Positionsänderung des Ortungsgerät 10' bezogen auf die Untersuchungsoberfläche 14 eines zu untersuchenden Werkstücks 42 detektieren (vgl. auch Figur 3). Der Positionssensor 40 erfasst insbesondere eine Bewegung des Ortungsgeräts 10' sowie eine zurückgelegte Distanz und/oder Richtung und erlaubt somit Messergebnisse, insbesondere Ortungsdaten, in Bezug zu einer Position des Ortungsgeräts 10', insbesondere bezogen auf die Untersuchungsoberfläche 14, zu setzen. Insbesondere erlaubt der Positionssensor 40 darüber hinaus, eine Rotation des Ortungsgeräts 10' um eine Achse, die bezogen auf die Untersuchungsoberfläche 14 senkrecht und durch den Mittelpunkt des Ortungssensors 28 verläuft, zu detektieren. In dem dargestellten Ausführungsbeispiel ist der Positionssensor 40 als ein optischer Positionssensor 40, insbesondere als ein optischer Wegaufnehmer, ausgebildet, der in der bei Anwendung des Ortungsgeräts 10' dem zu untersuchenden Werkstück 42 zugewandten Gehäusewand der Geräterückseite 36 angeordnet ist. Der Positionssensor 40 ist ferner ausgelegt, ein Aufsetzen und Abnehmen des Ortungsgeräts 10' auf die bzw. von der Untersuchungsoberfläche 14 zu detektieren. Auf diese Weise dient der Positionssensor 40 gleichzeitig als Aufsatzerkennungsvorrichtung 44 des Ortungsgeräts 10', insbesondere der Ortungsvorrichtung 12, zur Detektion eines Aufsetzens und Abnehmens des Ortungsgeräts 10' und somit der Ortungsvorrichtung 12 auf bzw. von der Untersuchungsoberfläche 14.

Alternativ oder zusätzlich umfasst der Positionssensor 40 in einer Ausführungsform des Ortungsgeräts 10' zwei Laserlichtquellen (nicht näher dargestellt), deren Strahlungsrichtungen senkrecht zueinander in einer Ebene parallel zu der Untersuchungsoberfläche 14 angeordnet sind. Der Positionssensor 40 ist in dieser Ausführungsform dazu vorgesehen, aus einer Bestimmung einer Phasenlage von einem ausgesandten Lichtstrahl zu einem reflektierten Lichtstrahl einen Abstand des Ortungssensors 28 von weiteren Gebäudeteilen, beispielsweise von einem Gebäudeboden, einer Gebäudedecke oder einer Gebäudewand zu bestimmen. Der Positionssensor 40 ist in dem vorliegenden Ausführungsbeispiel dazu vorgehen, eine Position des Ortungssensors 28 absolut zu bestimmen, d.h. eine Positionsbestimmung ist unabhängig von einer unmittelbar vorher eingenommenen Position des Ortungssensors 28.

Vorteilhaft weist das Ortungssystem 10 ein nicht näher dargestelltes Koordinatensystem auf, das als ein Bezugssystem für die Positionsdaten vorgesehen ist. Das Koordinatensystem kann als ein orthogonales Koordinatensystem ausgebildet sein. Der Positionssensor 40 ermittelt und übermittelt die Positionsdaten bezogen auf einen Ursprung des Koordinatensystems. Das Ortungssystem 10 ist dazu vorgesehen, anhand einer Benutzereingabe den Ursprung des Koordinatensystems einem Bezugspunkt auf der Untersuchungsoberfläche 14 zuzuordnen. Grundsätzlich ist es auch denkbar, dass der Bezugspunkt außerhalb der Untersuchungsoberfläche 14 angeordnet ist. Die Positionsdaten bilden bevorzugt ein Positionskoordinatenpaar bestehend aus einem x-Wert und einem y-Wert aufweist.

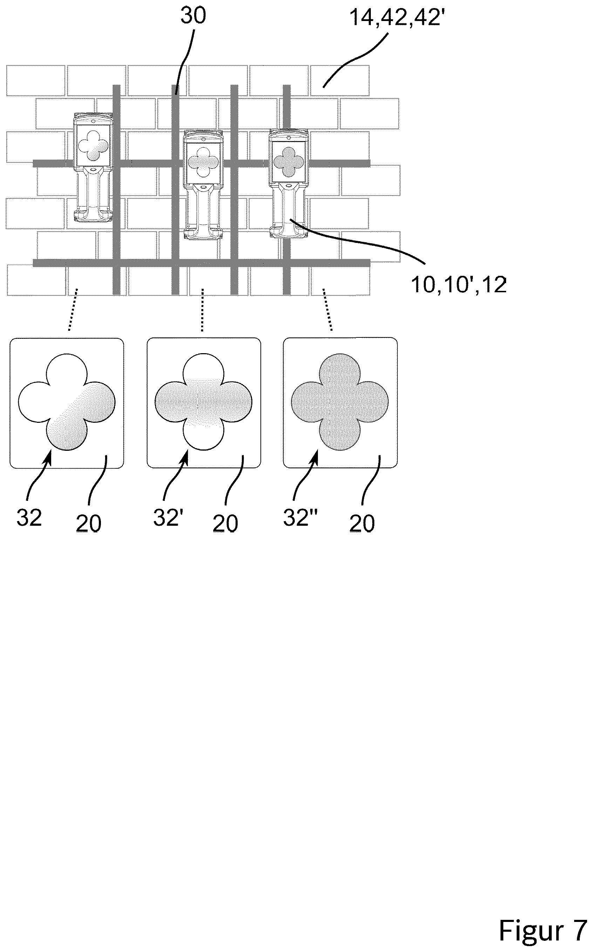

Nach Aufsetzen des Ortungsgeräts 10' auf der Untersuchungsoberfläche 14 eines zu vermessenden Werkstücks 42, beispielsweise auf einer Wand 42' oder auf einem Beton-Boden, wird die Positionsänderung des Ortungsgeräts 10' in Folge eines Umpositionierens, insbesondere Verfahrens oder Verschiebens des Ortungsgeräts 10' auf dem Werkstück 42, ermittelt. Diese Positionsdaten werden zur weiteren Auswertung an eine Auswertevorrichtung 24 weitergegeben. Besonders vorteilhaft lassen sich mittels positionsabhängiger Vermessung und Auswertung einer Untersuchungsoberfläche 14 mehrdimensionale Darstellungen der Messergebnisse, beispielsweise insbesondere in Form einer zumindest zweidimensionalen Karteninformation 32 und/oder einer pseudodreidimensionalen Darstellung (vgl. insbesondere Figur 7), erzeugen.

Zur präziseren, insbesondere auch zur relativen, Positionsbestimmung können zusätzlich oder alternativ auch insbesondere fotografische, neigungs-, winkel-, translations-, beschleunigungs- sowie drehratensensitive Sensoren vorhanden sein.

Auf einem Trägerelement 46 des Ortungsgeräts 10', insbesondere einer Systemplatine oder Leiterplatte innerhalb des Gehäuses 16, sind weitere Komponenten des Ortungsgeräts 10', insbesondere die Ortungsvorrichtung 12, die Steuervorrichtung 26, die Auswertevorrichtung 24 sowie eine mit der Steuervorrichtung 26 und/oder der Auswertevorrichtung 24 verbundene Datenkommunikationsschnittstelle 48 und eine Speichervorrichtung 50 untergebracht (siehe insbesondere Figur 2 und Figur 3).

Die Steuervorrichtung 26 weist eine Steuerelektronik umfassend Mittel zur Kommunikation mit den anderen Komponenten des Ortungsgeräts 10' auf, beispielsweise Mittel zur Steuerung und/oder Regelung der Ortungsvorrichtung 12 sowie Mittel zur Steuerung des Ortungsgeräts 10'. Die Steuervorrichtung 26 umfasst insbesondere eine nicht näher dargestellte Einheit mit einer Prozessoreinheit, einer Speichereinheit und einem in der Speichereinheit gespeicherten Betriebsprogramm. Die Steuervorrichtung 26 ist dazu vorgesehen, zumindest einen Betriebsfunktionsparameter des Ortungsgeräts 10' in Abhängigkeit von zumindest einer Eingabe durch den Benutzer, durch die Auswertevorrichtung 24 und/oder durch die Datenkommunikationsschnittstelle 48 einzustellen.

Die Steuervorrichtung 26 ist insbesondere ausgebildet, einen Betriebsmodus des Ortungssystems 10 automatisch zu wählen und automatisch zwischen Betriebsmodi des Ortungssystems 10 zu wechseln. Der Wechsel des Ortungssystems 10 in den ersten Betriebsmodus wird von der Steuervorrichtung 26 initiiert, sobald die Steuervorrichtung 26 von der Aufsatzerkennungsvorrichtung 44 ein Signal über die Detektion eines Aufsetzens der Ortungsvorrichtung 12, insbesondere des Ortungsgeräts 10', auf die Untersuchungsoberfläche 14, erhält. Darüber hinaus initiiert die Steuervorrichtung 26 einen Wechsel des Ortungssystems 10 in den zweiten Betriebsmodus bei Erkennen einer Positionsänderung des Ortungsgeräts 10', insbesondere der Ortungsvorrichtung 42, bezogen auf die Untersuchungsoberfläche 14. Die Empfindlichkeit, ab der eine Bewegung des Ortungsgeräts 10' als Positionsänderung erkannt wird, ist durch den Benutzer des Ortungssystems 10 vorgebbar. Ferner kann der Benutzer des Ortungssystems 10 einen zu verwendenden Betriebsmodus des Ortungssystems 10 auch manuell wählen und/oder den automatischen Wechsel von Betriebsmodi deaktivieren.

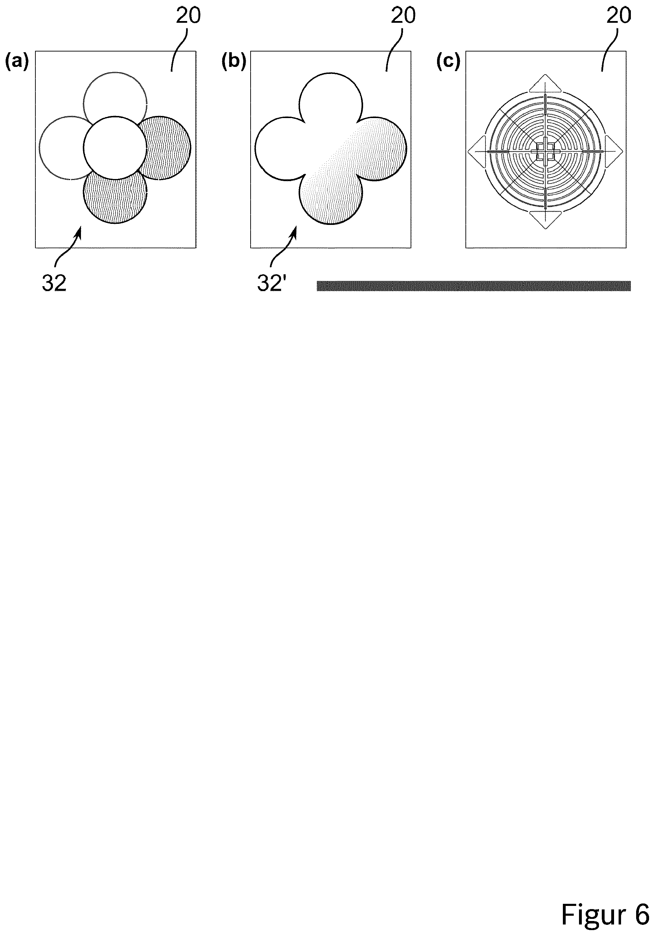

Die Auswertevorrichtung 24 ist mit dem Ortungssensor 28 und dem Positionssensor 40 zur Übermittlung von Daten verbunden und dazu vorgesehen, Ortungsdaten des Ortungssensors 28 auszuwerten. Dazu weist die Auswertevorrichtung 24 zumindest einen Prozessor und einen nicht näher dargestellten Speicher mit einem darauf gespeicherten und ausführbaren Betriebsprogramm auf. Besonders vorteilhaft weist die Auswertevorrichtung 24 gespeicherte Korrektur- und/oder Kalibriertabellen auf, die es erlauben, Auswerteergebnisse zu interpretieren, umzurechnen, zu inter- und/oder extrapolieren sowie das Ortungsgerät 10', insbesondere die Auswerteroutinen, zu kalibrieren. Ferner ist die Auswertevorrichtung 24 mit der Datenkommunikationsschnittstelle 48 und der Anzeigevorrichtung 22, insbesondere dem Anzeigeelement 20, signaltechnisch verbunden. Auswerteergebnisse, insbesondere aus den Ortungsdaten abgeleitete Ortungsinformationen, werden von der Auswertevorrichtung 24 zur weiteren Verwendung über die Steuervorrichtung 26 entweder an die Speichervorrichtung 50 oder zur Versendung der Daten an die Datenkommunikationsschnittstelle 48 oder direkt an einen Benutzer des Ortungsgeräts 10' ausgegeben. Eine Ausgabe an einen Benutzer kann insbesondere mittels der Anzeigevorrichtung 22, d.h. durch Darstellung auf dem Anzeigeelement 20, geschehen. Die Ausgabe auf dem Anzeigeelement 20 kann grafisch, numerisch und/oder alphanumerisch, beispielsweise in Form eines Messwerts, einer Messkurve, eines Signalverlaufs, eines Zeitverlauf, als Bilddaten, in einer Gradientendarstellung, mittels Symbolik sowie in einer Kombination derer erfolgen (vgl. insbesondere Figur 6, 7, 8). Alternativ oder zusätzlich ist eine Darstellung mittels einer Signalanzeige möglich, insbesondere beispielsweise einer Leuchtdiode, die beispielsweise über eine Farbcodierung (z.B. rot, gelb, grün) eine Zielgröße bewertet.

Das Ortungssystem 10, insbesondere das Ortungsgerät 10', weist eine Ortungsvorrichtung 12 auf, die vorgesehen ist, Ortungsdaten zu unter einer Untersuchungsoberfläche 14 verborgenen Ortungsobjekten 30 richtungs- und/oder ortsaufgelöst zu erfassen. Dazu umfasst die Ortungsvorrichtung 12 zumindest einen in einem Erfassungsbereich 52 richtungs- und/oder ortsauflösenden Ortungssensor 28. Die Ortungsvorrichtung 12 samt Ortungssensor 28 ist in dem Gehäuse 16 des Ortungsgeräts 10' untergebracht, sodass die Ortungsvorrichtung 12 in einem montierten Zustand des Ortungssystems 10 durch das Gehäuse 16 gehalten und geschützt ist. In dem gezeigten Ausführungsbeispiel ist der Ortungssensor 28 als eine LCR-Antenne 54 ausgebildet. Die LCR-Antenne 54 ist zur Abstrahlung von elektromagnetischer Strahlung auf der einem Benutzer des Ortungsgeräts 10' abgewandten Geräterückseite 36 vorgesehen. Im Inneren des Werkstücks 42 reflektierte und/oder gestreute Signale, insbesondere von einem unter der Untersuchungsoberfläche 14 verborgenen Ortungsobjekt 30 zumindest teilweise reflektierte elektromagnetische Strahlung, wird mittels des Ortungssensors 28 der Ortungsvorrichtung 12 detektiert. Dabei werden elektromagnetische Eigenschaften des unter der Untersuchungsoberfläche 14 angeordneten Volumens zumindest in einem Erfassungsbereich 52 des Ortungssensors 28 erfasst. Durch die Untersuchungsoberfläche 14 verursachte Reflexionen werden aus dem empfangenen Signal herausgefiltert. Mittels der reflektierten elektromagnetischen Strahlung erfasste elektromagnetische Eigenschaften betreffen beispielsweise eine elektrische oder magnetische Leitfähigkeit oder eine elektrische oder magnetische Suszeptibilität der unter der Untersuchungsoberfläche 14 verborgenen Ortungsobjekte 30. Der Ortungssensor 28 der Ortungsvorrichtung 12 ist unmittelbar hinter der dem Benutzer bei Anwendung des Ortungsgeräts 10' abgewandten Gehäuseseite im Innern des Gehäuses 16 angeordnet. Auf diese Weise kann der Ortungssensor 28 bei Anwendung des Ortungsgeräts 10', insbesondere bei einem Aufsetzen des Ortungsgeräts 10' auf einer zu untersuchenden Untersuchungsoberfläche 14, vorteilhaft nahe an der Untersuchungsoberfläche 14 positioniert werden.

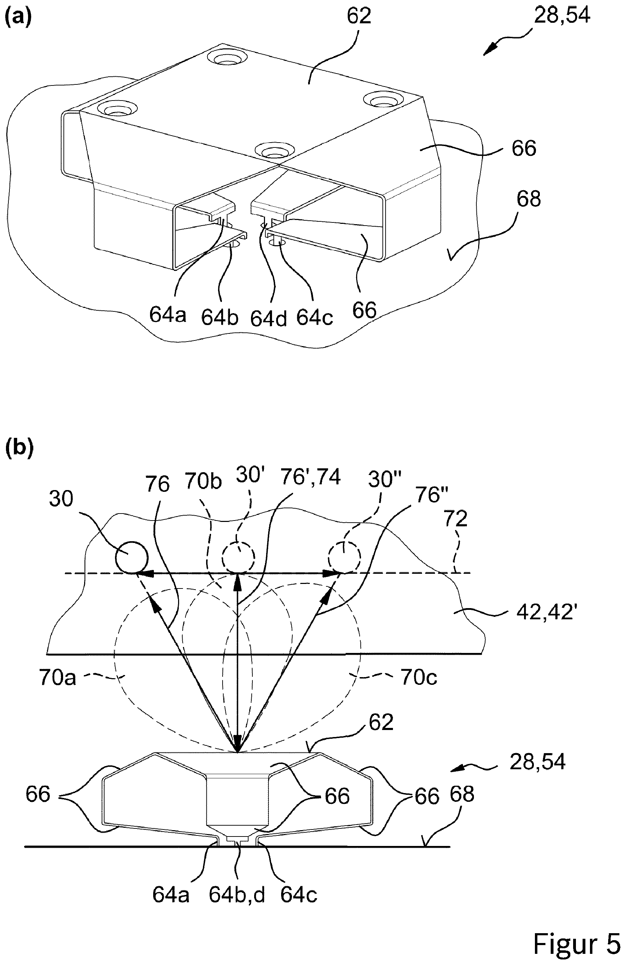

Der Ortungssensor 28 ist als richtungs- und/oder ortsauflösender Ortungssensor 28 der Ortungsvorrichtung 12 ausgebildet. Der Ortungssensor 28, insbesondere die LCR-Antenne 54, ist elektrisch ausrichtbar ausgebildet (vgl. insbesondere Figur 5b). Der richtungs- und/oder ortsauflösende Ortungssensor 28 der Ortungsvorrichtung 12 weist einen vorgebbaren, insbesondere wählbaren oder einstellbaren Erfassungsbereich 52 auf (vgl. insbesondere Figur 5b).

Ein in einem Bereich unter der Untersuchungsoberfläche 14 angeordnetes Ortungsobjekt 30, beispielsweise eine Bewehrung, eine Leitung, ein Rohr, eine Armierung oder ein Hohlraum, verändern ein von dem Ortungssensor 28 erzeugtes elektromagnetisches Feld im Vergleich zu einem Bereich, der frei von einem solchen Ortungsobjekt 30 ist. Der Ortungssensor 28 ist dazu vorgesehen, eine solche Veränderung in einem kontinuierlichen Wertebereich zu erfassen. Diese Ortungsdaten, insbesondere physikalische und/oder technische Parameter und/oder Kenngrößen wie Amplituden, Spannungen, Stromstärken, Pulsdauern, Leistungen, oder dergleichen, werden an die Auswertevorrichtung 24 weitergeleitet, von der sie mittels Auswerteroutinen ausgewertet und aufbereitet werden.

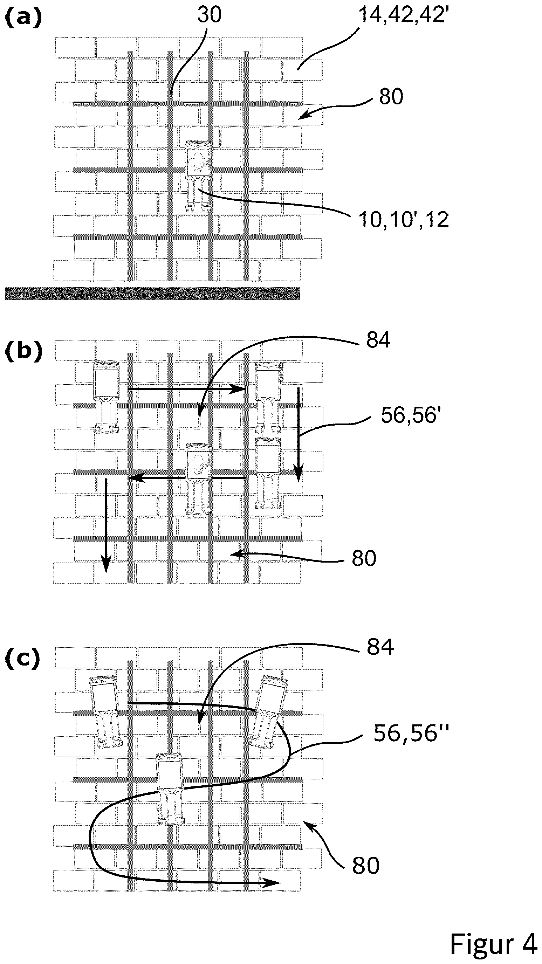

In Figur 3 ist die erfindungsgemäße Ausführungsform des Ortungsgeräts 10' der Figuren 1 und 2 in einer vereinfachten schematischen Seitenansicht dargestellt. Wie dargestellt wird das Ortungsgerät 10' zur Durchführung einer Ortung eines unter einer Untersuchungsoberfläche 14 verborgenen Ortungsobjekts 30 mit der Geräterückseite 36 flächig in unmittelbarer Nähe zu der Untersuchungsoberfläche 14, insbesondere in Berührung zu der Untersuchungsoberfläche 14, positioniert. Die Untersuchungsoberfläche 14 in Figur 3 (ebenso in Figuren 4-5, 7-8) ist beispielsweise als eine Oberfläche einer Gebäudewand 42' dargestellt. Das Ortungsgerät 10' ist dabei dazu vorgesehen, von Hand an und/oder über die Untersuchungsoberfläche 14 geführt zu werden. Dabei wird das Ortungsgerät 10' mit der Geräterückseite 36 in unmittelbarer Nähe an die zu untersuchende Untersuchungsoberfläche 14 derart positioniert, dass der Abstand zwischen der Geräterückseite 36 und der Untersuchungsoberfläche 14 minimiert ist. Auf diese Weise wird erreicht, dass die von der Ortungsvorrichtung 12 emittierte elektromagnetische Strahlung in das zu untersuchende Werkstück 42 eindringen kann.

Der Benutzer kann nach Aufsetzen des Ortungsgeräts 10' auf der Untersuchungsoberfläche 14 lokal, d.h. statisch und ohne Umpositionieren des Ortungsgeräts 10', eine Ortung vornehmen. Dies ist in Figur 4a und in Figur 7 dargestellt. Eine lokale, d.h. statische Ortung ohne Umpositionieren des Ortungsgeräts 10', insbesondere der Ortungsvorrichtung 12, wird in erfindungsgemäßem ersten Betriebsmodus des Ortungssystems 10 ermöglicht. Alternativ oder anschließend kann der Benutzer das Ortungsgerät 10' während des Betriebs entlang der Untersuchungsoberfläche 14 bewegen, insbesondere verschieben oder verfahren. Dies wird in Figur 4b und 4c durch Pfeile angedeutet, die einen Pfad 56 einer Umpositionierung des Ortungsgeräts 10' andeuten. Dieser Pfad 56 kann in der in Figur 4b dargestellten Ausführungsform als Aneinanderreihung von senkrecht zueinander ausgerichteten Teilpfaden 56' entsprechen. Bezogen auf eine zu untersuchende Wand 42' können diese Teilpfade 56' beispielsweise horizontal und vertikal verlaufen. In einer bevorzugten, benutzerfreundlichen und besonders intuitiven Ausführungsform, dargestellt in Figur 4c, kann das Ortungsgerät 10' auch frei über die Untersuchungsoberfläche 14 bewegt werden. Besonders vorteilhaft ist in dieser Ausführungsform eine Bewegung entlang eines vorgegebenen, insbesondere starren, Pfads 56' nicht nötig. Somit kann der Benutzer in einer frei ausführbaren Wischbewegung das Ortungsgerät, insbesondere die Ortungsvorrichtung 12, über die Untersuchungsoberfläche 14 führen und die Untersuchungsoberfläche 14 auf einfache und intuitive Weise untersuchen. Die freie Wischbewegung des Ortungsgeräts resultiert in einem freien, insbesondere beliebig ausgestalteten Pfad 56", der unabhängig ist von einem vorgegebenen Raster oder einer vorgegebenen Spur für die Bewegung oder den Verfahrweg. Eine Ortung, die während eines Umpositionierens des Ortungsgeräts 10' durchgeführt wird, wird in erfindungsgemäßem zweiten Betriebsmodus des Ortungssystems 10 ermöglicht.

Der richtungs- und/oder ortsauflösende Ortungssensor 28 des Ortungssystems 10, insbesondere des Ortungsgeräts 10', weist einen vorgebbaren, insbesondere wählbaren oder einstellbaren Erfassungsbereich 52 auf. Insbesondere ist der Raumwinkel α (vgl. Figur 3) des Erfassungsbereichs wählbaren oder einstellbar. Innerhalb dieses Erfassungsbereichs 52 kann der Ortungssensor 28 vorteilhaft richtungs- und/oder ortsauflösend orten, d.h. Ortungsdaten zu unter einer Untersuchungsoberfläche 14 verborgenen Ortungsobjekten 30 richtungs- und/oder ortsaufgelöst erfassen. Insbesondere ist der richtungs- und/oder ortsauflösende Ortungssensor 28 in der dargestellten Ausführungsform des Ortungsgeräts 10' als durch elektrische Ansteuerung ausrichtbarer (richtbarer) Ortungssensor 28 realisiert.

Die Ortungsvorrichtung 12 des Ortungsgeräts 10' ist in einer beispielhaften Ausführungsform als eine Sende- und Empfangseinheit 58 für elektromagnetische Strahlung ausgebildet. Die Ortungsvorrichtung 12 umfasst zumindest eine LCR-Antenne 54 als Ortungssensor 28 sowie eine Schalteinheit 60 zu deren Ansteuerung. Eine beispielhaft ausgeführte LCR-Antenne 54 ist in Figur 5a in perspektivischer Seitenansicht dargestellt. Figur 5b zeigt dieselbe LCR-Antenne 54 in einer schematischen Seitenansicht vor einem zu untersuchenden Werkstück 42. Die LCR-Antenne 54 weist einen quadratischen Flächenstrahler 62, vier Schnittstellen 64a-d und vier Anpassungsmittel 66 auf. Die Anpassungsmittel 66 verbinden jeweils eine der Schnittstellen 64a-d mit dem Flächenstrahler 62. Zwei gegenüberliegende Schnittstellen 64a,c (bzw. 64b,d) sind jeweils elektrisch leitend mit der Schalteinheit 60 verbunden. Alternativ könnte eine LCR-Antenne 54 auch nur zwei Schnittstellen 64a,c aufweisen. Der Flächenstrahler 62 verläuft parallel zu einer Massefläche 68 der LCR-Antenne 54. Die Anpassungsmittel 66 weisen parallel zu dem Flächenstrahler 62 einen trapezförmigen, insbesondere einen dreieckförmigen Verlauf auf. Sie passen einen Wellenwiderstand des Flächenstrahlers 62 an einen Wellenwiderstand von Leitungen, die die jeweils zwei Schnittstellen 64a,c (bzw. 64b,d) mit der Schalteinheit 60 verbinden, an. Der Wellenwiderstand der Leitungen beträgt in einer vorteilhaften Ausführungsform fünfzig Ohm.

Wie in Figur 5b im schematischen Schnitt dargestellt, sendet die LCR-Antenne 54 in das Werkstück 42 eindringende elektromagnetische Signale auf der Geräterückseite 36 aus. Figur 5b zeigt weiter, dass die LCR-Antenne 54 in einer Richtung parallel zu der Untersuchungsoberfläche 14 drei je nach Beschaltung der LCR-Antenne 54 verschiedene Sende- und/oder Empfangscharakteristiken 70a-c aufweist. Diese Sende- und/oder Empfangscharakteristiken 70a-c sind in Figur 5b schematisch als Sende- und/oder Empfangskeulen (Antennendiagramme) wiedergegeben. Die Schalteinheit 60 schaltet bei einem Betrieb zwischen drei verschiedenen Sende- und/oder Empfangscharakteristiken 70a-c um. Dazu weist die Schalteinheit 60 ein nicht näher dargestelltes Phasen- und/oder Amplitudenstellglied und einen Abschlusswiderstand auf. Das Phasenglied verschiebt eine Phase eines durchlaufenden Signals zwischen Eingang und Ausgang um 180 Grad. Das Phasen- und/oder Amplitudenstellglied ist fest mit einer der Schnittstellen 64 verbunden. Alternativ könnte das Phasen- und/oder Amplitudenstellglied je nach Betriebszustand unterschiedlich verschaltet sein. Der Abschlusswiderstand ist dazu vorgesehen, eine der Schnittstellen 64a,c oder 64b,c reflexionsfrei abzuschließen. Dazu ist der Abschlusswiderstand mit den Schnittstellen 64a-d der LCR-Antenne 54 leitend verbindbar.

Neben der LCR-Antenne 54 sind zum Betrieb der LCR-Antenne 54 ferner eine Antennensteuerung, ein Signalgenerator, eine Antennenweiche und ein Demodulator vorgesehen, die in der Ortungsvorrichtung 12 zusammengefasst sind (nicht näher dargestellt). Der Signalgenerator erzeugt ein Sendesignal, und zwar von der Antennensteuerung zu einer Auswertung des Demodulators passend gesteuert. Die Antennenweiche leitet das Sendesignal von dem Signalgenerator zu der Schalteinheit 60 und ein von der LCR-Antenne 54 empfangenes Empfangssignal von der Schalteinheit 60 zu dem Demodulator. Alternativ könnte eine Ortungsvorrichtung 12 getrennte Sende- und Empfangsantennen aufweisen, von denen insbesondere nur eine Sende- und/oder Empfangscharakteristik nur einer Sendeantenne oder nur einer Empfangsantenne umgeschaltet wird. Durch ein Aussenden und ein Empfangen eines Ortungssignals bestimmt die Antennensteuerung vorteilhaft eine Distanz zwischen der LCR-Antenne 54 und dem Ortungsobjekt 30, zumindest jedoch eine Information über eine Existenz und/oder eine laterale Position des Ortungsobjekts 30 unter Verwendung der Sende- und/oder Empfangscharakteristiken 70a-c.

Zusätzlich bestimmt die Antennensteuerung aus den Signalen zumindest eine Information über eine Position des Ortungsobjekts 30 auf zumindest einer Achse 72 senkrecht zu einer mittleren Detektionsrichtung 74. Die Schalteinheit 60 schaltet die erste Sende- und/oder Empfangscharakteristik 70a, indem sie das Sendesignal auf die erste Schnittstelle 64a der LCR-Antenne 54 legt und die zugehörige zweite Schnittstelle 64c der LCR-Antenne 54 reflexionsfrei abschließt. Eine Hauptstrahlrichtung 76a der ersten Sende- und/oder Empfangscharakteristik 70a weist etwa einen Winkel von 20 Grad in eine erste Richtung relativ zu einer mittleren Detektionsrichtung 74 der LCR-Antenne 54 auf. Die Schalteinheit 60 schaltet die zweite Sende- und/oder Empfangscharakteristik 70c, indem sie das Sendesignal auf die entsprechende zweite Schnittstelle 64c der LCR-Antenne 54 legt und die zugehörige erste Schnittstelle 64a der LCR-Antenne 54 reflexionsfrei abschließt. Eine Hauptstrahlrichtung 76c der zweiten Sende- und/oder Empfangscharakteristik 70c weist etwa einen Winkel von 20 Grad in einer zu der ersten Richtung entgegengesetzten Richtung zu der mittleren Detektionsrichtung 74 der LCR-Antenne 54 auf. Die Schalteinheit 60 schaltet die dritte Sende- und/oder Empfangscharakteristik 70b, indem sie das Sendesignal direkt auf die erste Schnittstelle 64a der LCR-Antenne 54 und über das Phasen- und/oder Amplitudenstellglied auf die zweite Schnittstelle 64c der LCR-Antenne 54 legt. Die Schalteinheit 60 speist dabei ein Sendesignal mit zwei unterschiedlichen Phasenwinkeln und/oder Amplituden in zwei Schnittstellen 64a,c der LCR-Antenne 54 ein. Eine Hauptstrahlrichtung 76b der dritten Sende- und/oder Empfangscharakteristik 70b verläuft parallel zu der mittleren Detektionsrichtung 74 der LCR-Antenne 54. Somit ist die Schalteinheit 60 dazu vorgesehen, zwischen drei Sende- und/oder Empfangscharakteristiken 70a,b,c der einzelnen LCR-Antenne 54 umzuschalten. Es sei angemerkt, dass die Umschaltung zwischen Sende- und/oder Empfangscharakteristiken ebenfalls in einer senkrecht zur der Achse 70 verlaufenden zweiten Achse 70' (nicht näher dargestellt) erfolgt. Auf diese Weise kann durch gezielte Ansteuerung der LCR-Antenne 54 eine richtungs- und/oder ortsauflösende Ortung durchgeführt werden. In dem gezeigten Ausführungsbeispiel kann der gesamte Erfassungsbereich 52 der LCR-Antenne 54 vorteilhaft in fünf Sende- und/oder Empfangscharakteristiken 70a-c und 70d-e (nicht dargestellt) aufgeteilt werden. Durch gezielte Ansteuerung der LCR-Antenne 54 ist also vorteilhaft eine richtungs- und/ortsauflösende Ortung in zumindest fünf voneinander unabhängigen Raumrichtungen bzw. Ortungssegmenten realisierbar, wobei die verschiedenen Sende- und/oder Empfangscharakteristiken 70a-e jeweils eine Raumrichtung bzw. ein Ortungssegment definieren. Eine Darstellung der voneinander unabhängigen Ortungsrichtungen bzw. Ortungssegmenten einer derartigen LCR-Antenne 54, wie sie beispielsweise unter Verwendung des Anzeigeelements 20 an einen Benutzer ausgegeben werden kann, ist in Figur 6a-c dargestellt. Eine feinere Ansteuerung der LCR-Antenne 54, resultierend in einer höheren Anzahl von voneinander unabhängigen Ortungsrichtungen bzw. Ortungssegmenten, ist ebenfalls denkbar.

Die Auswertevorrichtung 24 des Ortungsgeräts 10' ist dazu vorgesehen, zumindest in einem ersten Betriebsmodus des Ortungssystems 10 eine richtungs- und/oder ortsaufgelöste Ortungsinformation basierend auf von dem richtungs- und/oder ortsauflösenden Ortungssensor 28 erfassten Ortungsdaten zu bestimmen und bereitzustellen. Insbesondere ist die Auswertevorrichtung 24 somit vorgesehen, aus den Ortungsdaten eine richtungs- und/oder ortsaufgelöste Ortungsinformation ohne Umpositionieren der Ortungsvorrichtung 12 bezogen auf die Untersuchungsoberfläche 14 zu bestimmen und bereitzustellen (vgl. insbesondere Figur 4, 7). Dazu erhält die Auswertevorrichtung 24 Ortungsdaten, die unter Verwendung der richtungs- und/oder ortsauflösenden Ortungseigenschaft der LCR-Ortungsantenne 54 erfasst werden. Die Auswerteergebnisse, insbesondere aus den richtungs- und/oder ortsaufgelösten Ortungsdaten abgeleitete Ortungsinformationen, werden von der Auswertevorrichtung 24 zur weiteren Verwendung über die Steuervorrichtung 26 entweder zur Versendung der Daten an die Datenkommunikationsschnittstelle 48, zur Abspeicherung an die Speichervorrichtung 50 oder direkt an einen Benutzer des Ortungsgeräts 10' ausgegeben. Eine Ausgabe an einen Benutzer kann insbesondere mittels der Anzeigevorrichtung 22, d.h. durch Darstellung auf dem Anzeigeelement 20, geschehen. Die Anzeigevorrichtung 22 ist dabei dazu vorgesehen, eine Ortungsinformation, insbesondere eine zumindest zweidimensionale Karteninformation 32 bevorzugt als eine zweidimensionale Karte darzustellen. Vorteilhaft lassen sich mit der Anzeigevorrichtung 22 unter Verwendung des ersten Betriebsmodus ermittelte richtungs- und/oder ortsaufgelöste Ortungsinformationen als zumindest zweidimensionale Karteninformation 32, insbesondere als eine zweidimensionale Karte, darstellen. Die Ausgabe auf dem Anzeigeelement 20 kann in der vorgestellten Ausführungsform wahlweise grafisch, numerisch und/oder alphanumerisch, beispielsweise in Form eines Messwerts, einer Messkurve, eines Signalverlaufs, eines Zeitverlauf, als Bilddaten, in einer Gradientendarstellung, mittels Symbolik, als zweidimensionale Karte und/oder in einer Kombination derer erfolgen.

Figur 6 zeigt verschiedene exemplarische Ausführungsformen einer zweidimensionalen Darstellung der Ortungsinformation unter Verwendung der Anzeigevorrichtung 22. Insbesondere handelt es sich bei der Darstellung um eine Darstellung in Form einer zweidimensionalen Karteninformation 32, insbesondere einer zweidimensionalen Karte. In Figur 6a werden die fünf unabhängig voneinander in jede der fünf Raumrichtungen von der Ortungsvorrichtung 12 bzw. von der der LCR-Ortungsantenne 54 ausgesendete bzw. empfangene Sende- und/oder Empfangscharakteristiken 70a-e schematisch als je ein Kreis dargestellt. Dabei stellt jeder Kreis je eine Projektion einer von der LCR-Antenne 54 in jede der fünf Raumrichtungen ausgesendete bzw. empfangene Sende- und/oder Empfangscharakteristik 70a-e dar. Wird in einer Sende- und/oder Empfangsrichtung ein Ortungssignal empfangen, so wird die daraus ermittelte Ortungsinformation durch eine schraffierte oder farbig gekennzeichnete Fläche, insbesondere Kreisfläche, der dieser Richtung bzw. diesem Ortungssegment zugehörigen Sende- und/oder Empfangscharakteristik 70a-e ausgegeben. In der exemplarisch dargestellten Ausführungsform wird in zwei der fünf Richtungen bzw. Ortungssegmenten (rechts und unten) ein Ortungssignal empfangen, dargestellt durch farblich gekennzeichnete (hier: schraffierte) Kreisflächen dieser Richtungen bzw. Ortungssegmente. In den anderen drei Richtungen bzw. Ortungssegmenten wird kein Ortungssignal empfangen, die entsprechenden Kreisflächen dieser Richtungen bzw. Ortungssegmente bleiben daher ungefärbt (hier: unschraffiert). Die von der LCR-Antenne 54 an die Auswertevorrichtung 24 weitergeleiteten Ortungsdaten werden somit ohne Umpositionieren der Ortungsvorrichtung 12 bezogen auf die Untersuchungsoberfläche 14 lediglich durch gezielte Ansteuerung der richtungs- und/oder ortsauflösenden LCR-Antenne 54 ermittelt.

In einer weiteren Ausführungsform, dargestellt in Figur 6b, werden die Ortungsdaten als interpolierte Ortungsdaten in Form einer zweidimensionalen Farbstufen- oder Graustufen-Kartendarstellung 32' (hier: Schraffur) der Ortungsinformationen ausgegeben. Die Funktion der Interpolation und/oder Extrapolation der Ortungsdaten und/oder Ortungsinformationen wird in dem ersten und/oder zweiten Betriebsmodus des Ortungssystems 10 durch die Auswertevorrichtung 24 zur Verfügung gestellt.

Alternativ ist eine Darstellung mittels einer Signalanzeige 78 denkbar, wie sie in Figur 6c dargestellt ist. Bei dieser Signalanzeige wird über farblich markierte Elemente eine Ortungsrichtung eines Ortungsobjekts 30 relativ zu dem Ortungssensor 28 an einen Benutzer ausgegeben. Insbesondere kann diese Darstellung in einer alternativen Ausführungsform des Ortungssystems 10 auch unter Verwendung eines zum Anzeigeelement 20 separat ausgeführten weiteren Anzeigeelements 20' ausgegeben werden.

Figur 7 zeigt anhand dreier unterschiedlicher Positionen eines Ortungsgeräts 10' auf einer Untersuchungsoberfläche 14, und somit bezogen auf ein Ortungsobjekt 30, die Auswirkung der veränderten Ortungsinformation auf eine Darstellung der Ortungsinformation unter Verwendung einer interpolierten zweidimensionalen - Kartendarstellung 32. Insbesondere ist erkennbar, dass die zweidimensionale Kartendarstellung 32 die Ortungsinformation, insbesondere ein Vorhandensein eines Ortungsobjekts 30, hier das Vorhandensein einer in einer untersuchten Mauer befindlichen Armierung, intuitiv verständlich wiedergibt.

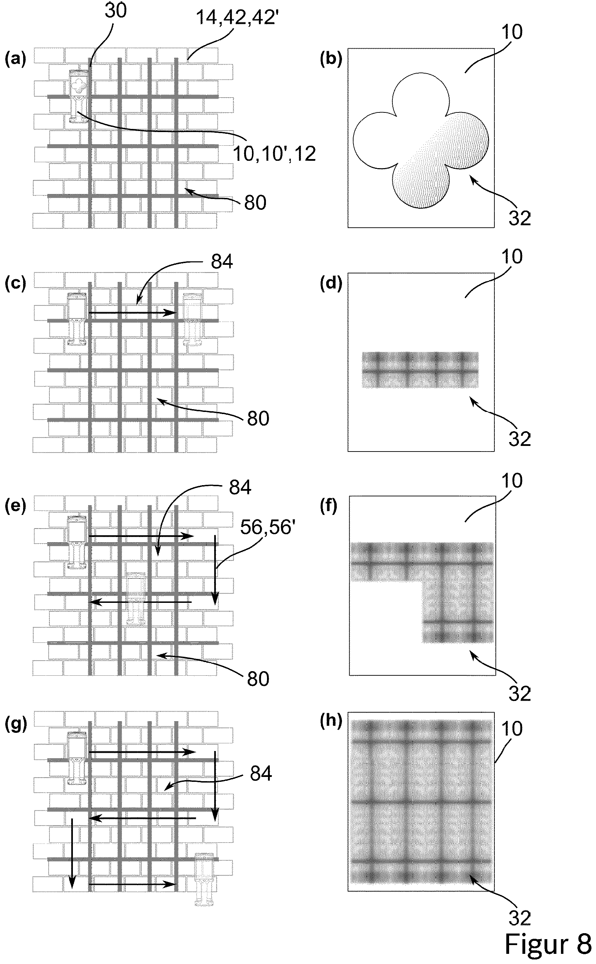

Weiter ist die Auswertevorrichtung 24 dazu vorgesehen, in einem zweiten Betriebsmodus eine zumindest dreidimensionale Ortungsinformation aus den Ortungsdaten und den Positionsdaten durch Zuordnung von Ortungsdaten zu Positionsdaten zu bestimmen und bereitzustellen (vgl. insbesondere auch Figur 4b-c und Figur 8). Aus dieser zumindest dreidimensionalen Ortungsinformation kann mittels der Auswertevorrichtung 24 eine zumindest zweidimensionale Karteninformation 32 bestimmt und bereitgestellt werden, insbesondere in Echtzeit bestimmt und bereitgestellt werden.

Die zumindest zweidimensionale Karteninformation 32 ist als eine Menge von nicht näher dargestellten Feldern (Pixeln) ausgebildet, die eine Matrix-Struktur mit in Zeilen und Spalten angeordneten Komponenten aufweist. Eine Komponente der Matrix entspricht dabei einem Feld der Karteninformation. Jeder Ausgabewert der Ortungsvorrichtung 12 ist zumindest einem Feld zugeordnet. Eine Feldposition wird durch ein Kartenkoordinatenpaar festgelegt, das einen Karten-x-Wert und einen Karten-y-Wert aufweist. Die Auswertevorrichtung 24 ist dazu vorgesehen, die Ortungsdaten aufgrund der Verknüpfung mit den Positionsdaten des Positionssensors 40 jeweils zumindest einem Feld der Karteninformation zuzuordnen. Somit ordnet die Auswertevorrichtung 24 die Ortungsdaten des Ortungssensors 28 mittels der Positionsdaten des Positionssensors 40 direkt Feldern der zweidimensionalen Karteninformation 32 zu. Es ist denkbar, dass die Auswertevorrichtung 24 die Ortungsdaten genau einem Feld zuordnet oder mehreren Feldern zuordnet. Es ist auch denkbar, dass mehrere Ortungsdaten einem Feld zugeordnet werden und dass die Auswertevorrichtung 24 dazu die Ortungsdaten gewichtet. Grundsätzlich sind verschiedene zweckmäßige Gewichtungen anwendbar, und die Gewichtungen können abhängig von den Positionsdaten ausgebildet sein. In einem Betriebszustand passt die Auswertevorrichtung 24 eine Zuordnung von Ortungsdaten zu Feldern einer Datendichte an und verfeinert insbesondere die Zuordnung und damit eine räumliche Auflösung und verbessert die Karteninformation 32. Bei einem Ortungsvorgang, bei dem der Benutzer die Untersuchungsoberfläche 14 oder einen Bereich der Untersuchungsoberfläche 14 mehrfach mit dem Ortungsgerät 10' und somit mit dem Ortungssensor 28 überfährt, vergrößert sich eine Datendichte und die Auswertevorrichtung 24 verfeinert die Zuordnung von Ortungsdaten zu den Feldern der Karteninformation 32 und erhöht und/oder verfeinert eine räumliche Auflösung der Karteninformation 32. Dazu kann vorgesehen sein, dass die Auswertevorrichtung 24 für aktuelle Ortungsdaten und Positionsdaten prüft, ob ein entsprechender Datensatz mit einem gleichen Positionskoordinatenpaar aus einer vorangegangenen Messung bereits vorhanden ist, beispielsweise in der Speichervorrichtung 50 vorhanden ist. Wenn das der Fall ist, bezieht die Auswertevorrichtung 24 die Ortungsdaten, insbesondere aus der Speichervorrichtung 50 ausgelesene Ortungsdaten, in eine Berechnung der Ausgabewerte ein und verwendet dabei eine Gewichtung der aktuellen Ortungsdaten gegenüber den bereits vorhandenen Daten. Grundsätzlich sind dabei verschiedene zweckmäßige Gewichtungen anwendbar.

Insbesondere ist die Auswertevorrichtung 24 somit dazu vorgesehen, bereits bestimmte und/oder dargestellte Ortungsinformationen, insbesondere zumindest zweidimensionale Karteninformationen 32, bei einem Umpositionieren der Ortungsvorrichtung 12, insbesondere bei einem erneuten Überfahren eines Bereichs der Untersuchungsoberfläche 14, zu ergänzen und/oder zu aktualisieren und/oder zu verfeinern und/oder zu überschreiben. Vorteilhaft können auch bereits im ersten Betriebsmodus bestimmte Ortungsinformationen, insbesondere zumindest zweidimensionale Karteninformationen 32, bei einem Umpositionieren der Ortungsvorrichtung 12 auf diese Weise in Folge des Verfahrens des Ortungsgeräts 10' und/oder des Überfahrens neuer Bereiche 80 und/oder des erneuten Überfahrens bereits untersuchter Bereiche 84 der Untersuchungsoberfläche 14 ergänzt und/oder aktualisiert und/oder verfeinert und/oder überschrieben werden. Die Auswertevorrichtung 24 erlaubt somit, Ortungsdaten und/oder Ortungsinformationen, insbesondere zumindest zweidimensionale Karteninformationen 32, die in dem ersten und in dem zweiten Betriebsmodus bestimmt werden, zu kombinieren. Folglich kann ebenfalls eine kombinierte Ausgabe an einen Benutzer des Ortungsgeräts 10' erfolgen.

In dem vorliegenden Ausführungsbeispiel weisen die Ausgabewerte der zumindest zweidimensionalen Karteninformation 32 einen Farbwert einer kontinuierlichen oder einer quasi-kontinuierlichen Farbskala auf. Die Auswertevorrichtung 24 bestimmt den Farbwert zu einer Kennzeichnung von Bereichen, die ein unter der Untersuchungsoberfläche 14 verborgenes Ortungsobjekt 30 enthalten. Insbesondere werden geortete Objekte 30 in Abhängigkeit der Tiefe, in der sie unter der Untersuchungsoberfläche 14 geortet werden, mit unterschiedlichen Farbwerten dargestellt.

Die Auswertevorrichtung 24 ist dazu vorgesehen, die Karteninformation 32 in Echtzeit zu bestimmen und bereitzustellen. Die Auswertevorrichtung 24 verarbeitet im Betrieb jeweils die Daten des Ortungssensors 28 und des Positionssensors 40 seriell in der Reihenfolge ihrer Erfassung durch den Ortungssensor 28 und den Positionssensor 40. Eine Verarbeitungsrate lässt bei dem Benutzer des Ortungsgeräts 10' den Eindruck entstehen, dass Ortungsdaten für einen mit dem Ortungssensor 28 überfahrenen Bereich 84 unmittelbar zugeordnet und als Karteninformation 32 bereitgestellt werden. Eine Datenrate von Ortungsdaten und Positionsdaten, die von der Auswertevorrichtung 24 verarbeitet wird, ist derart an eine Verarbeitungsgeschwindigkeit der Auswertevorrichtung 24 angepasst, dass Daten, die von der Auswertevorrichtung 24 nicht unmittelbar verarbeitet werden können, unberücksichtigt bleiben.

Die Auswertevorrichtung 24 ist dazu vorgesehen, die Ortungsdaten und/oder die Ortungsinformationen in beiden Betriebsmodi des Ortungssystems 10 zu inter- und extrapolieren. Die Auswertevorrichtung 24 ist dazu vorgesehen, eine inter- und extrapolierte zweidimensionale Karteninformation 32 bereitzustellen, d.h. zumindest für einen Teil der Bereiche der zweidimensionalen Karteninformation 32, insbesondere für Bereiche ohne Ortungsdaten, Inter- oder Extrapolationsdaten bereitzustellen. Vorzugsweise werden Ortungsdaten von Bereichen in einer Umgebung eines Bereichs ohne Ortungsdaten zur Berechnung inter- oder extrapolierter Ortungsinformationen genutzt. Somit interpoliert die Auswertevorrichtung 24 räumlich Ortungsdaten aus einer Umgebung eines Bereichs zur Ermittlung eines Interpolationswertes und gewichtet dazu die Ortungsdaten aus einer Umgebung des Bereichs. Die Auswertevorrichtung 24 erzeugt mittels Inter- und/oder Extrapolation Ausgabewerte für Bereiche in einer Umgebung von aktuellen Positionsdaten. Insbesondere sind unter den Bereichen der Karteninformation auch einzelne Felder der in einer Matrix-Struktur verarbeiteten Karteninformation zu verstehen.

Die Auswertevorrichtung 24 ist dazu vorgesehen, zumindest einen Teil der Ortungsdaten und/oder der Ortungsinformation bei einer Erzeugung und/oder bei der Modifizierung der Karteninformation 32 auszuschließen und insbesondere nicht anzuzeigen. Dazu ist die Auswertevorrichtung 24 vorgesehen, von dem Ortungssensor 28 übermittelte Ortungsdaten mit einem zu erwartenden Wertebereich zu vergleichen, insbesondere beispielsweise mit gespeicherten Ortungsdaten und/oder mit Ortungsdaten, die für benachbarte Bereiche bzw. Felder bezogen auf die Untersuchungsoberfläche 14 bereits ermittelt wurden. Unter Verwendung einer Bewertungsvorschrift kann somit, beispielsweise in Abhängigkeit von einer Abweichung der Ortungsdaten untereinander oder in Abhängigkeit eines Vergleichs der Ortungsdaten mit dem zu erwartenden Wertebereich, ein Wert für eine Datenqualität bereitgestellt werden. Die Bewertungsvorschrift berücksichtigt ferner Daten des Positionssensors 40 und prüft, ob die Ortungsdaten zuverlässig Positionsdaten zugeordnet werden können. Die Auswertevorrichtung 24 schließt Ortungsdaten in Abhängigkeit von der ermittelten Datenqualität und Ortungsdaten, die nicht zuverlässig Positionsdaten zuordenbar sind, bei der Erzeugung und/oder bei der Modifizierung der Karteninformation 32 aus.

Ferner kann vorgesehen sein, dass beispielsweise ein Kontrastwert, ein Grauwert, ein Farbwert, eine Farbsättigung oder eine Helligkeit der Darstellung einer zusätzlichen Information bezüglich der durchgeführten Ortung dient. In einer Ausführungsform lassen sich ungenaue oder unzuverlässige Daten in der zweidimensionalen Karteninformation 32 markieren, indem sie beispielsweise statt in Farbstufen in Graustufen dargestellt werden. Der Benutzer kann dann beurteilen, welche Bereiche der Untersuchungsoberfläche 14 ein weiteres Mal mit dem Ortungsgerät 10', insbesondere mit der Ortungsvorrichtung 12, überfahren werden müssen, um die Qualität und/oder die Dichte der Daten zu erhöhen. Der Benutzer überfährt Bereiche der Untersuchungsoberfläche 14 gegebenenfalls ein weiteres Mal oder mehrere Male und das Ortungssystem 10 ergänzt, verdichtet und/oder verbessert die zweidimensionale Karteninformation 32 und die Anzeige der Karteninformation 32. Insbesondere erhöht und/oder verfeinert das Ortungssystem 10 die räumliche Auflösung der Karteninformation 32 und/oder der Anzeigevorrichtung 22.

Ferner ist die Auswertevorrichtung 24 dazu vorgesehen, in Abhängigkeit von einer Verfahrgeschwindigkeit des Ortungsgeräts 10', insbesondere der Ortungsvorrichtung 12, bezogen auf die Untersuchungsoberfläche 14 ein Warnsignal auszugeben. Das Warnsignal wird insbesondere ausgegeben, wenn eine Genauigkeit und/oder Verlässlichkeit der Ortungsdaten aufgrund einer zu hohen Beschleunigung und/oder aufgrund einer zu hohen Verfahrgeschwindigkeit des Ortungsgeräts 10' unter einen vorgegebenen und/oder vorgebbaren Wert sinkt. In dem vorliegenden Ausführungsbeispiel weist das Ortungssystem 10 ein nicht näher dargestelltes Signalelement auf, das zur Übermittlung des Warnsignals mit der Auswertevorrichtung 24 verbunden und dazu vorgesehen ist, dem Benutzer das Warnsignal auszugeben. In dem vorliegenden Ausführungsbeispiel ist das Signalelement als ein akustisches Signalelement ausgebildet. Grundsätzlich ist aber auch denkbar, dass das Signalelement als ein optisches oder taktiles Signalelement, beispielsweise ein Vibrationselement, ausgebildet ist oder dazu vorgesehen ist, ein anderes zweckmäßiges Signal auszugeben.

Ferner ist die Auswertevorrichtung 24 dazu vorgesehen, in Abhängigkeit von den Positionsdaten ein Warnsignal auszugeben. Während des Betriebs gibt die Auswertevorrichtung 24 ein erstes Warnsignal aus, wenn die Positionsdaten in einem Randbereich des angezeigten Ausschnitts angeordnet sind. Der Randbereich weist eine Breite von beispielsweise 10 Prozent einer Gesamterstreckung des angezeigten Ausschnitts auf. Grundsätzlich kann die Breite auch einen anderen zweckmäßigen Wert aufweisen. Alternativ oder zusätzlich gibt die Auswertevorrichtung 24 ein weiteres in seiner Art von dem ersten Warnsignal verschiedenes Warnsignal aus, wenn die aktuellen Positionsdaten außerhalb des angezeigten Ausschnitts angeordnet sind. Das Ortungsgerät 10' verwendet hierzu das Signalelement zur Ausgabe eines akustischen Signals.

Ferner ist denkbar, dass die Auswertevorrichtung 24 dazu vorgesehen ist, eine Richtungsinformation bereitzustellen, die dem Benutzer anzeigt, in welcher Richtung Positionen des angezeigten Ausschnitts relativ zu den aktuellen Positionsdaten liegen. Die Richtungsinformation unterstützt den Benutzer bei einer Führung des Ortungsgeräts 10' in den Bereich der Untersuchungsoberfläche 14, der dem angezeigten Ausschnitt entspricht.

Die Anzeigevorrichtung 22 ist dazu vorgesehen, den angezeigten Ausschnitt der Karteninformation 32 in Abhängigkeit von Positionsdaten und/oder in Abhängigkeit vom Betriebsmodus zu variieren. In einem Betriebszustand ermittelt die Anzeigevorrichtung 22 für jeden Koordinatenwert Grenzen eines Wertebereichs von erfassten Positionsdaten, d.h. ein Minimum und ein Maximum der erfassten x-Koordinatenwerte, sowie ein Minimum und ein Maximum der erfassten y-Koordinatenwerte. Der Wertebereich von erfassten Positionsdaten verändert sich dynamisch aufgrund der Bewegung des Ortungsgeräts 10' über die Untersuchungsoberfläche 14. In dem Betriebszustand weist der angezeigte Ausschnitt einen festen Abbildungsmaßstab auf, der ein Verhältnis einer Länge einer Strecke auf der Untersuchungsoberfläche 14 zu einer Länge eines Bildes der Strecke in dem angezeigten Ausschnitt angibt. Die Anzeigevorrichtung 22 verschiebt den angezeigten Ausschnitt in eine Richtung, die einer Verfahrrichtung (vgl. Pfad 56) des Ortungsgeräts 10' entspricht, und zeigt zuletzt erfasste und zugeordnete Ortungsdaten innerhalb des Ausschnitts an. Die Anzeigevorrichtung 22 verschiebt den angezeigten Ausschnitt, wenn zuletzt erfasste Positionsdaten in einem Randbereich des angezeigten Ausschnitts angeordnet sind. In einem Betriebszustand verschiebt die Anzeigevorrichtung 22 den angezeigten Ausschnitt dynamisch und zentriert eine Position des Ortungssensors in dem angezeigten Ausschnitt. Bei einer Rotation oder Drehung des Ortungsgeräts 10' auf der Untersuchungsoberfläche 14 wird die angezeigte Ausschnitt der Karteninformation 32 entgegen der Richtung der Drehbewegung rotiert, sodass der angezeigte Ausschnitt auch unter Drehung des Ortungsgeräts 10' die unter der Untersuchungsoberfläche 14 georteten Ortungsobjekte 30 lagegetreu und somit nicht um den Rotationswinkel verdreht wiedergibt.

Die Anzeigevorrichtung 22 ist dazu vorgesehen, den angezeigten Ausschnitt der Karteninformation zu skalieren. Die Anzeigevorrichtung 22 ist dazu vorgesehen, den angezeigten Ausschnitt in Abhängigkeit von den Positionsdaten zu skalieren. Die Anzeigevorrichtung 22 weist einen Betriebszustand auf, in dem der angezeigte Ausschnitt einen gesamten Bereich von erfassten Positionsdaten umfasst. Die Anzeigevorrichtung 22 passt in dem Betriebszustand die Skalierung an, d.h. die Anzeigevorrichtung 22 verkleinert den Abbildungsmaßstab und der angezeigte Ausschnitt entspricht einem größeren Bereich der Untersuchungsoberfläche 14. Eine Änderung der Skalierung erfolgt beispielsweise zwischen den in Figur 8b und 8d dargestellten Karteninformationen 32.

In einem weiteren Betriebszustand weist die Anzeigevorrichtung 22 ein Zeitintervall auf, das eine Menge von Positionsdaten einschränkt, die für eine Bestimmung des angezeigten Ausschnitts herangezogen werden. Für den Wertebereich werden in dem weiteren Betriebszustand nur Positionsdaten berücksichtigt, die von einem aktuellen Zeitpunkt ausgehend in dem Zeitintervall erfasst wurden. In einem Ortungsvorgang, bei dem in dem Zeitintervall der Ortungssensors 28 innerhalb eines kleinen Bereichs der Untersuchungsoberfläche 14 angeordnet ist, vergrößert die Anzeigevorrichtung 22 den Abbildungsmaßstab und der angezeigte Ausschnitt entspricht einem kleineren Bereich der Untersuchungsoberfläche 14. Die Anzeigevorrichtung 22 erhöht und/oder verfeinert eine Auflösung des angezeigten Ausschnitts und zeigt mehr Details eines Bereichs der Untersuchungsoberfläche 14, der dem angezeigten Ausschnitt entspricht. Der Benutzer steuert über die Ausdehnung seiner Verfahrbewegung des Ortungsgeräts 10', insbesondere der Ortungsvorrichtung 34, die Auflösung des angezeigten Ausschnitts.

Die Anzeigevorrichtung 22 ist dazu vorgesehen, den dargestellten Ausschnitt der Karteninformation 32 in Abhängigkeit von einer Verfahrgeschwindigkeit zu skalieren. Die Anzeigevorrichtung 22 weist eine Berechnungsvorschrift auf, die angibt, wie sich der Abbildungsmaßstab aus der Verfahrgeschwindigkeit ergibt. In einem Betriebszustand bestimmt die Anzeigevorrichtung 22 den Abbildungsmaßstab in Abhängigkeit von der Verfahrgeschwindigkeit. Die Anzeigevorrichtung 22 bestimmt für eine große Verfahrgeschwindigkeit einen kleinen Abbildungsmaßstab und für eine kleine Verfahrgeschwindigkeit einen großen Abbildungsmaßstab. Für eine kleine Verfahrgeschwindigkeit stellt die Anzeigevorrichtung 22 somit einen großen Abbildungsmaßstab ein und erhöht und/oder verfeinert eine Auflösung des angezeigten Ausschnitts und zeigt mehr Details eines Bereichs der Untersuchungsoberfläche 14, der dem angezeigten Ausschnitt entspricht. Der Benutzer steuert über die Verfahrgeschwindigkeit des Ortungsgeräts 10', insbesondere der Ortungsvorrichtung 34, die Auflösung des angezeigten Ausschnitts.

In einer alternativen Ausführungsform des Ortungssystems 10 kann ferner vorgesehen sein, dass das Ortungssystem 10 eine weitere Anzeigevorrichtung 22' aufweist, die dazu vorgesehen ist, eine Karteninformation 32 auf die Untersuchungsoberfläche 14 zu projizieren. Dazu kann die weitere Anzeigevorrichtung 22' einen farbfähigen Projektor aufweisen. Das Ortungssystem 10 ist dann dazu vorgesehen, anhand von Benutzereingaben einen Projektionspunkt des Projektors oder eine Mehrzahl von Projektionspunkten zu dem Bezugspunkt oder der Mehrzahl von Bezugspunkten für den Positionssensor 40 zuzuordnen. Die Auswertevorrichtung 24 ist dann dazu vorgesehen, die Zuordnung der Projektionspunkte zu den Bezugspunkten des Positionssensors 40 für eine Skalierung und einer Referenzierung der Ortungsdaten in Bezug auf die von dem Projektor angezeigte Karteninformation 32 auszuwerten. Grundsätzlich ist es denkbar, dass das Ortungssystem 10 die weitere Anzeigevorrichtung 22' als die einzige Anzeigevorrichtung 22 aufweist.

Ferner ist das Ortungsgerät 10' vorgesehen, Daten zu einer Modifikation und/oder Auswertung der zweidimensionalen Kartendarstellung 32 einem externen Datengerät (nicht näher dargestellt) oder einer externen Anwendung bereitzustellen. In einem Ausführungsbeispiel kann das externe Datengerät als eine mobile Recheneinheit, beispielsweise ein Smartphone oder ein tragbarer Computers, ausgebildet sein. Zur Datenübertragung weist das Ortungsgerät 10' eine Datenkommunikationsschnittstelle 48 auf, die in einer bevorzugten Ausführungsform als eine WLAN- oder Bluetooth-Schnittstelle realisiert ist.

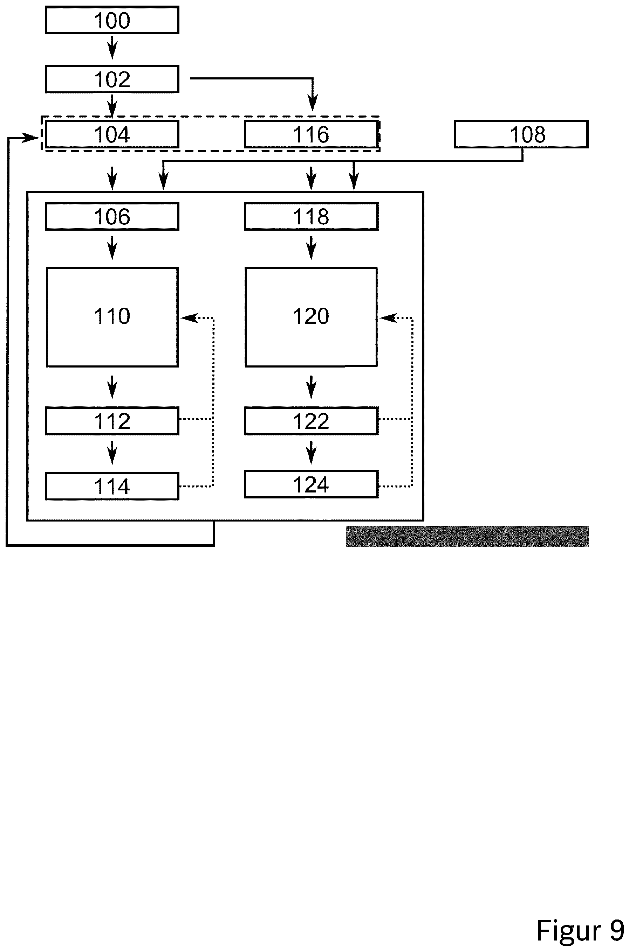

Im Folgenden wird anhand der Figuren 8 und 9 die Funktionsweise und Bedienung, insbesondere das der Bedienung des Ortungsgeräts 10' zu Grunde liegende Verfahren, in einem beispielhaften Szenario erläutert. In diesem Szenario möchte ein Benutzer des Ortungsgeräts 10' eine Gebäudewand 42' als Werkstück 42 auf verborgene Ortungsobjekte 30, insbesondere beispielsweise Armierungen, untersuchen. Mit Einschalten des Ortungsgeräts 10' über ein Betätigungselement 18 führt das Ortungsgerät 10' zunächst eine Kalibrierung der funktionalen Komponenten des Ortungssystems 10 durch (Verfahrensschritt 100). Die Kalibrierung dient der Inbetriebnahme der funktionalen Komponenten des Ortungsgeräts 10', unter anderem dem Auslesen der internen Speichervorrichtung 50, dem Laden von Betriebsroutinen, der Initialisierung des Ortungssensors 28, der Auswertevorrichtung 24, des Positionssensors 40 sowie der Aufsatzerkennungsvorrichtung 44. Bei dieser Inbetriebnahme befindet sich das Ortungsgerät 10' vorzugsweise in der Hand des Benutzers frei in der Luft, d.h. insbesondere ohne Kontakt zu einer Untersuchungsoberfläche 14. Anschließend ist das Ortungsgerät 10' einsatzbereit und befindet sich in einem Wartezustand, Leerlaufmodus oder Detektionszustand (Verfahrensschritt 102).

Der Benutzer des Ortungsgeräts 10' setzt das Ortungsgerät 10' mit der dafür vorgesehenen Geräterückseite 36 an einer beliebigen Stelle auf die zu untersuchende Untersuchungsoberfläche 14 der Wand 42' auf. Dabei drückt der Benutzer das Ortungsgerät 10' leicht derart gegen die Wand 42', dass ein unabsichtliches Verrutschen und/oder Verwackeln des Ortungsgeräts 10' auf der Wand 42' vermieden wird. Die Aufsatzerkennungsvorrichtung des Ortungsgeräts 10' detektiert bzw. erkennt das Aufsetzen des Ortungsgeräts 10' auf die Untersuchungsoberfläche 14 in Verfahrensschritt 104 und leitet diese Information an die Steuervorrichtung 26 des Ortungsgeräts 10' weiter. Die Steuervorrichtung 26 initiiert in Folge des Erkennens eines Aufsetzens der Ortungsvorrichtung 12 auf die Untersuchungsoberfläche 14 mittels der Aufsatzerkennungsvorrichtung 44 daraufhin einen automatischen Wechsel des Ortungsgeräts 10' in den ersten Betriebsmodus in Verfahrensschritt 106. Fortan ist das Ortungsgerät 10' betriebsbereit und insbesondere bereit, in dem ersten Betriebsmodus eine richtungs- und/oder ortsaufgelöste Ortungsinformation aus den Ortungsdaten des Ortungssensors ohne Umpositionieren des Ortungsgeräts 10', insbesondere der Ortungsvorrichtung 12, bezogen auf die Untersuchungsoberfläche 14 zu bestimmen und anzuzeigen.

Zur Änderung oder Beeinflussung der geräteintern automatisch durchgeführten Wahl des ersten Betriebsmodus hat der Benutzer des Ortungsgeräts 10' jederzeit auch die Möglichkeit, einen zu verwendenden Betriebsmodus des Ortungssystems 10 manuell zu wählen (Verfahrensschritt 108). Dies erfolgt insbesondere über Auswahl eines Betriebsmodus mittels der Eingabevorrichtung des Ortungsgeräts 10'. Die automatisch durchgeführte Wahl einer der Betriebsmodi wird auf diese Weise überschrieben.

Sobald das Ortungsgerät 10' sich in dem ersten Betriebsmodus befindet, führt der richtungs- und/oder ortsauflösende Ortungssensor 28 der Ortungsvorrichtung 12 in einem vorgebbaren, insbesondere wählbaren oder einstellbaren Erfassungsbereich 52, kontinuierlich eine Ortung durch (Verfahrensschritt 110, Figur 8a). Der Ortungssensor 28 ist in diesem Ausführungsbeispiel als Sende- und Empfangsvorrichtung 58 mit zumindest einer LCR-Antenne 54 realisiert, die vorgesehen ist, als elektrisch ausrichtbarer Ortungssensor 28 in dem Erfassungsbereich 52 eine richtungs- und/oder ortsauflösende Ortung zu ermöglichen (vgl. Figur 5a,b). Somit wird in dem ersten Betriebsmodus des Ortungssystems 10 in Verfahrensschritt 110 eine richtungs- und/oder ortsaufgelöste Ortungsinformation aus den Ortungsdaten ohne Umpositionieren der Ortungsvorrichtung 12 bezogen auf die Untersuchungsoberfläche 14 bestimmt und der Auswertevorrichtung 24 bereitgestellt (Verfahrensschritt 110).

Die Auswertevorrichtung 24 empfängt die Ortungsdaten der Ortungsvorrichtung 12 und bestimmt in dem ersten Betriebsmodus des Ortungssystems 10 eine richtungs- und/oder ortsaufgelöste Ortungsinformation basierend auf von dem richtungs- und/oder ortsauflösenden Ortungssensor 28 erfassten Ortungsdaten. Bevorzugt bestimmt die Auswertevorrichtung 24 in dem ersten Betriebsmodus des Ortungssystems 10 aus den richtungs- und/oder ortsaufgelösten Ortungsdaten eine zumindest zweidimensionale Karteninformation 32, insbesondere eine Karte (Figur 8b, vgl. auch Figur 6a-c und 7). Ferner führt die Auswertevorrichtung 24 im Bedarfsfall eine Inter- und/oder Extrapolation und/oder eine Gewichtung der Ortungsdaten durch und generiert derart hochwertige ausgewertete Ortungsinformationen. Die Auswertevorrichtung 24 übermittelt anschließend die Ortungsinformation, insbesondere die Karteninformation 32, geräteintern an die Anzeigevorrichtung 22 und/oder an die Datenkommunikationsschnittstelle 48 und/oder die Speichervorrichtung 50 zur weiteren Verwendung. Die Auswerteschritte sind in Verfahrensschritt 112 zusammengefasst.

Die Anzeigevorrichtung 22 dient der Darstellung der Ortungsinformationen und ist insbesondere vorgesehen, eine zumindest zweidimensionale Karteninformation 32, bevorzugt eine Karte, darzustellen (Figur 8b, vgl. auch Figur 6a-c, 7). Insbesondere ist die Anzeigevorrichtung 22 dazu vorgesehen, unter Verwendung des ersten Betriebsmodus bestimmte richtungs- und/oder ortsaufgelöste Ortungsinformationen als zumindest zweidimensionale Karteninformation 32 darzustellen. Die Anzeigevorrichtung 22 prüft den angezeigten Ausschnitt und die Skalierung des Ausschnitts und passt den Ausschnitt und/oder die Skalierung des Ausschnitts entsprechend an. Die Anzeigevorrichtung 22 zeigt dann den vorbereiteten Ausschnitt der Karteninformation 32 an. Alle relevanten, nötigen oder sinnvollen Verfahrensschritte im Zusammenhang mit der Darstellung der Ortungsinformation sind in Verfahrensschritt 114 zusammengefasst.

Der Benutzer erhält auf diese Weise eine richtungs- und/oder ortsaufgelöste Ortungsinformation, die ohne Umpositionieren der Ortungsvorrichtung 12 bezogen auf die Untersuchungsoberfläche 14 bestimmt wurde. Eine intuitive und einfache Interpretation der dargestellten Ortungsinformation ist möglich. Insbesondere kann der Benutzer des Ortungsgeräts 10' anhand einer bevorzugt dargestellten Karteninformation 32 (vgl. Figur 8b) bereits erkennen, ob sich unmittelbar unter dem Ortungssensor 28 des Ortungsgeräts 10' ein verborgenes Ortungsobjekt 30 befindet. Diese Information benötigt er, wenn er beispielsweise genau an dieser Stelle (Mittelpunkt des Ortungssensors 28) ein Loch bohren möchte.

Ferner kann der Benutzer der dargestellten richtungs- und/oder ortsaufgelösten Karteninformation 32 entnehmen, in welcher Richtung bezogen auf den Ortungssensor 28 - und damit auch bezogen auf die Untersuchungsoberfläche 14 - ein Ortungsobjekt 30 verborgen liegt. In dem in Figur 8b dargestellten Beispiel einer zumindest zweidimensionalen Karteninformation 32 liegt zumindest ein verborgenes Ortungsobjekt 30 in Richtung rechts und unten, dargestellt durch eine farbliche Kennzeichnung in der ausgegebenen Karteninformation 32 (hier: Schraffur). Folglich kann der Benutzer interessante Bereiche der Untersuchungsoberfläche 14 anhand der Karteninformation 32 identifizieren.

Bevorzugt bestimmt die Auswertevorrichtung 24 die Karteninformation 32 in Echtzeit, sodass eine zeitlich aufgelöste Darstellung der Karteninformation 32 mittels der Anzeigevorrichtung 22 möglich ist. Eine Ortung zeitlich veränderlicher Ortungsobjekte ist somit zeitaufgelöst möglich. Beispielsweise kann anhand der sich ändernden Karteninformation 32 beobachtet werden, wie sich ein Ortungsobjekt 30 durch den Erfassungsbereich 52 des Ortungssensors 28 hindurchbewegt. Eine Verarbeitungsrate lässt bei dem Benutzer den Eindruck entstehen, dass Ortungsdaten unmittelbar ohne wesentliche zeitliche Verzögerung als Karteninformation 32 bereitgestellt werden.

Ist der Benutzer an weiteren Informationen zu den unter der Untersuchungsoberfläche 14 verborgenen Ortungsobjekten 30 interessiert, bewegt er das Ortungsgerät 10' mit dem Ortungssensor 28 und dem Positionssensor 40 in einer bevorzugt freien Bewegung über die Untersuchungsoberfläche 14 (Figuren 8c,e,g). Die Steuervorrichtung 26 des Ortungsgeräts 10' erkennt die Positionsänderung der Ortungsvorrichtung 12 bezogen auf die Untersuchungsoberfläche 14 anhand der von dem Positionssensor 40 bereitgestellten Positionsdaten. Eine Empfindlichkeit des Erkennens der Positionsänderung ist dem Ortungsgerät 10' durch den Benutzer des Ortungsgeräts 10' vorgebbar, insbesondere wählbar oder einstellbar. In Folge der Erkennung der Positionsänderung in Verfahrensschritt 116 versetzt die Steuervorrichtung 26 das Ortungssystem 10 in den zweiten Betriebsmodus (Verfahrensschritt 118).

In dem zweiten Betriebsmodus erfasst der Ortungssensor 28 Ortungsdaten der Ortungsobjekte 30. Der Ortungssensor 28 übermittelt die Ortungsdaten an die Auswertevorrichtung 24 (Verfahrensschritt 120). Gleichzeitig erfasst der Positionssensor 40 Positionsdaten (Verfahrensschritt 120). Der Positionssensor 40 übermittelt die Positionsdaten ebenfalls an die Auswertevorrichtung 24. Die Auswertevorrichtung 24 ist vorgesehen, in dem zweiten Betriebsmodus eine zumindest dreidimensionale Ortungsinformation aus den Ortungsdaten und den Positionsdaten durch Zuordnung von Ortungsdaten zu Positionsdaten zu bestimmen und bereitzustellen (Verfahrensschritt 122). Dazu ordnet die Auswertevorrichtung 24 Ortungsdaten den Positionsdaten zu. Aus der erhaltenen zumindest dreidimensionalen Ortungsinformation bestimmt die Auswertevorrichtung 24 ferner in dem zweiten Betriebsmodus des Ortungssystems 10 eine zumindest zweidimensionale Karteninformation 32, bevorzugt eine zweidimensionale Karte. Die Bestimmung der zumindest zweidimensionalen Karteninformation 32 erfolgt bevorzugt in Echtzeit. Ferner führt die Auswertevorrichtung 24 im Bedarfsfall eine Inter- und/oder Extrapolation und/oder eine Gewichtung der Ortungsdaten durch und generiert auf diese Weise ausgewertete Ortungsinformationen. Die Auswertevorrichtung 24 übermittelt anschließend die Ortungsinformation, insbesondere die Karteninformation 32, geräteintern an die Anzeigevorrichtung 22 und/oder an die Datenkommunikationsschnittstelle 48 und/oder die Speichervorrichtung 50 zur weiteren Verwendung bzw. Speicherung. Die Ortungs- und Auswerteschritte in dem zweiten Betriebsmodus sind in Verfahrensschritten 120 bzw. 122 zusammengefasst, die sequentiell iterativ durchlaufen werden können (dargestellt durch einen gestrichelten Pfeil).

Die Auswertevorrichtung 24 kann im Rahmen der Auswertung Ortungsdaten, Positionsdaten und gegebenenfalls weitere Daten in der Speichervorrichtung 50 ablegen. Insbesondere kann die Auswertevorrichtung 24 auch vorher erfasste Ortungsdaten und Daten, die Positionen in einer Umgebung der aktuellen Position des Ortungssensors zugeordnet wurden, aus dem Speichervorrichtung 50 abrufen. Die abgerufenen Ortungsdaten und/oder Ortungsinformationen können zu einer verbesserten Auswertung herangezogen werden. Diverse Auswerteroutinen sind denkbar, die insbesondere auf einem Vergleich von Ortungsdaten basieren, wie insbesondere Interpolation, Extrapolation und/oder Gewichtung von Ortungsdaten. Die Auswertevorrichtung 24 stellt eine inter- und/oder extrapolierte zweidimensionale Karteninformation 32 bereit, d.h. zumindest für einen Teil der Bereiche der zweidimensionalen Karteninformation 32, für die bislang keine Ortungsdaten verfügbar sind, werden mittels Inter- oder Extrapolationsroutinen Ortungsinformationen bereitgestellt. Dazu werden vorzugsweise Ortungsdaten von Bereichen der Karteninformation in einer Umgebung des Bereichs ohne Ortungsdaten zur Berechnung inter- oder extrapolierter Ortungsinformationen des Bereichs genutzt. Somit interpoliert die Auswertevorrichtung 24 räumlich Ortungsdaten aus einer Umgebung eines Bereichs zur Ermittlung eines Interpolationswertes und gewichtet dazu die Ortungsdaten aus einer Umgebung des Bereichs (Verfahrensschritt 122). Insbesondere sind unter den Bereichen der Karteninformation auch einzelne Felder der in einer Matrix-Struktur verarbeiteten Karteninformation zu verstehen.

Bei einem Ortungsvorgang, bei dem der Benutzer die Untersuchungsoberfläche 14 oder einen Bereich der Untersuchungsoberfläche 14 mehrfach mit der dem Ortungsgerät 10' und insbesondere mit dem Ortungssensor 28 überfährt, vergrößert sich eine Datendichte und die Auswertevorrichtung 24 verfeinert die Zuordnung von Ortungsdaten zu den Bereichen der Karteninformation 32 und erhöht und/oder verfeinert eine räumliche Auflösung der Karteninformation 32. Dazu ist vorgesehen, dass die Auswertevorrichtung 24 für aktuelle Ortungsdaten und Positionsdaten prüft, ob ein entsprechender Datensatz mit einem gleichen Positionskoordinatenpaar aus einer vorangegangenen Messung bereits vorhanden ist, insbesondere in der Speichervorrichtung 50 vorhanden ist. Wenn das der Fall ist, bezieht die Auswertevorrichtung 24 die Ortungsdaten in eine Berechnung der Ausgabewerte ein und verwendet dabei eine Gewichtung der aktuellen Ortungsdaten gegenüber den bereits vorhandenen Daten (Verfahrensschritt 122).

Insbesondere ergänzt und/oder aktualisiert und/oder verfeinert und/oder überschreibt die Auswertevorrichtung 24 somit bereits bestimmte und/oder dargestellte Ortungsinformationen bei einem Umpositionieren der Ortungsvorrichtung 12, insbesondere bei einem erneuten Überfahren eines Bereichs der Untersuchungsoberfläche 14. Vorteilhaft werden auch bereits im ersten Betriebsmodus bestimmte Ortungsinformationen bei einem Umpositionieren der Ortungsvorrichtung 12 auf diese Weise in Folge des Verfahrens des Ortungsgeräts 10' und/oder des Überfahrens neuer Bereiche 80 und/oder des erneuten Überfahrens bereits untersuchter Bereiche 84 der Untersuchungsoberfläche 14 ergänzt und/oder aktualisiert und/oder verfeinert und/oder überschrieben. Die Auswertevorrichtung 24 erlaubt, Ortungsdaten und/oder Ortungsinformationen, die in dem ersten und in dem zweiten Betriebsmodus bestimmt werden, zu kombinieren. Folglich kann ebenfalls eine kombinierte Ausgabe an einen Benutzer des Ortungsgeräts 10' erfolgen.

Die Darstellung, d.h. insbesondere die Auswertung und Anzeige der zumindest zweidimensionale Karteninformation 32 erfolgt in Echtzeit. Die Auswertevorrichtung 24 verarbeitet im Betrieb jeweils die Daten des Ortungssensors 28 und des Positionssensors 40 seriell in der Reihenfolge ihrer Erfassung durch den Ortungssensor 28 und den Positionssensor 40. Eine Verarbeitungsrate lässt bei dem Benutzer den Eindruck entstehen, dass Ortungsdaten für einen mit dem Ortungssensor 28 überfahrenen Bereich 84 unmittelbar zugeordnet und als Karteninformation bereitgestellt werden. Eine Datenrate von Ortungsdaten und Positionsdaten, die von der Auswertevorrichtung 24 verarbeitet wird, ist an eine Verarbeitungsgeschwindigkeit der Auswertevorrichtung 24 angepasst, d.h. Daten, die von der Auswertevorrichtung 24 nicht unmittelbar verarbeitet werden können, bleiben unberücksichtigt (Verfahrensschritt 122).

Die Auswertevorrichtung 24 ist dazu vorgesehen, zumindest einen Teil der Ortungsdaten und/oder der Ortungsinformation bei einer Erzeugung und/oder bei der Modifizierung der Karteninformation 32 auszuschließen und insbesondere nicht anzuzeigen. Dazu ist die Auswertevorrichtung 24 vorgesehen, von dem Ortungssensor 28 übermittelte Ortungsdaten mit einem zu erwartenden Wertebereich zu vergleichen, insbesondere beispielsweise mit gespeicherten Ortungsdaten und/oder mit Ortungsdaten, die für benachbarte Bereiche bezogen auf die Untersuchungsoberfläche 14 bereits ermittelt wurden. Unter Verwendung einer Bewertungsvorschrift kann somit, beispielsweise in Abhängigkeit von einer Abweichung der Ortungsdaten untereinander oder in Abhängigkeit eines Vergleichs der Ortungsdaten mit dem zu erwartenden Wertebereich, ein Wert für eine Datenqualität bereitgestellt werden. Die Bewertungsvorschrift berücksichtigt ferner Daten des Positionssensors 40 und prüft, ob die Ortungsdaten zuverlässig Positionsdaten zugeordnet werden können. Die Auswertevorrichtung 24 schließt Ortungsdaten in Abhängigkeit von der ermittelten Datenqualität und Ortungsdaten, die nicht zuverlässig Positionsdaten zuordenbar sind, bei der Erzeugung und/oder bei der Modifizierung der Karteninformation 32 aus (Verfahrensschritt 122).

Die Auswertevorrichtung 24 übermittelt anschließend die Ortungsinformation, insbesondere die Karteninformation 32, an die Anzeigevorrichtung 22. Die Anzeigevorrichtung 22 prüft den angezeigten Ausschnitt und die Skalierung des Ausschnitts und passt den Ausschnitt und/oder die Skalierung des Ausschnitts an. Die Anzeigevorrichtung 22 ist vorgesehen, unter Verwendung des zweiten Betriebsmodus bestimmte Ortungsinformationen, insbesondere dreidimensionale Ortungsinformationen, als zumindest zweidimensionale Karteninformation 32 darzustellen (Verfahrensschritt 124). Der Benutzer interpretiert die Karteninformation 32, identifiziert anhand der modifizierten Karteninformation 32 eine Anordnung der Ortungsobjekte 30 und/oder er identifiziert Bereiche 80/84 der Untersuchungsoberfläche 14, für welche die Karteninformation unzureichend ist und setzt den Ortungsvorgang für diese Bereiche 80/84 fort. Die Auswertevorrichtung 24 vervollständigt und verbessert im Laufe des Ortungsvorgangs die Karteninformation 32. Die Auswertevorrichtung 24 passt eine räumliche Auflösung der Ortungsdaten in Bezug auf eine Zuordnung zu Positionsdaten für die Karteninformation 32 an. Die Anzeigevorrichtung passt eine räumliche Auflösung in Bezug auf den angezeigten Ausschnitt an.

Es sei angemerkt, dass die Erfindung nicht auf die Verwendung einer Antenne, insbesondere einer Radarantenne oder einer LCR-Antenne, beschränkt ist. Prinzipiell kann das Ortungsgerät zur Ortung der unter einer Untersuchungsoberfläche verborgenen Ortungsobjekte auch mit anderen, insbesondere auf anderen Messverfahren basierenden, Ortungssensoren, beispielsweise mit zumindest einem Induktivsensor, einem AC-Sensor, einem Kapazitivsensor, einem 50-Hertz-Sensor, einem Mikrowellensensor, einem Terahertzsensor, einem Ultrahochfrequenzsensor, einem Röntgensensor, einem Infrarotsensor oder einem NMR-Sensor, realisiert sein.

## Patentansprüche

1. Ortungssystem (10), insbesondere handgehaltenes Ortungsgerät (10'), mit zumindest einer handgehaltenen Ortungsvorrichtung (12), die dazu vorgesehen ist, Ortungsdaten zu unter einer Untersuchungsoberfläche (14) verborgenen Ortungsobjekten (30) zu erfassen, mit einem Positionssensor (40) zur Erfassung von Positionsdaten der Ortungsvorrichtung (12) bezogen auf die Untersuchungsoberfläche (14), mit einer Auswertevorrichtung (24), die dazu vorgesehen ist, zumindest in einem ersten Betriebsmodus des Ortungssystems (10) eine richtungs-und/oder ortsaufgelöste Ortungsinformation aus den Ortungsdaten ohne Umpositionieren der Ortungsvorrichtung (12) bezogen auf die Untersuchungsoberfläche (14) zu bestimmen und in einem zweiten Betriebsmodus eine zumindest dreidimensionale Ortungsinformation aus den Ortungsdaten und den Positionsdaten durch Zuordnung von Ortungsdaten zu Positionsdaten zu bestimmen, **dadurch gekennzeichnet, dass** eine Steuervorrichtung (26) dazu vorgesehen ist, einen Betriebsmodus automatisch zu wählen und automatisch zwischen Betriebsmodi des Ortungssystems (10) zu wechseln, wobei die Steuervorrichtung (26) dazu vorgesehen ist, bei Erkennen einer Positionsänderung der Ortungsvorrichtung (12) bezogen auf die Untersuchungsoberfläche (14) in den zweiten Betriebsmodus zu wechseln.

2. Ortungssystem (10) nach Anspruch 1, **dadurch gekennzeichnet, dass** die Ortungsvorrichtung (12) dazu vorgesehen ist, Ortungsdaten zu unter einer Untersuchungsoberfläche (14) verborgenen Ortungsobjekten (30) richtungs- und/oder ortsaufgelöst zu erfassen.

3. Ortungssystem (10) nach einem der Ansprüche 1-2, **dadurch gekennzeichnet, dass** die Ortungsvorrichtung (12) zumindest einen in einem Erfassungsbereich (52) richtungs- und/oder ortsauflösenden Ortungssensor (28) aufweist.

4. Ortungssystem (10) nach Anspruch 3, **dadurch gekennzeichnet, dass** der zumindest eine richtungs- und/oder ortsauflösende Ortungssensor (28) der Ortungsvorrichtung (12) als elektrisch und/oder mechanisch schwenkbarer Ortungssensor (28) und/oder als elektrisch ausrichtbarer Ortungssensor (28) und/oder als ein Array aus Ortungssensoren (28) und/oder als ein bildgebender Ortungssensor (28) ausgebildet ist.

5. Ortungssystem (10) nach einem der Ansprüche 3-4, **dadurch gekennzeichnet, dass** der richtungs- und/oder ortsauflösende Ortungssensor (28) der Ortungsvorrichtung (12) einen vorgebbaren, insbesondere wählbaren oder einstellbaren Erfassungsbereich (52) aufweist.

6. Ortungssystem (10) nach einem der Ansprüche 3-5, **dadurch gekennzeichnet, dass** die Auswertevorrichtung (24) dazu vorgesehen ist, in dem ersten Betriebsmodus des Ortungssystems (10) eine richtungs- und/oder ortsaufgelöste Ortungsinformation basierend auf von dem richtungs- und/oder ortsauflösenden Ortungssensor (28) erfassten Ortungsdaten zu bestimmen.

7. Ortungssystem (10) nach einem der Ansprüche 1-6, **dadurch gekennzeichnet, dass** die Auswertevorrichtung (24) dazu vorgesehen ist, in dem zweiten Betriebsmodus des Ortungssystems (10) aus den zumindest dreidimensionalen Ortungsinformationen eine zumindest zweidimensionale Karteninformation (32) zu bestimmen, insbesondere in Echtzeit zu bestimmen.

8. Ortungssystem (10) nach einem der Ansprüche 1-7, **dadurch gekennzeichnet, dass** die Auswertevorrichtung (24) dazu vorgesehen ist, in dem ersten und in dem zweiten Betriebsmodus bestimmte Ortungsinformationen zu kombinieren.

9. Ortungssystem (10) nach Anspruch 8, **dadurch gekennzeichnet, dass** die Auswertevorrichtung (24) dazu vorgesehen ist, bereits bestimmte Ortungsinformationen bei einem Umpositionieren der Ortungsvorrichtung (12), insbesondere bei einem erneuten Überfahren eines Bereichs (84) der Untersuchungsoberfläche (14), zu ergänzen und/oder zu aktualisieren und/oder zu verfeinern und/oder zu überschreiben.

10. Ortungssystem (10) nach Anspruch 9, **dadurch gekennzeichnet, dass** die Auswertevorrichtung (24) dazu vorgesehen ist, bereits im ersten Betriebsmodus bestimmte Ortungsinformationen bei einem Umpositionieren der Ortungsvorrichtung (12), insbesondere bei einem erneuten Überfahren eines Bereichs (84) der Untersuchungsoberfläche (14) zu ergänzen und/oder zu aktualisieren und/oder zu verfeinern und/oder zu überschreiben.

11. Ortungssystem (10) nach einem der Ansprüche 1-10, **dadurch gekennzeichnet, dass** die Auswertevorrichtung (24) dazu vorgesehen ist, in dem ersten und/oder zweiten Betriebsmodus des Ortungssystems (10) die Ortungsdaten und/oder die Ortungsinformationen zu interpolieren und/oder zu extrapolieren.

12. Ortungssystem (10) nach einem der Ansprüche 1-11, **dadurch gekennzeichnet, dass** die Betriebsmodi des Ortungssystems (10) manuell wählbar sind.

13. Ortungssystem (10) nach Anspruch 1-12, **dadurch gekennzeichnet, dass** eine Empfindlichkeit des Erkennens einer Positionsänderung vorgebbar ist, insbesondere wählbar/einstellbar ist.

14. Ortungssystem (10) nach einem der Ansprüche 1-13, **dadurch gekennzeichnet, dass** die Ortungsvorrichtung (12) eine Aufsatzerkennungsvorrichtung (44) aufweist, die dazu vorgesehen ist, ein Aufsetzen und/oder Abnehmen der Ortungsvorrichtung (12) auf bzw. von einer Untersuchungsoberfläche (14) zu detektieren.

15. Ortungssystem (10) nach Anspruch 14, **dadurch gekennzeichnet, dass** die Steuervorrichtung (26) dazu vorgesehen ist, bei Erkennen eines Aufsetzens der Ortungsvorrichtung (12) auf eine Untersuchungsoberfläche (14) mittels der Aufsatzerkennungsvorrichtung (44) den ersten Betriebsmodus zu aktivieren.

16. Ortungssystem (10) nach einem der Ansprüche 1-15, **gekennzeichnet durch** zumindest eine Anzeigevorrichtung (22), die dazu vorgesehen ist, eine
Ortungsinformation darzustellen, insbesondere eine zumindest zweidimensionale Karteninformation (32), darzustellen.

17. Ortungssystem (10) nach Anspruch 16, **dadurch gekennzeichnet, dass** die Anzeigevorrichtung (22) dazu vorgesehen ist, mittels des ersten
Betriebsmodus bestimmte richtungs- und/oder ortsaufgelöste Ortungsinformationen als zumindest zweidimensionale Karteninformation (32) darzustellen.

18. Ortungssystem (10) nach Anspruch 16, **dadurch gekennzeichnet, dass** die Anzeigevorrichtung (22) dazu vorgesehen ist, mittels des zweiten Betriebsmodus bestimmte Ortungsinformationen, insbesondere dreidimensionale Ortungsinformationen, als zumindest zweidimensionale Karteninformation (32) darzustellen.

19. Ortungssystem (10) nach einem der Ansprüche 16-18, **dadurch gekennzeichnet, dass** die Anzeigevorrichtung (22) dazu vorgesehen ist, den angezeigten Ausschnitt der Karteninformation (32) in Abhängigkeit von Positionsdaten und/oder in Abhängigkeit vom Betriebsmodus zu variieren.

20. Ortungssystem (10) nach einem der Ansprüche 16-19, **dadurch gekennzeichnet, dass** die Anzeigevorrichtung (22) und/oder die Auswertevorrichtung (24) dazu vorgesehen sind/ist, zumindest einen Teil der Ortungsinformation bei einer Erzeugung und/oder bei der Modifizierung der Karteninformation (32) nicht anzuzeigen bzw. auszuschließen.

21. Ortungssystem (10) nach einem der Ansprüche 1-20, **dadurch gekennzeichnet, dass** das Ortungssystem (10) als ein handgehaltenes Ortungsgerät (10') mit einem zumindest eine Ortungsvorrichtung (12), eine Auswertevorrichtung (24), eine Steuervorrichtung (26) und eine Anzeigevorrichtung (22) beherbergenden Gehäuse (16) ausgeführt ist.

22. Verfahren zur Ortung von unter einer Untersuchungsoberfläche (14) verborgenen Ortungsobjekten (30) mit einem Ortungssystem (10) nach einem der vorhergehenden Ansprüche, wobei bei dem Verfahren zumindest zwei Betriebsmodi des Ortungssystems (10) wählbar sind, **dadurch gekennzeichnet, dass** in zumindest einem Verfahrensschritt eine Positionsänderung der Ortungsvorrichtung (12) bezogen auf die Untersuchungsoberfläche (14) unter Verwendung des Positionssensors erkannt wird und dass - durch die Steuervorrichtung (26) initiiert - das Ortungssystem (10) bei bzw. in Folge eines Erkennens einer Positionsänderung der Ortungsvorrichtung (12) in den zweiten Betriebsmodus wechselt.

## Claims

1. Locating system (10), in particular a hand-held locating appliance (10'), at least comprising a hand-held locating apparatus (12) provided to capture locating data in relation to objects (30) to be located which are concealed under an examination surface (14), comprising a position sensor (40) for capturing position data of the locating apparatus (12) in relation to the examination surface (14), comprising an evaluation apparatus (24) which is configured at least to determine a direction-resolved and/or spatially resolved locating information item from the locating data without repositioning the locating apparatus (12) in relation to the examination surface (14) in a first mode of operation of the locating system (10) and to determine an at least three-dimensional locating information item from the locating data and the position data by assigning locating data to position data in a second mode of operation, **characterized in that** a control apparatus (26) is provided to select a mode of operation automatically and automatically switch between modes of operation of the locating system (10), wherein the control apparatus (26) is provided to switch into the second mode of operation when a change in position of the locating apparatus (12) in relation to the examination surface (14) is identified.

2. Locating system (10) according to Claim 1, **characterized in that** the locating apparatus (12) is provided to capture locating data in a direction-resolved and/or spatially resolved manner in relation to objects (30) to be located which are concealed under an examination surface (14).

3. Locating system (10) according to one of Claims 1-2, **characterized in that** the locating apparatus (12) has at least one locating sensor (28) which is direction-resolving and/or spatially resolving in a detection zone (52).

4. Locating system (10) according to Claim 3, **characterized in that** the at least one direction-resolving and/or spatially resolving locating sensor (28) of the locating apparatus (12) is embodied as an electrically and/or mechanically swivelable locating sensor (28) and/or as an electrically alignable locating sensor (28) and/or as an array of locating sensors (28) and/or as an imaging locating sensor (28).

5. Locating system (10) according to one of Claims 3-4, **characterized in that** the direction-resolving and/or spatially resolving locating sensor (28) of the locating apparatus (12) has a predeterminable, in particular selectable or adjustable, detection zone (52).

6. Locating system (10) according to one of Claims 3-5, **characterized in that** the evaluation apparatus (24) is provided, in the first mode of operation of the locating system (10), to determine a direction-resolved and/or spatially resolved locating information item on the basis of locating data captured by the direction-resolving and/or spatially resolving locating sensor (28).

7. Locating system (10) according to one of Claims 1-6, **characterized in that** the evaluation apparatus (24) is provided, in the second mode of operation of the locating system (10), to determine, in particular to determine in real time, an at least two-dimensional map information item (32) from the at least three-dimensional locating information items.

8. Locating system (10) according to one of Claims 1-7, **characterized in that** the evaluation apparatus (24) is provided, in the first mode of operation and in the second mode of operation, to combine determined locating information items.

9. Locating system (10) according to Claim 8, **characterized in that** the evaluation apparatus (24) is provided to complement and/or update and/or refine and/or overwrite already determined locating information items when repositioning the locating apparatus (12), in particular when passing over a region (84) of the examination surface (14) again.

10. Locating system (10) according to Claim 9, **characterized in that** the evaluation apparatus (24) is provided to complement and/or update and/or refine and/or overwrite locating information items already determined in the first mode of operation when repositioning the locating apparatus (12), in particular when passing over a region (84) of the examination surface (14) again.

11. Locating system (10) according to one of Claims 1-10, **characterized in that** the evaluation apparatus (24) is provided, in the first mode of operation and/or in the second mode of operation of the locating system (10), to interpolate and/or extrapolate the locating data and/or the locating information items.

12. Locating system (10) according to one of Claims 1-11, **characterized in that** the modes of operation of the locating system (10) are manually selectable.

13. Locating system (10) according to Claims 1-12, **characterized in that** a sensitivity of the identification of a change in position is predeterminable, in particular selectable/adjustable.

14. Locating system (10) according to one of Claims 1-13, **characterized in that** the locating apparatus (12) has a placement identification apparatus (44) provided to detect a placement and/or removal of the locating apparatus (12) onto and/or from an examination surface (14).

15. Locating system (10) according to Claim 14, **characterized in that** the control apparatus (26) is provided to activate the first mode of operation when a placement of the locating apparatus (12) onto an examination surface (14) is identified by means of the placement identification apparatus (44).

16. Locating system (10) according to one of Claims 1-15, **characterized by** at least one display apparatus (22), which is provided to depict a locating information item, in particular depict an at least two-dimensional map information item (32).

17. Locating system (10) according to Claim 16, **characterized in that** the display apparatus (22) is provided to depict direction-resolved and/or spatially resolved locating information items determined by means of the first mode of operation as an at least two-dimensional map information item (32).

18. Locating system (10) according to Claim 16, **characterized in that** the display apparatus (22) is provided to depict locating information items, in particular three-dimensional locating information items, determined by means of the second mode of operation as an at least two-dimensional map information item (32).

19. Locating system (10) according to one of Claims 16-18, **characterized in that** the display apparatus (22) is provided to vary the displayed portion of the map information item (32) depending on position data and/or depending on the mode of operation.

20. Locating system (10) according to one of Claims 16-19, **characterized in that** the display apparatus (22) and/or the evaluation apparatus (24) is/are provided not to display, or exclude, at least some of the locating information item when generating and/or modifying the map information item (32).

21. Locating system (10) according to one of Claims 1-20, **characterized in that** the locating system (10) is configured as a hand-held locating appliance (10') comprising a housing (16) housing at least a locating apparatus (12), an evaluation apparatus (24), a control apparatus (26) and a display apparatus (22).

22. Method for locating objects (30) to be located which are concealed under an examination surface (14) with a locating system (10) according to one of the preceding claims, wherein in said method at least two modes of operation of the locating system (10) are selectable, **characterized in that** in at least one method step a change in position of the locating apparatus (12) in relation to the examination surface (14) is identified using the position sensor and **in that** - initiated by the control apparatus (26) - the locating system (10) switches into the second mode of operation when a change in position of the locating apparatus (12) is identified or as a consequence of same being identified.

## Revendications

1. Système de localisation (10), en particulier appareil de localisation portatif (10'), comprenant au moins un dispositif de localisation portatif (12) qui est conçu pour acquérir des données de localisation relatives à des objets à localiser (30) cachés sous une surface à examiner (14), un capteur de position (40) destiné à acquérir des données de position du dispositif de localisation (12) par rapport à la surface à examiner (14), un dispositif d'évaluation (24) qui est conçu pour déterminer, au moins dans un premier mode de fonctionnement du système de localisation (10), une information de localisation à résolution directionnelle et/ou spatiale à partir des données de localisation, sans modification de position du dispositif de localisation (12) par rapport à la surface à examiner (14), et pour déterminer, dans un deuxième mode de fonctionnement, une information de localisation au moins tridimensionnelle à partir des données de localisation et des données de position par mise en correspondance de données de localisation avec des données de position,
**caractérisé en ce qu'**il est prévu un dispositif de commande (26) destiné à sélectionner automatiquement un mode de fonctionnement et à basculer automatiquement entre des modes de fonctionnement du système de localisation (10), le dispositif de commande (26) étant conçu pour basculer dans le deuxième mode de fonctionnement lors de la détection d'une modification de position du dispositif de localisation (12) par rapport à la surface à examiner (14).

2. Système de localisation (10) selon la revendication 1, **caractérisé en ce que** le dispositif de localisation (12) est conçu pour l'acquisition à résolution directionnelle et/ou spatiale de données de localisation d'objets à localiser (30) cachés sous une surface à examiner (14).

3. Système de localisation (10) selon l'une des revendications 1-2, **caractérisé en ce que** le dispositif de localisation (12) comporte au moins un capteur de localisation (28) à résolution directionnelle et/ou spatiale dans une zone d'acquisition (52).

4. Système de localisation (10) selon la revendication 3, **caractérisé en ce que** ledit au moins un capteur de localisation (28) à résolution directionnelle et/ou spatiale du dispositif de localisation (12) est réalisé sous la forme d'un capteur de localisation (28) pouvant pivoter électriquement et/ou mécaniquement et/ou sous la forme d'un capteur de localisation (28) pouvant être orienté électriquement et/ou sous la forme d'un réseau de capteurs de localisation (28) et/ou sous la forme d'un capteur de localisation (28) générateur d'image.

5. Système de localisation (10) selon l'une des revendications 3-4, **caractérisé en ce que** le capteur de localisation (28) du dispositif de localisation (12) à résolution directionnelle et/ou spatiale présente une zone d'acquisition (52) qui peut être prédéterminée, en particulier sélectionnable ou réglable.

6. Système de localisation (10) selon l'une des revendications 3 à 5, **caractérisé en ce que** le dispositif d'évaluation (24) est conçu pour déterminer, dans le premier mode de fonctionnement du système de localisation (10), une information de localisation à résolution directionnelle et/ou spatiale sur la base de données de localisation acquises par le capteur de localisation (28) à résolution directionnelle et/ou spatiale.

7. Système de localisation (10) selon l'une des revendications 1-6, **caractérisé en ce que** le dispositif d'évaluation (24) est conçu pour déterminer, en particulier pour déterminer en temps réel, dans le deuxième mode de fonctionnement du système de localisation (10), une information cartographique (32) au moins bidimensionnelle à partir des informations au moins tridimensionnelles.

8. Système de localisation (10) selon l'une des revendications 1-7, **caractérisé en ce que** le dispositif d'évaluation (24) est conçu pour combiner des informations de localisation déterminées dans le premier et dans le deuxième mode de fonctionnement.

9. Système de localisation (10) selon la revendication 8, **caractérisé en ce que** le dispositif d'évaluation (24) est conçu pour compléter et/ou pour actualiser et/ou pour affiner et/ou pour remplacer des informations de localisation déjà déterminées, lors d'une modification de position du dispositif de localisation (12), en particulier lors d'un nouveau passage sur une zone (84) de la surface à examiner (14).

10. Système de localisation (10) selon la revendication 9, **caractérisé en ce que** le dispositif d'évaluation (24) est conçu pour compléter et/ou actualiser et/ou affiner et/ou remplacer des informations de localisation déjà déterminées dans le premier mode de fonctionnement lors d'une modification de position du système de localisation (12), en particulier lors d'un nouveau passage sur une zone (84) de la surface à examiner (14).

11. Système de localisation (10) selon l'une des revendications 1-10, **caractérisé en ce que** le dispositif d'évaluation (24) est conçu, dans le premier et/ou le deuxième mode de fonctionnement du système de localisation (10), pour interpoler et/ou extrapoler les données de localisation et/ou les informations de localisation.

12. Système de localisation (10) selon l'une des revendications 1-11, **caractérisé en ce que** les modes de fonctionnement du système de localisation (10) sont sélectionnables manuellement.

13. Système de localisation (10) selon les revendications 1-12, **caractérisé en ce qu'**une sensibilité de détection d'une modification de position peut être prédéterminée, et est en particulier sélectionnable/réglable.

14. Système de positionnement (10) selon l'une des revendications 1-13, **caractérisé en ce que** le dispositif de localisation (12) comporte un dispositif de détection d'application (44) qui est destiné à détecter une application et/ou un retrait du dispositif de positionnement (12) sur ou depuis une surface à examiner (14).

15. Système de localisation (10) selon la revendication 14, **caractérisé en ce que** le dispositif de commande (26) est conçu pour activer le premier mode de fonctionnement au moyen du dispositif de détection d'application (44) lors de la détection d'une application du dispositif de localisation (12) sur une surface à examiner (14).

16. Système de localisation (10) selon l'une des revendications 1-15, **caractérisé par** au moins un dispositif d'affichage (22) qui est conçu pour afficher une information de localisation, en particulier une information cartographique (32) au moins bidimensionnelle.

17. Système de localisation (10) selon la revendication 16, **caractérisé en ce que** le dispositif d'affichage (22) est conçu pour représenter, au moyen du premier mode de fonctionnement, des informations de localisation déterminées à résolution directionnelle et/ou spatiale sous la forme d'une information cartographique (32) au moins bidimensionnelle.

18. Système de localisation (10) selon la revendication 16, **caractérisé en ce que** le dispositif d'affichage (22) est conçu pour représenter, au moyen du deuxième mode de fonctionnement, des informations de localisation déterminées, en particulier des informations de localisation tridimensionnelles, sous la forme d'une information cartographique (32) au moins bidimensionnelle.

19. Système de localisation (10) selon l'une des revendications 16-18, **caractérisé en ce que** le dispositif d'affichage (22) est conçu pour faire varier la partie affichée de l'information cartographique (32) en fonction de données de position et/ou en fonction du mode de fonctionnement.

20. Système de localisation (10) selon l'une des revendications 16-19, **caractérisé en ce que** le dispositif d'affichage (22) et/ou le dispositif d'évaluation (24) est/sont conçu(s) pour ne pas afficher ou pour exclure au moins une partie de l'information de localisation lorsque l'information cartographique (32) est générée et/ou modifiée.

21. Système de localisation (10) selon l'une des revendications 1-20, **caractérisé en ce que** le système de localisation (10) est réalisé sous la forme d'un dispositif de localisation portatif (10') comprenant un boîtier (16) dans lequel sont logés au moins un dispositif de localisation (12), un dispositif d'évaluation (24), un dispositif de commande (26) et un dispositif d'affichage (22).

22. Procédé de localisation d'objets à localiser (30) cachés sous une surface à examiner (14), à l'aide d'un système de localisation (10) selon l'une des revendications précédentes, dans lequel, selon le procédé, au moins deux modes de fonctionnement du système de localisation (10) sont sélectionnables,
**caractérisé en ce que**, lors d'au moins une étape du procédé, une modification de position du dispositif de localisation (12) par rapport à la surface à examiner (14) est détectée par utilisation du capteur de position, et **en ce que** le système de localisation (10) bascule - de manière déclenchée par le dispositif de commande (26) - dans le deuxième mode de fonctionnement au moment ou à la suite d'une détection d'une modification de position du dispositif de localisation (12).
